# EUROPEAN PATENT APPLICATION

(11) **EP 1 209 603 A2**
(43) Date of publication of application: **29.05.2002**
(21) Application number: 01309216.8
(22) Date of filing: 31.10.2001
(51) Int. Cl.: G06F 17/60

(54) **Information processing**

(30) Priority: 01.11.2000 JP 2000334883
(71) Applicant: SONY CORPORATION, Tokyo 141 (JP)
(72) Inventor: Mano, Yoshizumi, c/o Sony Corporation, Tokyo 141 (JP); Ihara, Yushi, c/o Sony Corporation, Tokyo 141 (JP); Umeya, Masaru, c/o Sony Corporation, Tokyo 141 (JP)
(74) Representative: Pratt, Richard Wilson

(57) **Abstract**

A seller of the content, such as a program production company or a movie production company, possesses a personal computer. A buyer of the content, such as a terrestrial, BS, CS, or cable television broadcast company, also possesses a personal computer. The personal computers of the seller and the buyer are connected to a content distribution intermediary system via a network. An unregistered user is able to make registration in the services offered by the content distribution intermediary system by using a personal computer of the user. The seller registers data of the content to be sold in a database of the content distribution intermediary system. Then, after conducting negotiations for a purchase-and-sale contract by using the services provided by the content distribution intermediary system, the seller and the buyer are able to settle the contract.

## Description

### BACKGROUND OF THE INVENTION

### 1. Field of the Invention

The present invention generally relates to information processing apparatuses, methods, and systems, content sales systems and methods, transaction assisting systems and methods, service providing systems and methods, and recording media. An example of the invention relates to an information processing apparatus, method, and system, a content sales system and method, a transaction assisting system and method, and a service providing system and method, all of which are suitably used in offering intermediary services of purchase-and-sale contracts to be made between content sellers, such as content production companies, and content buyers, such as broadcast stations, concerning at least part of the broadcasting rights, the licensing rights, and the copyright of the content, or in some cases, all the rights concerning the content including the content data. The invention also pertains to recording media implementing at least one of the above-described methods.

### 2. Description of the Related Art

The imaging industry consists of, for example, television broadcasting, the film industry, and cell video sales. A large amount of content, such as programs in television broadcasting, movies in the film industry, and video works to be sold as cell videos, are produced by production companies. The content is then purchased by broadcast companies, film distributors, or video sales companies.

In Japan, some of the content, such as programs to be broadcast by a broadcast company, may sometimes be produced by the same company. In most cases, however, the program content produced by production companies, and the broadcasting rights of distributed movies are purchased by broadcast companies.

Particularly in the United States, because of the past application of the Financial Interest and Syndication Rules and the Prime Time Access Rules, the three major networks, i.e., Columbia Broadcasting System, Inc. (CBS), National Broadcasting Company (NBC), and American Broadcasting Company (ABC), were not permitted to possess the copyrights of the program content. Accordingly, the syndication market which offers the intermediary services of purchase-and-sale contracts to be made between production companies of the program content and broadcast companies has been established.

The Financial Interest and Syndication Rules were introduced in 1972 in order to decrease the adverse influences of the monopoly of the three major networks. Because of these rules, the three major networks were prohibited to possess the copyrights of the programs produced by production companies and also to sell the program broadcasting rights to local television companies. That is, the three major networks were totally prohibited to purchase the whole program copyrights and to conduct the business of selling and buying the copyrights. The three major networks were allowed to hold only the "broadcasting rights" to broadcast programs by network broadcasts. That is, the copyrights of the program content itself were possessed by the production companies which created the content, and not only the three major networks, but also all the local broadcast stations, cable television (CATV) broadcast stations, satellite broadcast stations, and video sales companies in the United states, and broadcast stations in countries other than the United States are allowed to purchase the broadcasting rights of the program content.

The Prime Time Access Rules were introduced in 1971 in order to promote the program production of local broadcast stations. These rules targeted the top 50 network stations in the broadcast market in the United States, and the stations under the direct management of the three major networks and the affiliated stations were supposed to broadcast programs other than the programs of the three major networks for at least one hour out of the four hours during the prime time.

Because of these two rules, in order to broadcast, for example, a drama program, the three major networks had to purchase the broadcasting rights of the program software produced by a production company (mostly by a Hollywood company). In this background, the syndication market offering the intermediary services of purchases and sales of the broadcasting rights has been developed. The Financial Interest and Syndication Rules were abolished in November 1995, and the Prime Time Access Rules were abolished in July 1996 because the objectives of these rules were sufficiently fulfilled.

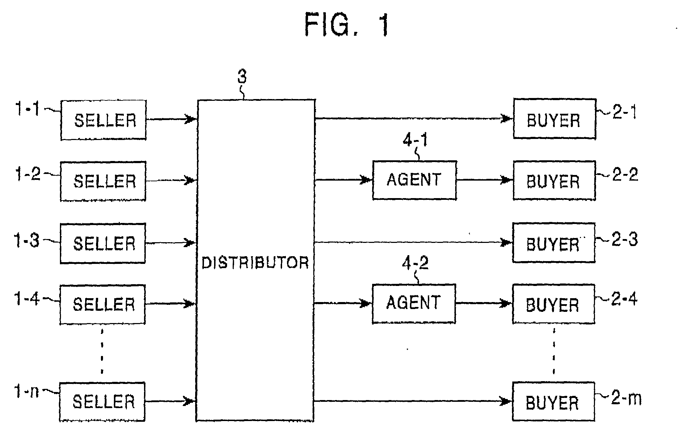

As shown in Fig. 1, the copyright of the program content is not directly sold from content sellers 1-1 through 1-n (hereinafter simply referred to as the "seller 1" unless it is necessary to distinguish them), such as program production companies, to content buyers 2-1 through 2-m (hereinafter simply referred to as the "buyer 2" unless it is necessary to distinguish them), such as broadcast stations, but it is sold via a distributor (so-called intermediary agent) 3.

In some cases, the distributor 3 sells at least part of the broadcasting rights, the licensing rights, and the copyright of the program content, or all the rights concerning the content, including the content data, to the buyer 2 via an agent 4-1 or 4-2 (hereinafter simply referred to as the "agent 4" unless it is necessary to distinguish them). The agent is an intermediary agent which is allowed to sell the program content of a specific category to a specific broadcast station.

Along with the wide spread of media other than terrestrial broadcasting, such as broadcast satellites (BS), communications satellites (CS), and CATV, television multichannel broadcasting has been started. However, a broadcast company requires about 200,000 households of subscribers in order to broadcast programs of 300 channels. Since the business conditions of the broadcast stations are not easy, it is difficult to ensure a sufficient program production cost or a program purchase cost. Additionally, software for about 50,000 hours per week is required for broadcasting programs of 300 channels for 24 hours. This is longer than the presentation time of the movies produced by Broadway in one century.

In order to deal with the situation in which software cannot catch up with a rapid expansion of communication media, the secondary use of software is necessary. According to the known content purchase-and-sale method shown in Fig. 1, however, the buyer 2 has to request the distributor 3 or the agent 4 to search for a desired program content (which satisfies a demand of viewers or sponsors), or the seller 1 has to sell the program content produced by the seller 1 to the buyer 2 via the distributor 3 or the agent 4. With this method, therefore, the time and the intermediary cost required for making contracts between the seller 1 and the buyer 2 is enormous.

Examples of the present invention seek to provide a system for object of the present invention to provide a system for offering intermediary services of the content distribution, which allows a seller to have more opportunities to sell the content, and also allows a buyer to easily search for a desired content, and which promotes the simple negotiations and implementation of purchase-and-sale contracts in selling and purchasing at least part of the broadcasting rights, the licensing rights, or the copyright of the content, or all the rights concerning the content including the content data, between the seller and the buyer.

According to one aspect of the present invention, there is provided an information processing system including a first input unit for receiving via a network first information concerning program content from a first information processing apparatus possessed by a seller of the program content. A first recording unit records the first information received by the first input unit. An output unit outputs via the network the first information recorded by the first recording unit to a second information processing apparatus possessed by a buyer of the program content. A second input unit receives via the network second information concerning the purchase of rights of predetermined program content from the second information processing apparatus. An assisting unit assists the seller and the buyer of the program content to settle a purchase-and-sale contract concerning the rights of the predetermined program content based on the second information received by the second input unit.

In the above-described information processing system, the assisting unit may assist the formation of data corresponding to a document concerning the purchase-and-sale contract for the rights of the predetermined program content between the seller and the buyer of the program content, and store the data.

The aforementioned information processing system may further include; a third input unit for receiving via the network third information concerning a condition of the program content desired by the buyer from the second information processing apparatus; and a search unit for searching for the first information recorded by the first recording unit which matches the third information. The output unit may output the first information searched by the search unit to the second information processing apparatus.

The aforementioned information processing system may further include: a third input unit for receiving via the network third information concerning the seller of the program content from the first information processing apparatus; a fourth input unit for receiving via the network fourth information concerning the buyer of the program content from the second information processing apparatus; and a second recording unit for recording the third information received by the third input unit and the fourth information received by the fourth input unit.

In the aforementioned information processing system, the rights of the program content to be sold and purchased between the seller and the buyer of the program content may include at least part of broadcasting rights, licensing rights, and copyright, or all the rights concerning the program content.

According to another aspect of the present invention, there is provided an information processing method including; a first input step of receiving via a network first information concerning program content from a first information processing apparatus possessed by a seller of the program content; a recording step of recording the first information received in the first input step; an output step of outputting via the network the first information recorded in the recording step to a second information processing apparatus possessed by a buyer of the program content; a second input step of receiving via the network second information concerning the purchase of rights of predetermined program content from the second information processing apparatus, and an assisting step of assisting the seller and the buyer of the program content to settle a purchase-and-sale contract concerning the rights of the predetermined program content based on the second information received in the second input step.

According to still another aspect of the present invention, there is provided a transaction assisting method for assisting a transaction of content. The transaction assisting method includes: a receiving step of receiving content information concerning the content to be sold by a seller, and right information concerning rights of the content; and an assisting step of assisting the transaction of the content generated between the seller and the buyer by attaching the right indicated by the right information to the content indicated by the content information so as to sell the content and the right to the seller.

In the aforementioned transaction assisting method, the right information concerning the right of the content may include any one of broadcasting rights, licensing rights, and copyright of the content.

According to a further aspect of the present invention, there is provided an information processing method for use in an information processing system which is connected to via a network at least one first information processing apparatus possessed by a seller of program content and to at least one second information processing apparatus possessed by a buyer of the program content. The information processing method includes: an input step of receiving first information concerning the program content from the first information processing apparatus; a registration step of registering the first information received by the first input step; a second input step of receiving second information which specifies predetermined program content selected from the program content registered in the registration step and specifies the seller of the program content from the second information processing apparatus; a first generation step of generating a first web page which is viewable by the second information processing apparatus outputting the second information, and which displays a message input from the first information processing apparatus of the seller designated by the second information, and which receives a message to be sent to the seller; a second generation step of generating a second web page which is viewable by the first information processing apparatus of the seller designated by the second information, and which displays a message input from the second information processing apparatus outputting the second information, and which receives a message to be sent to the buyer; a control step of controlling the posting of the first web page generated in the first generation step and the second web page generated in the second generation step on the network, and an acquiring step of acquiring the messages input into the first web page or the second web page.

According to a yet further aspect of the present invention, there is provided a transaction assisting method for assisting a transaction of content. The transaction assisting method includes: a first acquiring step of acquiring a request from a seller's site concerning the content possessed by a seller; a second acquiring step of acquiring a request from a buyer's site concerning the content to be purchased by a buyer; a transaction generation step of matching the request from the buyer acquired in the second acquiring step with the request from the seller acquired in the first acquiring step, and of generating the transaction of the matched content; and a provision step of providing the seller and the buyer with a web site used for negotiating about a transaction condition of the matched content.

According to a further aspect of the present invention, there is provided a transaction assisting method for assisting a transaction of content. The transaction assisting method includes: a registration step of registering the content possessed by a seller in a server; a selection step of selecting the content to be purchased by a buyer from the content registered in the server in the registration step; and a provision step of providing the seller and the buyer with a web site used for negotiating about a transaction condition of the content selected in the selection step.

According to a further aspect of the present invention, there is provided a service providing method for providing services concerning a transaction of content. The service providing method includes: a registration step of registering the content to be sold by a seller in a server in response to a request from a seller's site; a selection step of selecting the content to be purchased by a buyer from the content registered in the server in response to a request from a buyer's site; and a provision step of providing the seller and the buyer with a web site used for negotiating about a transaction condition of the content selected in the selection step.

According to a further aspect of the present invention, there is provided an information processing method for use in an information processing system which is connected to via a network at least one first information processing apparatus possessed by a seller of program content and to at least one second information processing apparatus possessed by a buyer of the program content. The information processing method includes: a first generation step of generating a plurality of first web pages which are viewable by the second information processing apparatus, and which displays information concerning purchase and sale of the program content, and which receives first information to be sent to a predetermined seller; a second generation step of generating a plurality of second web pages which are viewable by the first information processing apparatus, and which displays information concerning the purchase and sale of the program content, and which receives second information to be sent to a predetermined buyer; a control step of controlling the posting of the plurality of first web pages generated in the first generation step and the plurality of second web pages generated in the second generation step on the network; a first acquiring step of acquiring the first information input into the plurality of first web pages; a second acquiring step of acquiring the second information input into the plurality of second web pages; a third generation step of generating, based on the first information acquired in the first acquiring step, a third web page which is viewable by the first information processing apparatus of the predetermined seller, and which displays the buyer who has input the first information and a list of names of the program content corresponding to the first information; and a fourth generation step of generating, based on the second information acquired in the second acquiring step, a fourth web page which is viewable by the second information processing apparatus of the predetermined buyer, and which displays the seller who has input the second information and a list of names of the program content corresponding to the second information.

According to a further aspect of the present invention, there is provided an information processing method for use in an information processing system which is connected to via a network at least one first information processing apparatus possessed by a seller of program content and to at least one second information processing apparatus possessed by a buyer of the program content. The information processing method includes: an input/output control step of controlling an input and an output of information from and to the first information processing apparatus and the second information processing apparatus via the network; a registration step of registering first information concerning the program content to be sold by the seller based on the information obtained by controlling the input from the first information processing apparatus in the input/output control step; an inquiry provision step of providing an inquiry about the program content obtained by controlling the input from the second information processing apparatus in the input/output control step to the first information processing apparatus of the corresponding seller; a negotiation assisting step of assisting negotiations for a purchase-and-sale contract of the program content based on the information obtained by controlling the input from the first information processing apparatus and the second information processing apparatus in the input/output controls step, and based on the first information registered in the registration step; a quotation formation assisting step of assisting the formation of a quotation of the program content based on the information obtained by controlling the input from the first information processing apparatus in the input/output control step, and based on the first information registered in the registration step; and a purchase-order formation assisting step of assisting the formation of a purchase order of the program content based on the information obtained by controlling the input from the second information processing apparatus in the input/output control step, and based on the quotation formed by the assistance in the quotation formation assisting step,

The aforementioned information processing method may further include: a first recording control step of controlling the recording of the inquiry about the program content provided in the inquiry provision step; a second recording control step of controlling the recording of information about the negotiations for the purchase-and-sale contract conducted by the assistance in the negotiation assisting step; a third recording control step of controlling the recording of the quotation formed by the assistance in the quotation formation assisting step; and a fourth recording control step of controlling the recording of the purchase order formed by the assistance in the purchase-order formation assisting step.

With the above arrangement, the seller and the buyer of the program content are able to speedily and easily settle a purchase-and-sale contract concerning the rights of the program content.

### BRIEF DESCRIPTION OF THE DRAWINGS

The invention will now be described by way of example with reference to the accompanying drawings, throughout which like parts are referred to by like references, and in which:
Fig. 1 illustrates a known program content purchase-and-sale method;
Fig. 2 illustrates the configuration of a system for offering intermediary services for the content distribution according to an embodiment of the present invention;
Fig. 3 is a block diagram illustrating the configuration of a content distribution intermediary system shown in Fig. 2;
Figs. 4, 5, 6 illustrate site maps;
Fig. 7 is a block diagram illustrating the configuration of a personal computer;
Fig. 8 illustrates a top display screen;
Fig. 9 illustrates an about-us display screen;
Fig. 10 illustrates a news display screen;
Fig. 11 illustrates a rule display screen;
Fig. 12 illustrates a site-tour display screen;
Fig. 13 illustrates a help display screen;
Fig. 14 is a flow chart illustrating processing for registering a company;
Fig. 15 illustrates a registration screen;
Fig. 16 illustrates an administrator registration screen;
Fig. 17 illustrates an administrator information confirmation screen;
Fig. 18 is a flow chart illustrating processing for registering a user;
Fig. 19 illustrates a registration screen;
Fig. 20 illustrates a user information confirmation screen;
Fig. 21 illustrates a registration completion confirmation screen;
Fig. 22 illustrates a buyer's room;
Fig. 23 illustrates a display window in the buyer's room;
Fig. 24 illustrates a seller's room;
Fig. 25 illustrates a display window with the seller's room;
Fig. 26 is a flow chart illustrating content registration processing;
Fig. 27 illustrates a title data entry screen;
Fig. 28 illustrates a title data confirmation screen;
Fig. 29 illustrates a catalog list display screen;
Fig. 30 is a flow chart illustrating processing for providing services to a seller and a buyer by the content distribution intermediary system;
Figs. 31 through 35 are a flow chart illustrating content search processing performed by a buyer;
Fig. 36 illustrates a search condition input screen;
Fig. 37 illustrates a matching list display screen;
Fig. 38 illustrates a detail memo display screen;
Fig. 39 illustrates a company information display screen;
Fig. 40 illustrates a video clip display screen;
Fig. 41 illustrates a technical data display screen;
Fig. 42 illustrates an inquiry input screen;
Fig. 43 illustrates an inquiry input screen with an inquiry message;
Fig. 44 illustrates an updated buyer's room;
Fig. 45 illustrates an updated seller's room;
Figs. 46 and 47 are a flow chart illustrating negotiation processing:
Fig. 48 illustrates a seller's negotiation screen;
Fig. 49 illustrates a seller's negotiation screen with a message;
Fig. 50 illustrates a buyer's negotiation screen;
Fig. 51 illustrates a buyer's negotiation screen with a message;
Fig. 52 illustrates a seller's negotiation screen;
Fig. 53 is a flow chart illustrating quotation forming processing;
Fig. 54 illustrates a quotation forming screen;
Fig. 55 illustrates a quotation data confirmation screen;
Fig. 56 illustrates an updated seller's room;
Fig. 57 illustrates an updated buyer's room;
Fig. 58 illustrates a quotation list display screen;
Fig. 59 illustrates a quotation individual-information display screen;
Fig. 60 illustrates a quotation list display screen:
Fig. 61 is a flow chart illustrating order processing;
Fig. 62 illustrates an order place list input screen;
Fig. 63 illustrates an order place list confirmation screen;
Fig. 64 illustrates an updated buyer's room;
Fig. 65 illustrates an updated seller's room;
Fig. 66 illustrates an order list display screen;
Fig. 67 illustrates an order file display screen; and
Figs. 68, 69, and 70 are a flow chart illustrating escrow processing.

### DESCRIPTION OF THE PREFERRED EMBODIMENTS

The present invention is described in detail below with reference to the accompanying drawings through illustration of a preferred embodiment.

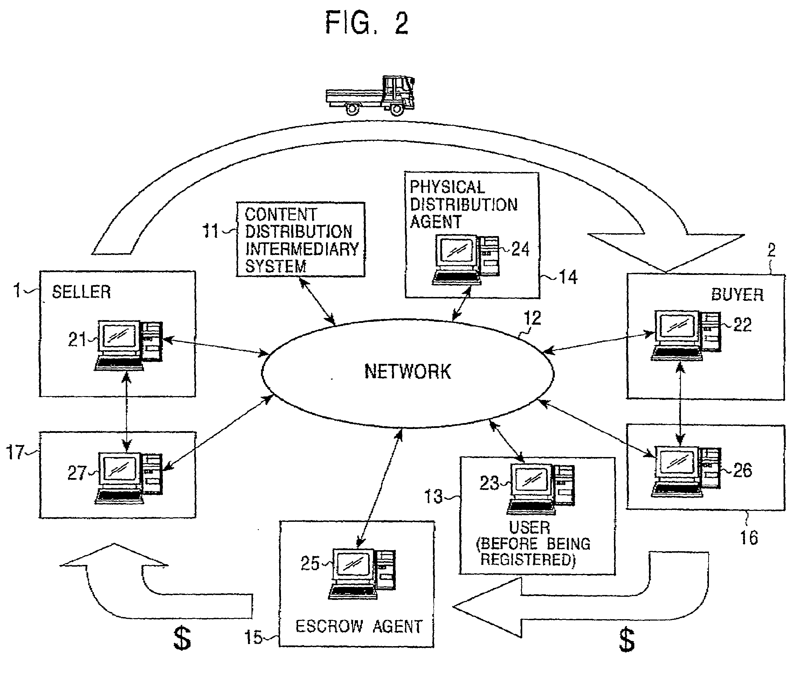

Reference is first made to Fig. 2 illustrating a system for offering intermediary services for the content distribution according to an embodiment of the present invention.

A personal computer 21 possessed by a content seller 1, such as a program production company or a movie production company, and a personal computer 22 possessed by a content buyer 2, such as a terrestrial, BS, CS, or CATV broadcast company, are connected to a content distribution intermediary system 11 via a network 12, for example, the Internet or satellite data communication. It is now assumed in this embodiment that the network 12 is the Internet.

The content distribution intermediary system 11 posts web content on the network 12. A user 13 (before being registered) is able to view the content of the services provided by the content distribution intermediary system 11 (hereinafter simply referred to as the "present services") by referring to the web content posted on the network 12 by using a personal computer 23 possessed by the user 13. Then, the user 13 is able to decide whether to register in the present services.

The seller 1 is able to register data concerning the content to be sold by the seller 1 in a database provided by the present services according to processing described below. The buyer 2 is able to conduct negotiations with the seller 1 concerning a content purchase-and-sale contract by referring to the content data registered by the seller 1 by using a negotiation system provided by the present services.

If the content purchase-and-sale contract is concluded as a result of the negotiations, the content is delivered to a physical distribution agent 14, and an escrow agent 15 checks whether the payment has been made, both agents 14 and 15 having made a contract with the content distribution intermediary system 11. Escrow is a service offered by a third party other than the buyer and the seller in the business transactions for temporarily taking charge of the money before delivering the products.

When the content purchase-and-sale contract is concluded, the buyer 2 requests a banking institution 16 which has a contract with the buyer 2 to transfer money to the escrow agent 15. In this case, the money can be transferred by using, for example, the on-line transfer via the Internat. After the escrow agent 15 has confirmed the transfer, the physical distribution agent 14 receives a recording medium, such as tape or a disk, on which the content is recorded, from the seller 1, and delivers it to the buyer 2. Then, the buyer 2 checks (examines) the content, and issues an instruction to the content distribution intermediary system 11 whether to purchase or return the content. If the buyer 2 has decided to purchase the content, the escrow agent 15 transfers the money transferred from the banking institution 16 associated with the buyer 2 to a banking institution 17 associated with the seller 1. If the buyer 2 has decided to return the content, the physical distribution agent 14 delivers the recording medium on which the content is recorded from the buyer 2 to the seller 1. After confirming that the recording medium has been returned to the seller 1, the escrow agent 15 returns the money transferred from the banking institution 16 associated with the buyer 2 to the banking institution 16.

A personal computer 24 possessed by the physical distribution agent 14, a personal computer 25 possessed by the escrow agent 15, a personal computer 26 possessed by the banking institution 16, and a personal computer 27 possessed by the banking institution 17 are also able to transmit and receive information to and from the content distribution intermediary system 11 via the network 12. Accordingly, information concerning the delivery of the recording medium and the payment for the content is registered and managed by the content distribution intermediary system 11.

In this example, the recording medium on which the content is recorded is delivered from the physical distribution agent 14 so that the buyer 2 can check the content. However, the object for the purchase-and-sale contract is not the recording medium, but at least one of the broadcasting rights, the licensing rights, or the copyright of the content, or in some cases, all the rights concerning the content including the content data.

Although in this embodiment only one seller 1, one buyer 2, one physical distribution agent 14, one escrow agent 15, one banking institution 16, and one banking institution 17 are shown, each element may be more than one.

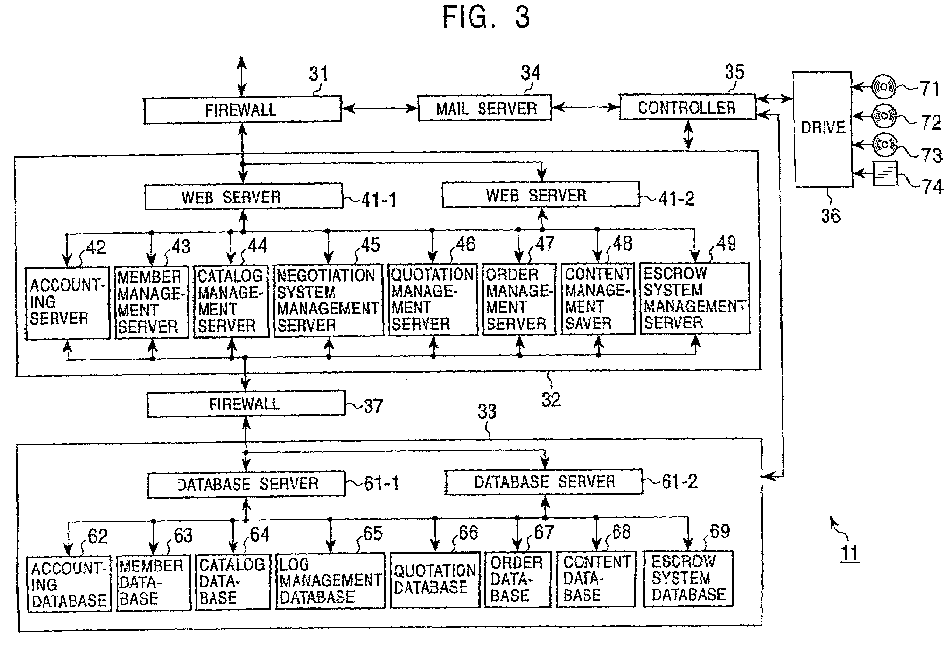

Fig. 3 is a block diagram illustrating the configuration of the content distribution intermediary system 11.

The content distribution intermediary system 11 includes the following elements. A firewall 31 is connected to the network 12. A server unit 32 is provided with various servers which perform various types of processing concerning the present services. A database unit 33 is provided with various databases which store data concerning the present services, and has the functions of registering the data in the individual databases and of searching for the registered data. A firewall 37 connects the server unit 32 and the database unit 33. A mail server 34 controls the sending and receiving of electronic mail (e-mail). A controller 35 controls the server unit 32, the database unit 33, and the mail server 34. A drive 36 is connected to the controller 35.

A network, for example, a local area network (LAN), for connecting the individual elements within the content distribution intermediary system 11 is connected to an external network, such as the Internet. Disadvantageously, therefore, the data in the content distribution intermediary system 11 can be accessed from an external source, and the important data may be manipulated. Accordingly, securities against such illegal access must be taken. The firewalls 31 and 37 control all the data to be sent and received, and block the data other than authenticated protocols and data.

There is no specific format for constructing a firewall. The firewall may be constructed at the discretion of the organization according to its policy for the securities. Generally, stronger securities decrease the range of services provided for users. Conversely, more flexible communication with an external source decreases the securities. Three types of firewalls, such as an application gateway (proxy), a circuit level gateway, and a packet filter, are provided for allowing only required services to pass through an internal network. In an actual system, the three firewalls are flexibly combined to construct a high-security firewall system.

The server unit 32 includes web servers 41-1 and 41-2, an accounting server 42, a member management server 43, a catalog management server 44, a negotiation system management server 45, a quotation management server 46, an order management server 47, a content management server 48, and an escrow system management server 49. The above-described servers are connected to each other so as to send and receive information therebetween. The servers other than the web servers 41-1 and 41-2 are connected to the database unit 33 via the firewall 37.

The web servers 41-1 and 41-2 have the same functions, and record the same information therein. That is, the web server 41-2 is provided as a mirror server of the web server 41-1 so as to reduce overhead caused by heavy access or prevent the entire system from breaking down even in case of an accident to one of the web servers 41-1 and 41-2. The web servers 41-1 and 41-2 are simply referred to as the "web server 41" unless it is necessary to distinguish them.

The web server 41 stores web pages to be sent via the network 12 to the personal computer 23 of the user 13 (before being registered), the personal computer 21 of the seller 1, and the personal computer 22 of the buyer 2, or stores the templates of the web pages. The web pages to be sent from the web server 41 to the personal computers 21 through 23 are determined based on a so-called site map indicating a web page list and the association (page connections) of the web pages according to a signal indicating a user operation transmitted from the personal computers 21 through 23.

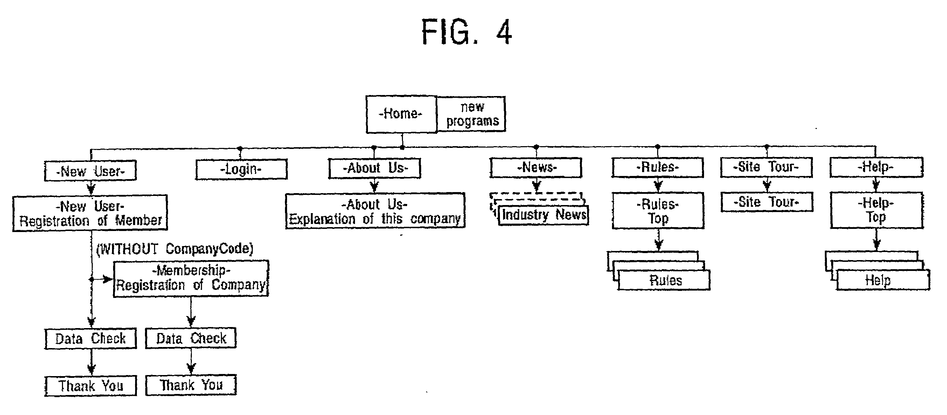

The site map indicates the association of all the stored web pages, i.e., to which page a current page is to be jumped when a user performs a certain operation (for example, clicking on a button or link text provided on the web page). Examples of the site map are shown in Figs. 4 through 6.

The site map shown in Fig. 4 represents web pages to be sent to the personal computer 23 of the user 13.

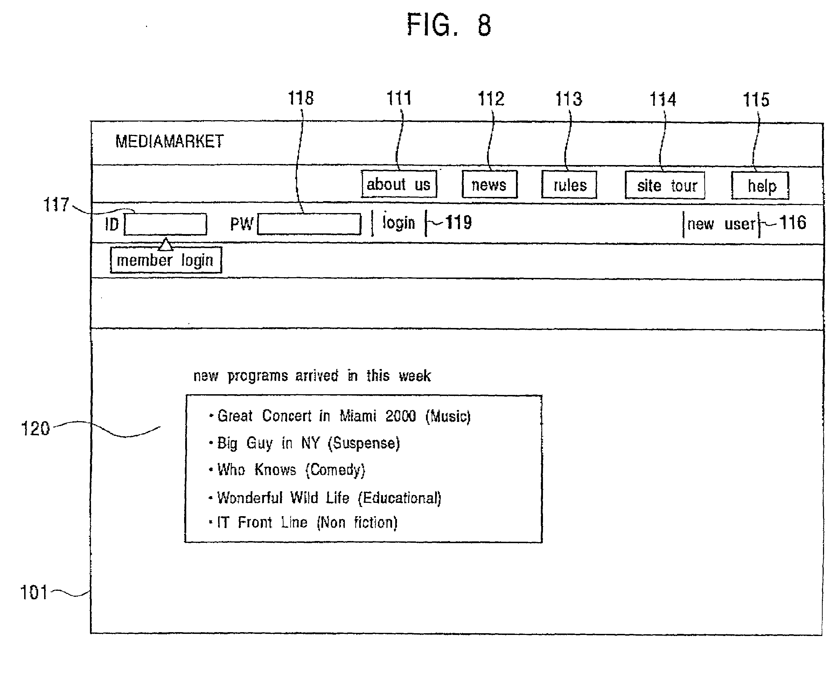

The user 13 who has not been registered is able to view the top page (web page to be first accessed by the users. which is discussed in detail below with reference to Fig. 8) for all the users, and also views the pages about a company guide (About Us), the news (News), the rules of the present services (Rules), the introduction of the services provided by the present services (Site Tour), and the usage of the site (Help). The user 13 is also able to perform registration processing in the registration processing page (Registration of Member) to make registration in the present services. However, the user 13 cannot jump to the pages subsequent to the login page before being registered.

Details of the web pages to be viewed by the user 13 are discussed below.

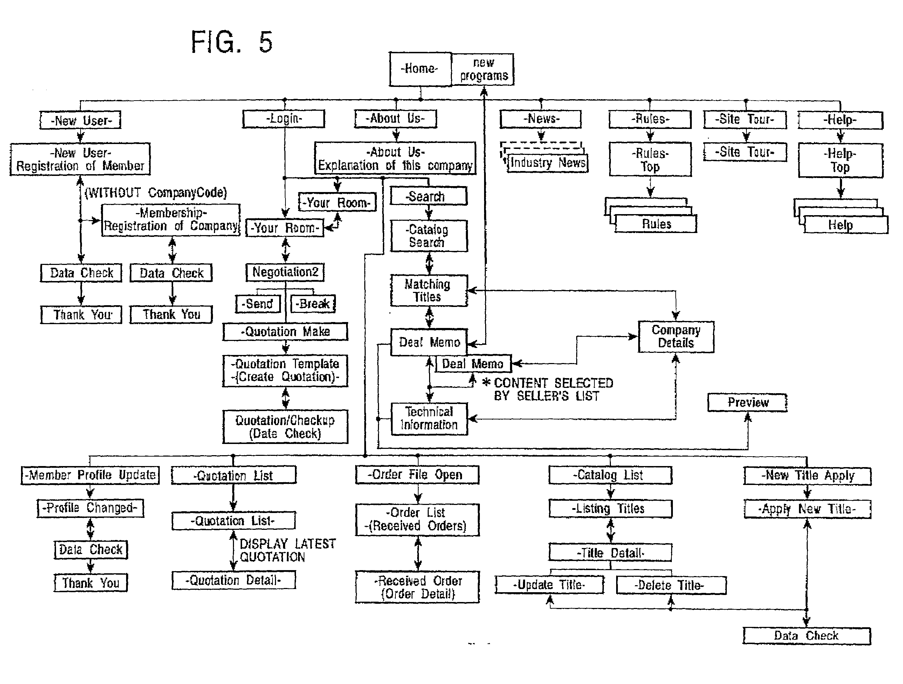

The site map shown in Fig. 5 indicates the web pages to be sent to the personal computer 21 of the seller 1.

The seller 1 is able to view, not only the pages to be viewed by the user 13, but also the pages subsequent to the login page. By accessing the pages subsequent to the login page, the seller 1 is able to enjoy the services for negotiating with the buyer 2, searching for the content (Search), updating the registration contents (Member Profile update), forming the quotation sent to the buyer 2 (Quotation), checking the content ordered from the buyer 2 (Order Pile Open), checking a list of the content registered in the present services by the seller 1 (Catalog List), and registering new content titles (New Title Apply).

Details of the web pages to be viewed by the seller 1 are described below.

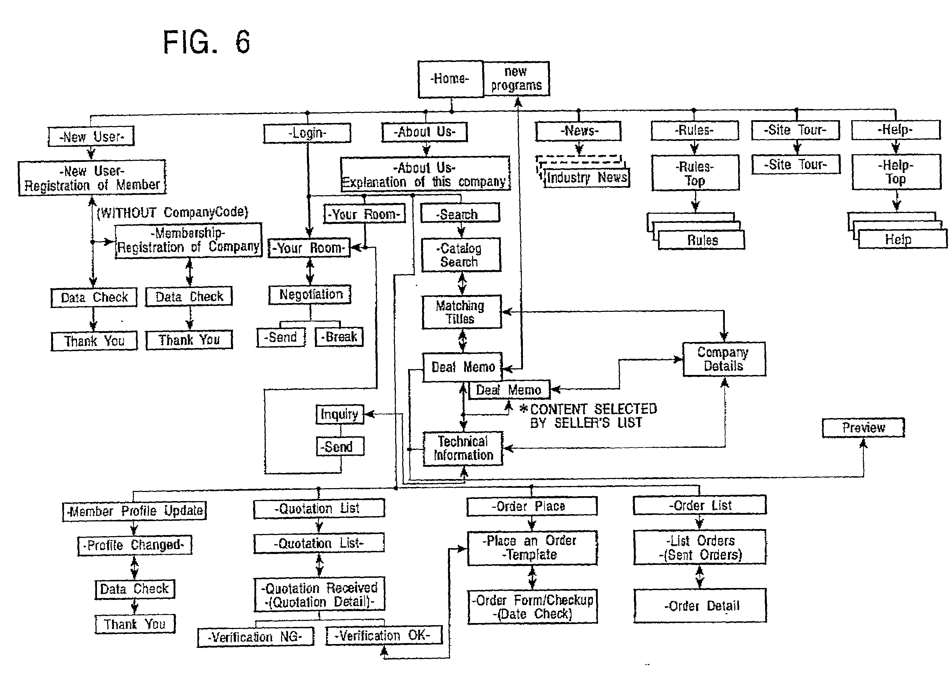

The site map shown in Fig. 6 designates the web pages to be sent to the personal computer 22 of the buyer 2.

The buyer 2 is able to view, not only the pages to be viewed by the user 13, but also the pages subsequent to the login page. By accessing the pages subsequent to the login page, the buyer 2 is able to enjoy the services, such as negotiating with the seller 1, searching for the content (Search), updating the registration content (Member Profile Update), checking the quotation sent from the seller 1 (Quotation), forming an order to the seller 1 (Order Place), and checking the ordered content (Order List).

Details of the web pages to be viewed by the buyer 2 are discussed below.

The accounting server 42 is a server which performs accounting processing for the registered members using the present services. The accounting server 42 charges a membership registration fee, a content posting fee for the seller 1, a purchase handling fee when the buyer 2 purchases the content, and so on. The membership registration fee may be collected by companies, sellers, or buyers. Alternatively, the membership registration fee may be determined by the number of registered sellers and buyers in one company.

The member management server 43 outputs company information or user information of the user 13 to a member database 63 via the firewall 37 and a database server 61-1 or 61-2, and registers the information in the member database 63, based on information received from the personal computer 23 of the user 13 via the network 12, the firewall 31, and the web server 41. If necessary, the member management server 43 also generates a control signal for searching for the company information registered in the member database 63, and outputs the control signal to the database server 61-1 or 61-2, Based on this control signal, the database server 61-1 or 61-2 searches for the company information, and the member database 63 returns a search result to the web server 41.

The catalog management server 64 outputs data concerning the new content to a catalog database 64 via the firewall 37 and the database server 61-1 or 61-2, and registers the data in the catalog database 64, based on information received from the personal computer 21 of the seller 1 via the network 12, the firewall 31, and the web server 41. If necessary, the catalog management server 44 also generates a control signal for searching for the information concerning the content registered in the catalog database 64, and outputs the control signal to the database server 61-1 or 61-2. Based on this control signal, the database server 61-1 or 61-2 searches for the information, and the catalog management server 44 returns a search result to the web server 41.

The negotiation system management server 45 outputs negotiation information exchanged between the seller 1 and the buyer 2 in negotiation processing (discussed below) to a log management database 65 via the firewall 37 and the database server 61-1 or 61-2, and registers the negotiation information in the log management database 65, based on information received from the personal computer 21 of the seller 1 or the personal computer 22 of the buyer 2 via the network 12, the firewall 31, and the web server 41. If necessary, the negotiation system management server 45 also generates a control signal for searching for the negotiation information registered in the log management database 65, and outputs the control signal to the database server 61-1 or 61-2. Based on this control signal, the database server 61-1 or 61-2 searches for the negotiation information, and the negotiation system management server 45 returns a search result to the web server 41.

The quotation management server 46 outputs quotation information created by the seller 1 to a quotation database 66 via the firewall 37 and the database server 61-1 or 61-2, and registers the quotation information in the quotation database 66, based on information received from the personal computer 21 of the seller 1 via the network 12, the firewall 31, and the web server 41. If necessary, the quotation management server 46 also generates a control signal for searching for the quotation information registered in the quotation database 66, and outputs the control signal to the database server 61-1 or 61-2. Based on this control signal, the database server 61-1 or 61-2 searches for the quotation information, and the quotation management server 46 returns a search result to the web server 41.

The order management server 47 outputs order information created by the buyer 2 to an order database 67 via the firewall 37 and the database server 61-1 or 61-2, and registers the order information in the order database 67, based on information received from the personal computer 22 of the buyer 2 via the network 12, the firewall 31, and the web server 41. If necessary, the order management server 47 also generates a control signal for searching for the order information registered in the order database 67, and outputs the control signal to the database server 61-1 or 61-2. Based on this control signal, the database server 61-1 or 61-2 searches for the order information, and the order management server 47 returns a search result to the web server 41.

The content management server 48 outputs image data, video data, or audio data of the content registered in a catalog database 64 to a content database 68 via the firewall 37 and the database server 61-1 or 61-2, and registers such data in the content database 68. The image data, the video data, and the audio data registered in the catalog database 64 are sent from the personal computer 21 of the seller 1 via the network 12, the firewall 31, and the web server 41, or from a recording medium, such as a magnetic disk 71, an optical disc 72, a magneto-optical disk 73, or a semiconductor memory 74, loaded in the drive 36 via the controller 35. If necessary, the content management server 48 also generates a control signal for searching for the image data, the video data, or the audio data registered in the content database 68, and outputs the control signal to the database server 61-1 or 61-2. Based on this control signal, the database server 61-1 or 61-2 searches for the data, and the content management server 48 returns a search result to the web server 41.

The escrow system management server 49 outputs information concerning escrow processing (discussed below) to an escrow system database 69 via the firewall 37 and the database server 61-1 or 61-2, and registers the information in the escrow system database 69. The escrow processing information is sent to the escrow system management server 49 from the personal computer 21 of the seller 1, the personal computer 22 of the buyer 2, the personal computer 24 of the physical distribution agent 14, the personal computer 25 of the escrow agent 15, the personal computer 26 of the banking institution 16, and the personal computer 27 of the banking institution 17 via the network 12, the firewall 31, the mail server 34, and the controller 35. If necessary, the escrow system management server 49 generates a control signal for searching for the escrow processing information registered in the escrow system database 69, and outputs the control signal to the database server 61-1 or 61-2. Based on this control signal, the database server 61-1 or 61-2 searches for the escrow processing information, and tha escrow system management server 49 returns a search result to the web server 41 or the controller 35.

The database unit 33 includes the database server 61-1 or 61-2, the accounting database 62, the member database 63, the catalog database 64, the log management database 65, the quotation database 66, the order database 67, the content database 68, and the escrow system database 69. The above-mentioned elements are connected to each other, and send and receive information therebetween.

The database server 61-1 and 61-2 have the same functions, and record the same information. That is, the web server 61-2 is provided as a mirror server of the web server 61-1 so as to reduce overhead caused by heavy access or prevent the entire system from breaking down even in case of an accident to one of the web servers 61-1 and 61-2. The web servers 61-1 and 61-2 are simply referred to as the "web server 61" unless it is necessary to distinguish them.

According to a control signal received from the server unit 32 via the firewall 37, the database server 61 searches the various databases 62 through 69 of the database unit 33 for predetermined data. The database server 61 also updates the data registered in the various databases 62 through 69 or registers new data therein.

The accounting database 62 registers data received from the accounting server 42 via the firewall 37 and the database server 61.

The member database 63 registers data received from the member management server 43 via the firewall 37 and the database server 61.

The catalog database 64 registers data received from the catalog management server 44 via the firewall 37 and the database server 61.

The log management database 65 registers data received from the negotiation system management server 45 via the firewall 37 and the database server 61.

The quotation database 66 registers data received from the quotation management server 46 via the firewall 37 and the database server 61.

The order database 67 registers data received from the order management server 47 via the firewall 37 and the database server 61.

The content database 68 registers data received from the content management server 48 via the firewall 37 and the database server 61.

The escrow system database 69 registers data received from the escrow system management server 49 via the firewall 37 and the database server 61.

According to a control signal input from the controller 35, the mail server 34 sends e-mail to a certain personal computer among the personal computers 21 through 27 via the firewall 31 and the network 12, or receives e-mail from them and supplies it to the controller 35.

The controller 35 controls the entire content distribution intermediary system 11. The drive 36 is connected to the controller 35. The magnetic disk 71, the optical disc 72, the magneto-optical disk 73, or the semiconductor memory 74 is loaded in the drive 36 as required, and data can be sent to and received from the controller 35. The controller 35 generates and outputs a control signal for controlling the server unit 32, the database unit 33. or the mail server 34. The controller 35 also registers in the corresponding database the data recorded on the magnetic disk 71, the optical disc 72, the magneto-optical disk 73, or the semiconductor memory 74 loaded in the drive 36, or the data input by an operator of the content distribution intermediary system 11 via an input unit (not shown).

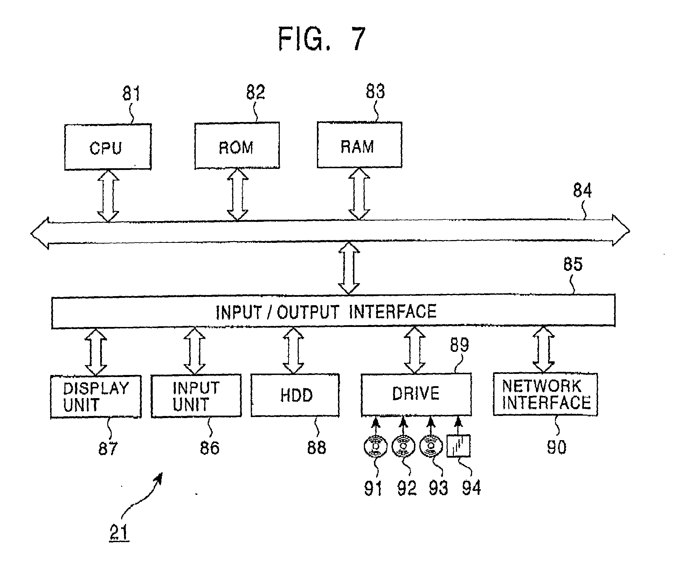

Fig. 7 is a block diagram illustrating the configuration of the personal computer 21 possessed by the seller 1. The personal computers 22 through 27 are configured similarly to the personal computer 21 shown in Fig. 7, and an explanation thereof will thus be omitted.

A central processing unit (CPU) 81 executes various application programs and a basic operating system (OS). Generally, a read only memory (ROM) 82 stores fixed data of the programs used by the CPU 81 and the computation parameters. A random access memory (RAM) 83 stores programs executed by the CPU 81 and parameters which vary during the execution. The CPU 81, the ROM 82, and the RAM 83 are connected to each other via an internal bus 84.

The internal bus 84 is also connected to an input/output interface 85. An input unit 86 is formed of, for example, a keyboard or a mouse, and a user (in this case, the seller 1) operates this input unit 86 to issue various instructions to the CPU 81. A display unit 87 is formed of, for example, a cathode ray tube (CRT), and displays various types of information in text or images. A hard disk drive (HDD) 88 drives a hard disk so as to record or play back the programs (for example, web browser software for viewing the web pages posted on the network 12) and information executed by the CPU 81 on and from the hard disk. A magnetic disk 91, an optical disc 92, a magneto-optical disk 93, or a semiconductor memory 94 is loaded in a drive 89 as required, and data can be sent and received to and from the personal computer 21. A network interface 90 is connected to the network 12 via, for example, a telephone line.

The input unit 86, the display unit 87, the HDD 88, the drive 89, and the network interface 90 are connected to the CPU 81 via the input/output interface 85 and the internal bus 84.

The user (seller 1, buyer 2, or user 13) of the present services starts the web browser software for viewing the web content by using the corresponding computer, and inputs the URL of the top page of the web pages (such as those indicated in the site maps shown in Figs. 4 through 6) posted on the network 12 by the content distribution intermediary system 11. The CPU 81 of the personal computer 21, 22, or 23 receives data corresponding to a top page display screen 101 shown in Fig. 8 from the web server 41 of the content distribution intermediary server 11 via the network 12, and displays the received data on the display unit 87.

On the top page display screen 101, an about-us button 111, a news button 112, a rules button 113, a site-tour button 114, and a help button 115 are provided. The user 13, who has not been registered (i.e., he/she will become the seller 1 or the buyer 2 after being registered) clicks one of the above buttons 111 through 115 so that the corresponding display screen is displayed. Thus, the user 13 is able to view the content of the present services. If the user 13 wishes to make a registration in the present services, he/she is able to execute registration processing, which is discussed below, by clicking a new-user button 116.

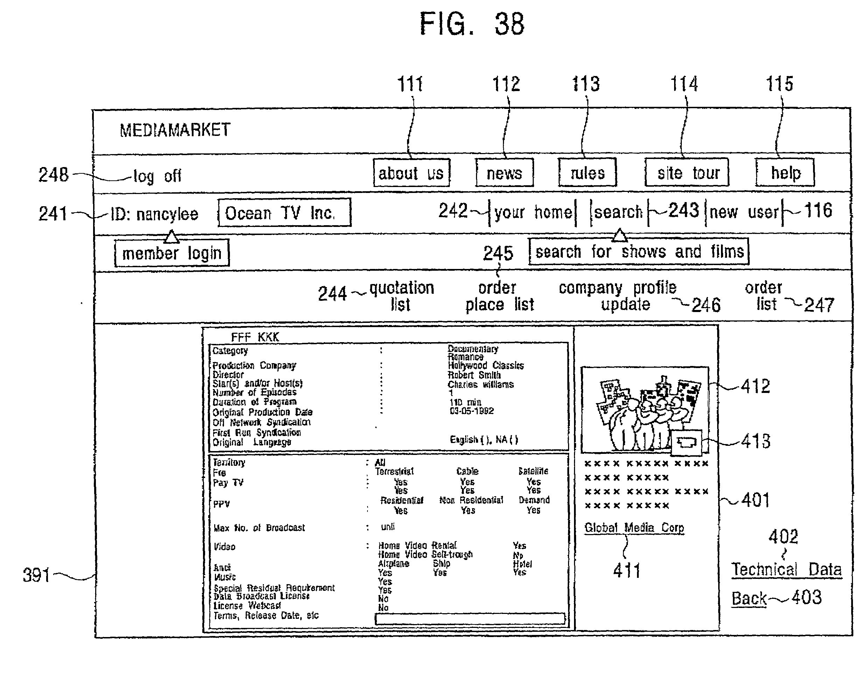

On the top page display screen 101, there are alao provided text boxes 117 and 116 for inputting the ID and the password, respectively, or the seller 1 or the buyer 2 who has registered in the present services, and a login button 119 for giving an login instruction. In a display area 120 of the top page display screen 101, the titles and the categories of the newly registered content are indicated every week. For example, the text indicating the content titles displayed in the display area 120 may be related (linked) to the pages showing the details of the content, (for example, a detail memo display screen shown in Fig. 38). Then, the user may select (click) a desired content title by using the input unit 86, for example, a mouse, so that the page showing the details of the content is displayed.

The user clicks the about-us button 111 by using the input unit 86 so that information about the administrator of the content distribution intermediary system 11 (for example, a company which administers the content distribution intermediary system 11) can be displayed. The user clicks the news button 112 by using the input unit 86 so that the news concerning the present services can be displayed. The user also clicks the rules button 113 by using the input unit 86 so that the rules concerning the use of the. present services can be displayed.

The user clicks the site-tour button 114 by using the input unit 86 so that the site tour which introduces the outline and the usage of the present services by moving pictures or sound can be displayed. The user also clicks the help button 115 by using the input unit 86 so that the help concerning the usage of this site can be displayed.

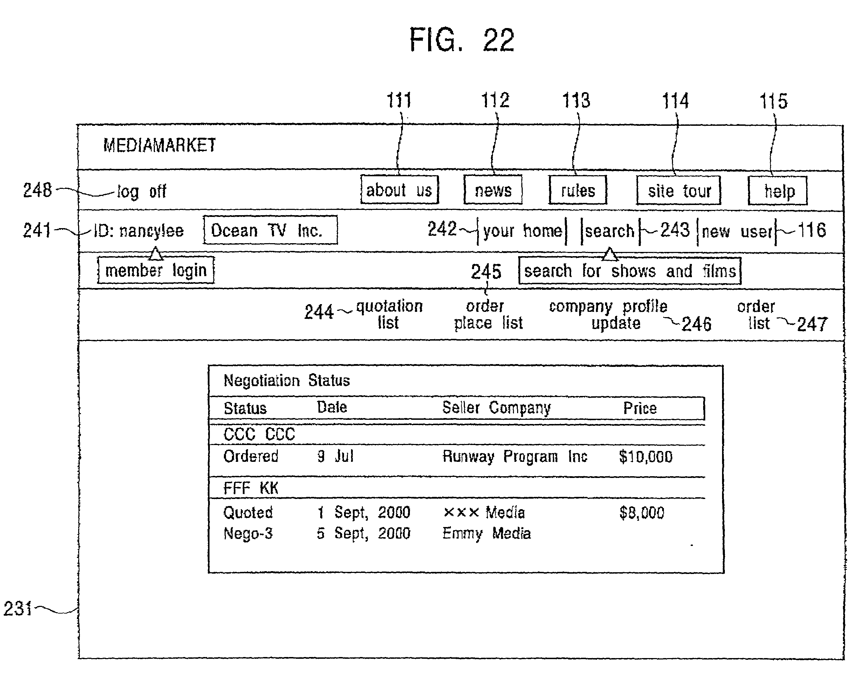

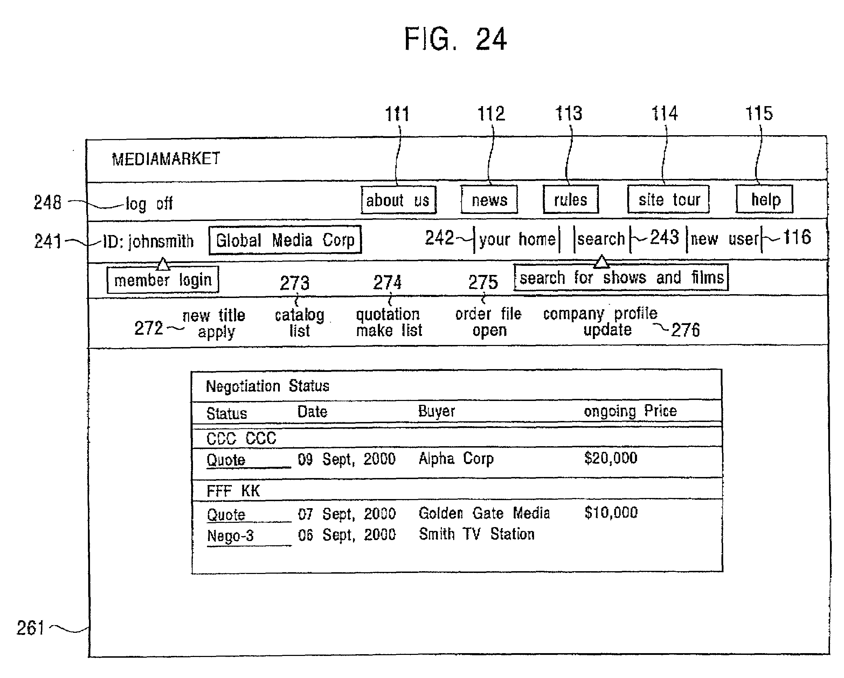

After making registration in the present services, the seller 1 or the buyer 2 inputs the ID in the text box 117 and the password in the text box 118 by using the input unit 86. Then, by clicking the login button 119, a buyer's room, which is discussed below with reference to Fig. 22, or a seller's room, which is discussed below with reference to Fig. 24, can be displayed in the display area 120, thereby enabling the user to perform processing for selling or buying the content.

The about-us button 111 through the help button 115 are displayed on all the display screens. The test boxes 117 and 118. the login button 119, and the new user button 116 are displayed on the top page display screen 101 and a display screen used for performing registration processing (described below) only. The user can change the data displayed in the display area 120.

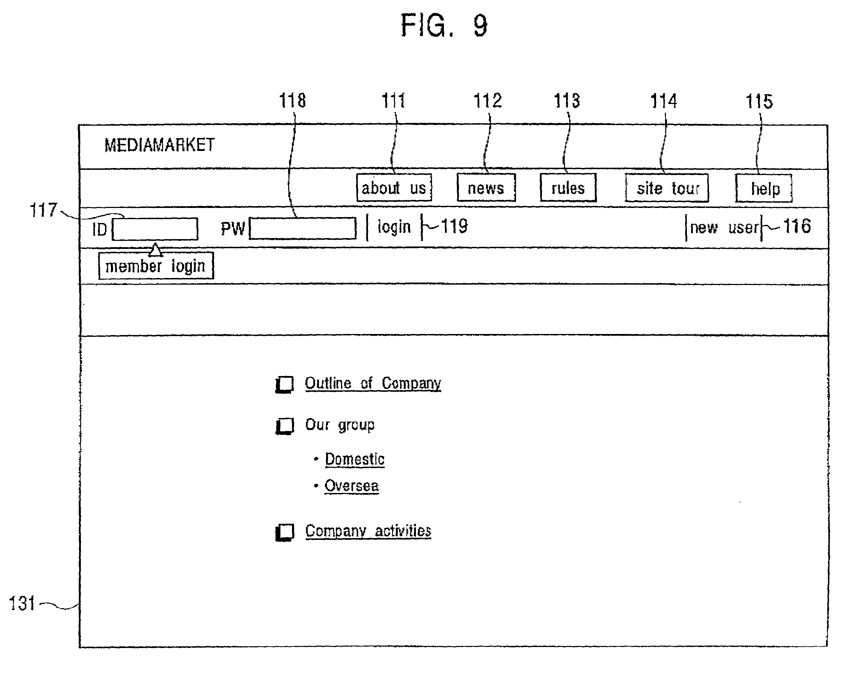

An about-us display screen 113 to be displayed when the user clicks the about-us button 111 is shown in Fig. 9.

On the about-us display screen 113, for examgle, the outline of the company which provides the present services (outline of company), the introduction of the national and overseas associated companies (our group), and the business activities of the company (company activities) are displayed. Alternatively, the link text for displaying more details of the above information is indicated.

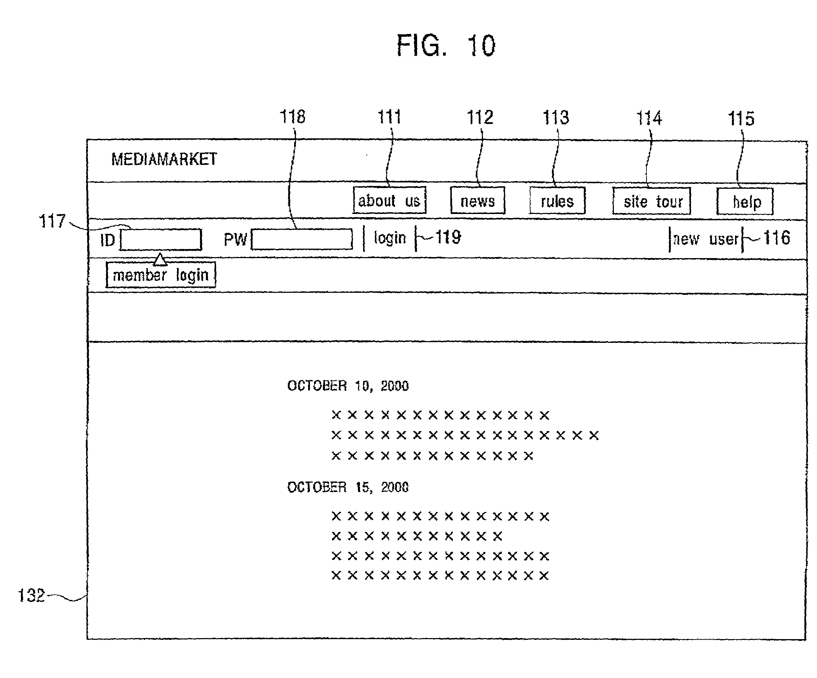

A news display screen 132 to be displayed when the user clicks the news button 112 is shown in Fig. 10.

On the news display screen 132, news for the users, such as, press release flash news, and information concerning new services provided by the present services, are displayed in text data, image data, or moving picture data.

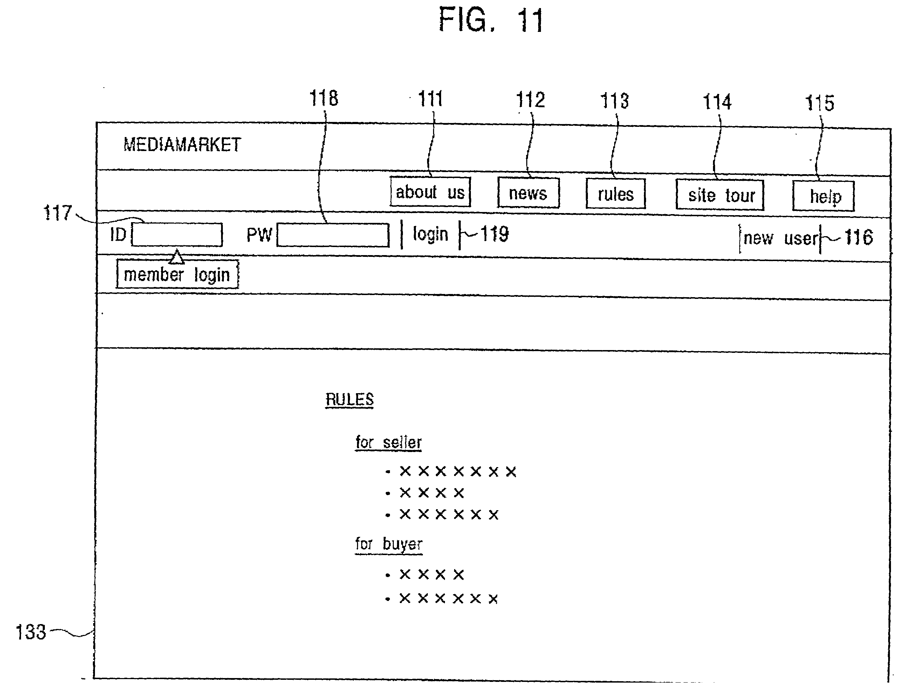

The rule display screen 133 to be displayed when the user clicks the rule button 113 is shown in Fig. 11.

On the rule display screen 133, various rules to be followed when using the present services are displayed according to the rules for the seller 1 or the rules for the buyer 2.

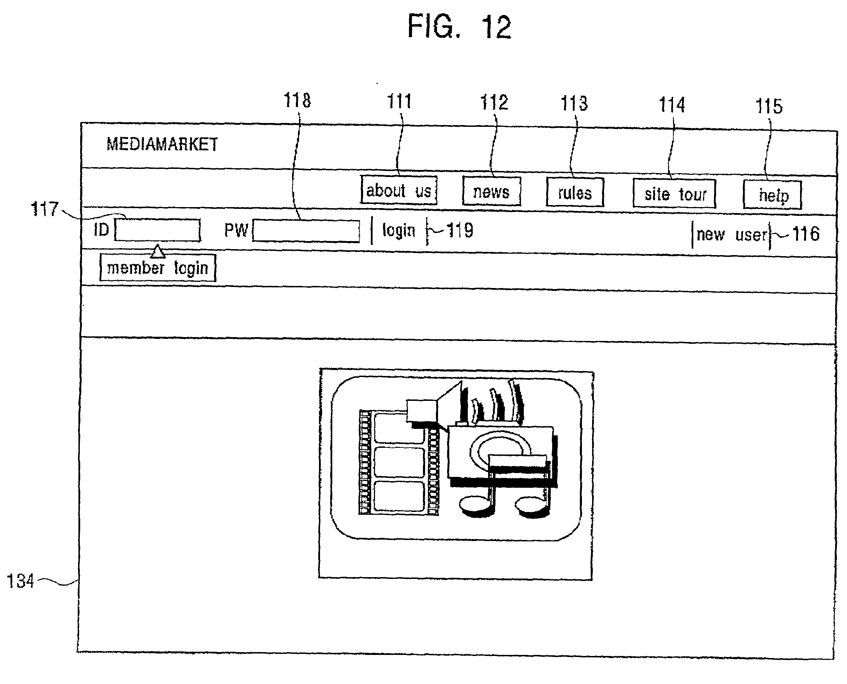

A site-tour display screen 134 to be displayed when the user clicks the site-tour button 114 is shown in Fig. 12.

On the site-tour display screen 134, video data for introducing the system of the present services, the present site, and the services enjoyed by the user registered in the present services, is shown. This video data can be played back by the user.

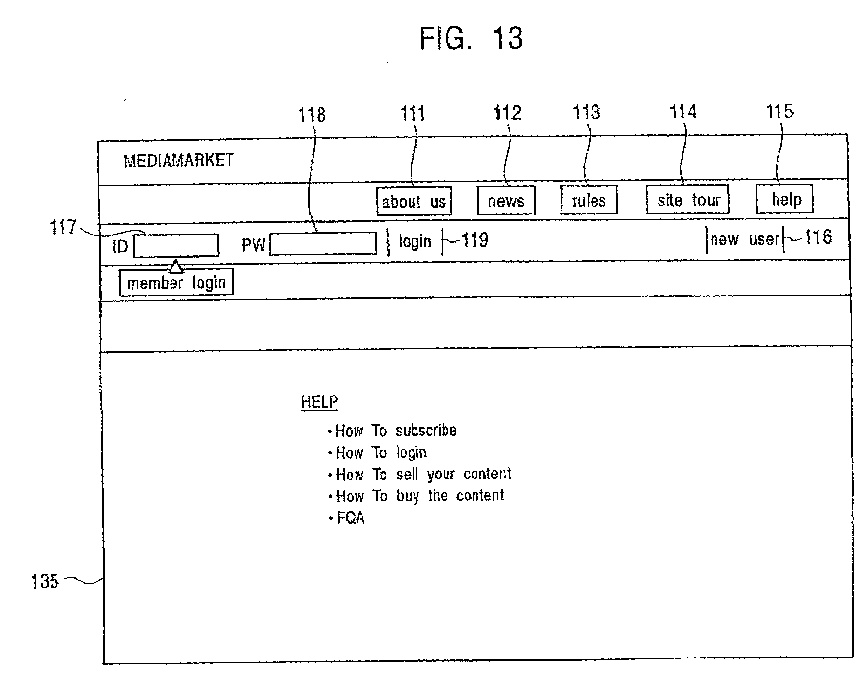

A help display screen 135 to be displayed when the user clicks the help button 115 is shown in Fig. 13.

On the help display screen 135, for example, a method for making registration in the present services (how to subscribe), a login method (how to login), a method for selling the content broadcasting rights by using the present services (how to sell your content), a method for purchasing the content broadcasting rights by using the present services (how to buy the content), and frequent questions and answers (FAQ) are displayed. Alternatively, the link text for displaying more details by clicking the above information is indicated.

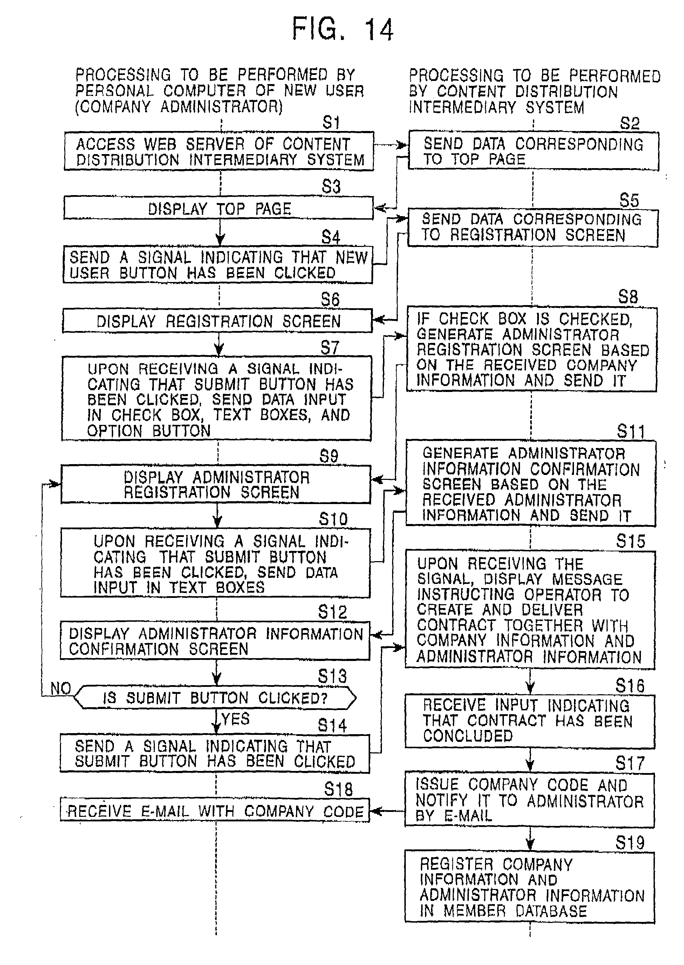

A description is given below, with reference to the flow chart of Fig. 14, of processing to be performed when the user 13 (to be registered as the administrator of his/her company) registers the company in the present services.

In step S1, the CPU 81 of the personal computer 23 (Fig. 7) accesses the web server 41 of the content distribution intermediary system 11 via the internal bus 84, the input/output interface 85, the network interface 90, the network 12, and the firewall 31.

Then, in step S2, the web server 41 sends the data corresponding to the top page display screen 101 shown in Fig. 8 to the personal computer 23 via the firewall 31 and the network 12.

In step S3, the CPU 81 of the personal computer 23 outputs the received data to the display unit 87 via the internal bus 84 and the input/output interface 85. The display unit 87 then displays the top page display screen 101. Subsequently, in step S4, the CPU 81 receives from the input unit 86 a signal indicating that the new user button 116 on the top page display screen 101 has been clicked, and transmits this signal to the content distribution intermediary system 11 via the network 12.

In step S5, the web server 41 of the content distribution intermediary system 11 sends the data corresponding to a registration screen to the personal computer 23 via the network 12.

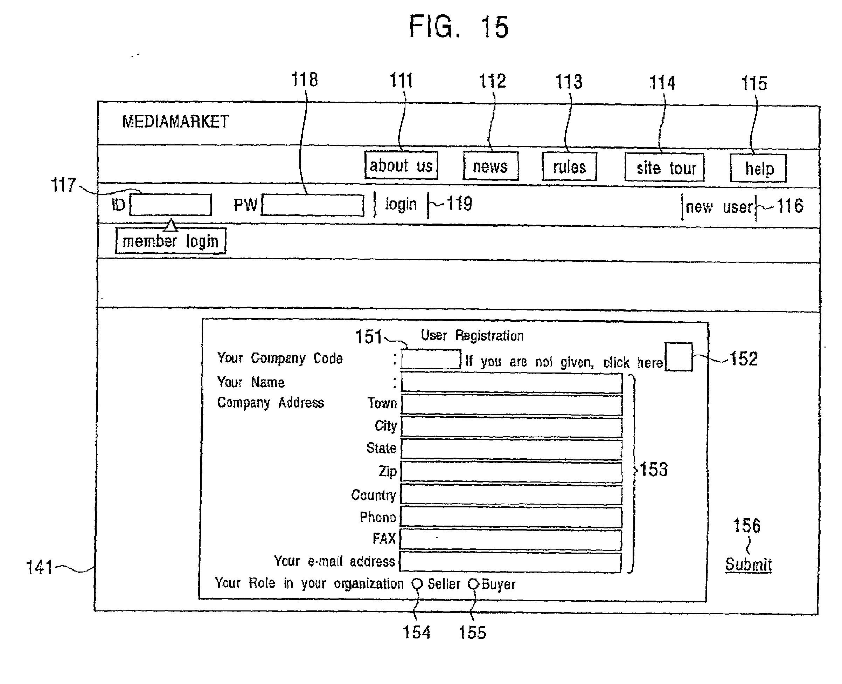

Then, in step S6, the CPU 81 of the personal computer 23 outputs the received data to the display unit 87, and the display unit 87 displays a registration screen 141, such as that shown in Fig. 15. On the registration screen 141, a text box 151 for inputting the company code, a check box 152 for a user who has not yet been given a company code, text boxes 153 for inputting company information, such as the address and the telephone number, option buttons 154 and 155 for specifying whether the user 13 is a seller or a buyer. and a submit button 156 for sending the input data to the content distribution intermediary system 11.

In step S7, the CPU 81 of the personal computer 23 receives from the input unit 86 a signal indicating that the submit button 156 on the registration screen 141 has been clicked, and sends the data filled in the check box 152, the text boxes 153, and one of the option buttons 154 and 155 to the content distribution intermediary system 11 via the network 12.

If it is detected from the data received by the web server 41 that the check box 152 is checked, it can be proved that the user 13 does not possess a company code (has not been registered). Accordingly, in step S8, the web server 41 generates data corresponding to the administrator registration screen based on the received company information (filled in the text boxes 153), and sends the data to the personal computer 23 via the network 12.

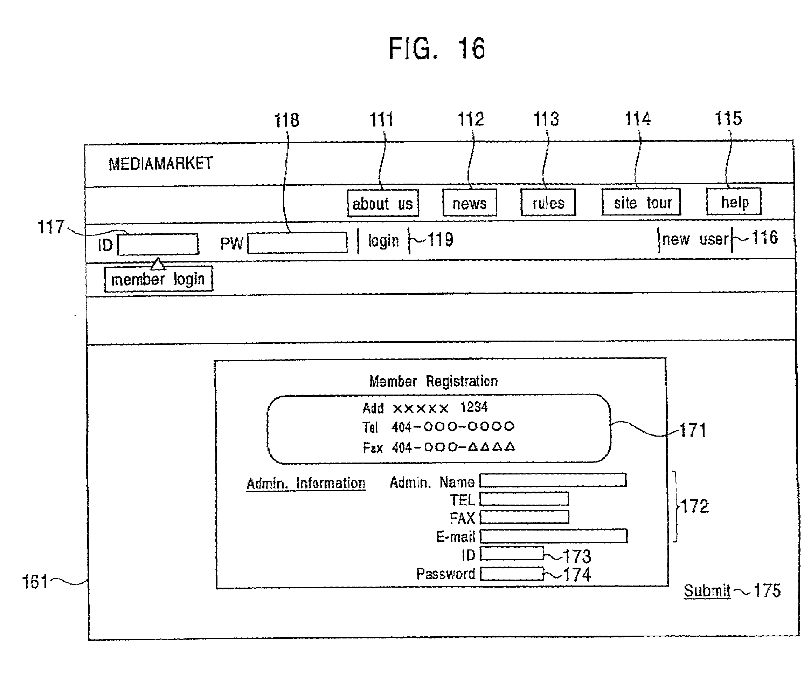

In step S9, the CPU 81 of the personal computer 23 outputs the received data to the display unit 87, and the display unit 87 displays an administrator registration screen 161, such as that shown in Fig. 16. In a display area 171 on the administrator registration screen 161, the company information sent from the personal computer 23 to the content distribution intermediary system 11 in step S7 has bean indicated. On the administrator registration screen 161, there are also provided text boxes 172 for inputting sensitive information of the administrator, a text box 173 for inputting the ID to be registered, n text box 174 for inputting a password to be registered, and a submit button 175 for sending the information input in the text boxes 172 through 174 to the content distribution intermediary system 11. The user 13 of the personal computer 23 inputs the corresponding information in the text boxes 172 through 174 by using the input unit 86, and then clicks the submit button 175.

In step S10, the CPU 81 receives the input of a signal indicating that the submit button 175 has been clicked, and sends the data filled in the text boxes 172 through 174 by the user 13 to the content distribution intermediary system 11 via the network 12.

Then, in step S11, the web server 41 of the content distribution intermediary system 11 generates data corresponding to an administrator information confirmation screen based on the received administrator information, and sends the data to the personal computer 23 via the network 12.

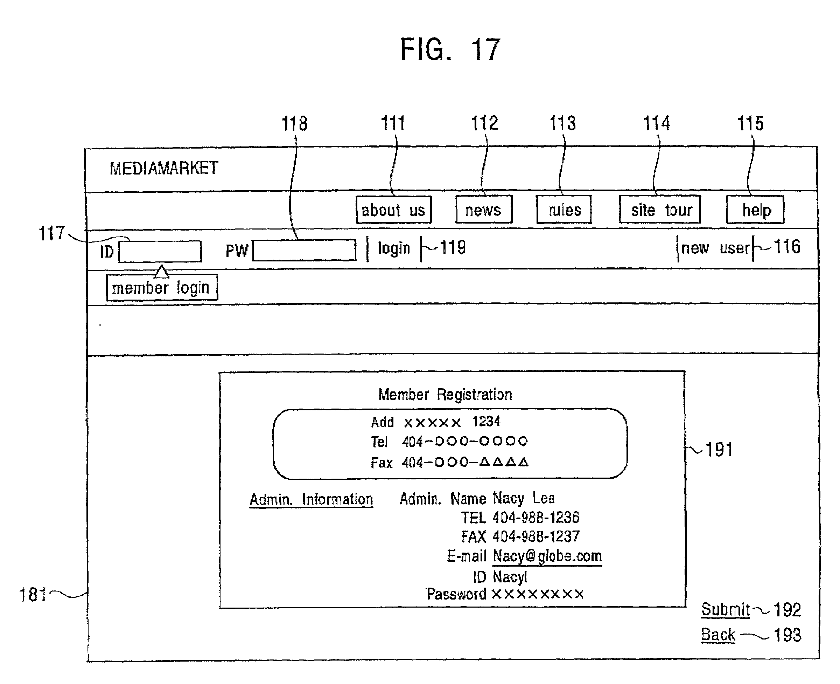

In step S12, the CPU 81 of the personal computer 23 outputs the received data to the display unit 87, and the display unit 87 displays an administrator information confirmation screen 181, such as that shown in Fig. 17. On the administrator information confirmation screen 181, there are provided an administrator information display area 191 indicating the company information filled in the display area 171 and the administrator information filled in the text boxes 172 through 174 on the administrator registration screen 161, a submit button 192 to be selected when registering the data displayed in the administrator information display area 191, and a back button 193 for returning to the administrator registration screen 161 shown in Fig. 16 when the user wishes to correct the data displayed in the administrator information display area 191.

The CPU 81 then determines in step S13 whether the submit button 192 on the administrator information confirmation screen 181 has been clicked based on the signal input from the input unit 86. If it is found in step S13 that the submit button 192 has not been clicked, i.e., the back button 193 has been clicked, the process returns to step S9, and the processing in steps S9 through S13 is repeated.

If the outcome of step S13 is yes, the process proceeds to step S14 in which the CPU 81 sends a signal indicating that the submit button 192 has been clicked to the content distribution intermediary system 11 via the network 12.

In step S15, the web server 41 receives the above-described signal, and outputs the company information and the administrator information received in step S11 to the controller 35. The controller 35 then generates a message instructing the operator who manages the content distribution intermediary system 11 to create and deliver a contract, ana outputs the message together with the input company information and the administrator information to a display unit (not shown).

Accordingly, the operator who manages the content distribution intermediary system 11 generates a predetermined contract, and sends it to the company of the user 13 offline, such as by mail. If the company agrees with the contract, it adds its signature and seal to the contract, and returns the contract to the content distribution intermediary system 11 offline, such as by mail.

Upon receiving the contract with the signature and the seal from the company, the operator informs to the controller 35 that the contract has been concluded. Then, in step S16, the controller 35 receives the above-described information.

In step S17, the controller 35 issues a company code, and notifies the user 13 about it by e-mail via the mail server 34, the firewall 31, and the network 12 based on the e-mail address of the user 13 input in step S10.

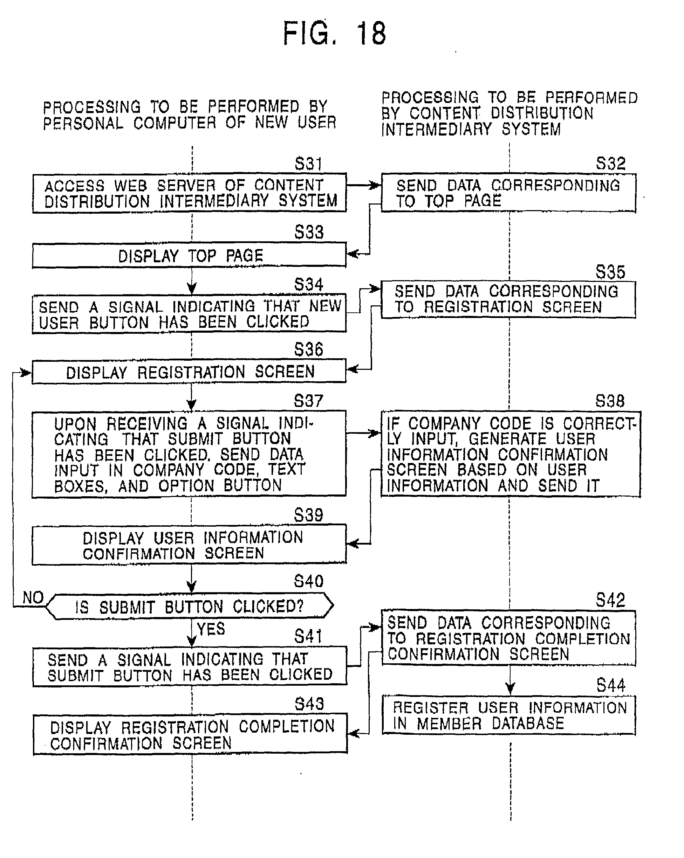

Then, in step S18, the CPU 81 of the personal computer 23 receives the e-mail including the company code. The user 13 informs another user about the company code which will perform user registration processing, which is described below with reference to Fig. 18.

In step S19, the CPU 81 of the controller 35 generates a control signal for registering the company information and the administrator information in the member database 63, and outputs the control signal together with the company information and the administrator information to the member management server 43. The member management server 43 outputs the control signal together with the company information and the administrator information to the database server 61 via the firewall 37. The database server 61 then outputs the company information and the administrator information to the member database 63 and registers them therein. The registration processing is thus completed.

According to the processing discussed with reference to Figs. 14 through 17, the registration of the company of the user 13 and the registration of the user 13 as the company administrator are conducted. By using the company code received in step S18, another user belonging to the same company as the user 13 is able to perform registration processing.

A description is now given, with reference to the flow chart of Fig. 18, of the registration processing to be performed when a user belonging to the same company as the user 13 (administrator) makes a registration in the present services as the seller 1 or the buyer 2.

Steps 31 through 36 are similar to steps S1 through S6, respectively, shown in Fig. 14.

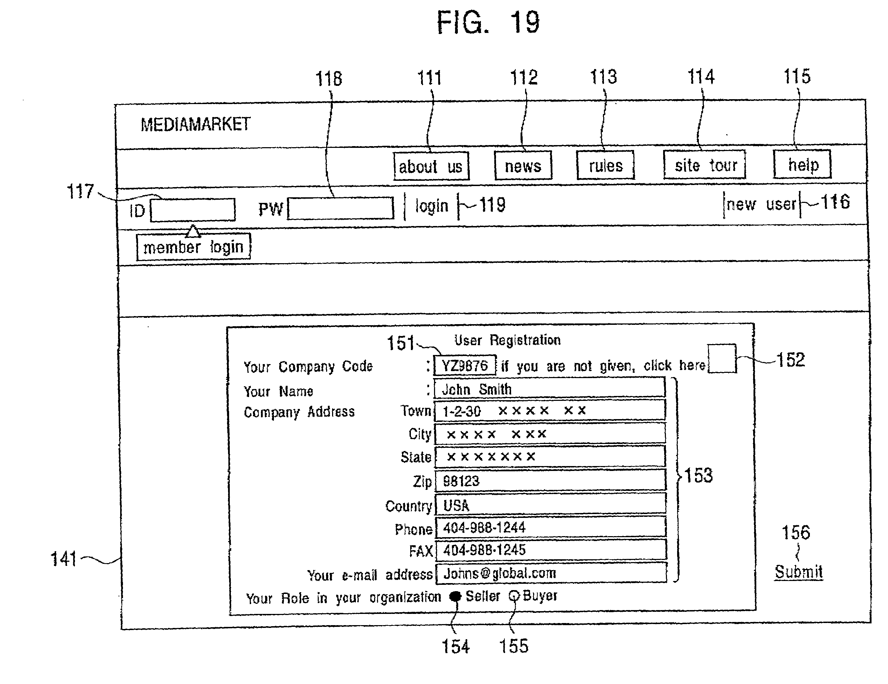

The user 13 (before being registered) is able to input the company code in the text box 151 on the registration screen 141, as shown in Fig. 19, since he/she has been informed of the company code from the administrator. The user 13 has to select the option button 154 or 155.

In step S37, the CPU 81 of the personal computer 23 possessed by the user 13 receives the input of a signal indicating that the submit button 156 on the registration screen 141 shown in Fig. 19 has been clicked. The CPU 81 then sends the data filled in the text boxes 151 and 153, and the data filled in the option button 154 or 155 to the content distribution intermediary system 11 via the network 12.

If the company code is correctly input in the text box 151, it can be confirmed that the user 13 is a user belonging to the registered company. Then, in step S38, the web server 41 of the content distribution intermediary system 11 generates data corresponding to a user information confirmation screen based on the received user information (i.e., the data filled in the text boxes 151 and 153, and the data filled in the option button 154 or 155). The web server 41 then sends the data to the personal computer 23 via the network 12.

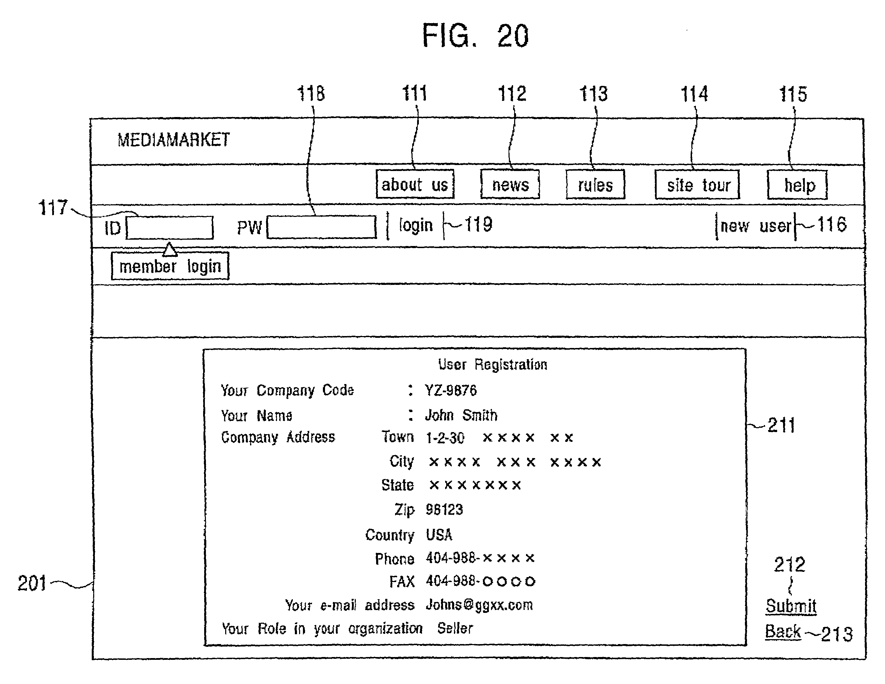

In steep S39, the CPU 81 of the personal computer 23 outputs the received data to the display unit 87, and the display unit 87 displays a user information confirmation screen 201, such as that shown in Fig. 20. On the user information confirmation screen 201, there are provided a user information display area 211 indicating the user information filled in the text boxes 153, a submit button 212 to be selected when registering the data displayed in the user information display area 211, and a back button 213 for returning to the registration screen 141 shown in Fig. 19 when the user corrects the data displayed in the user information display area 211.

The CPU 81 of the personal computer 23 then determines in step S40 whether the submit button 212 has been clicked based on a signal input from the input unit 86. If it is found in step S40 that the submit button 212 has not been clicked, i.e., the back button 213 has been clicked, the process returns to step S36, and the processing of step S36 through S40 is repeated.

If the outcome of step S40 is yes, the process proceeds to step S41 in which the CPU 81 sends a signal indicating that the submit button 212 has been clicked to the content distribution intermediary system 11 via the network 12.

Then, in step S42, the web server 41 sends the data corresponding to a registration completion confirmation screen to the personal computer 23 via the network 12.

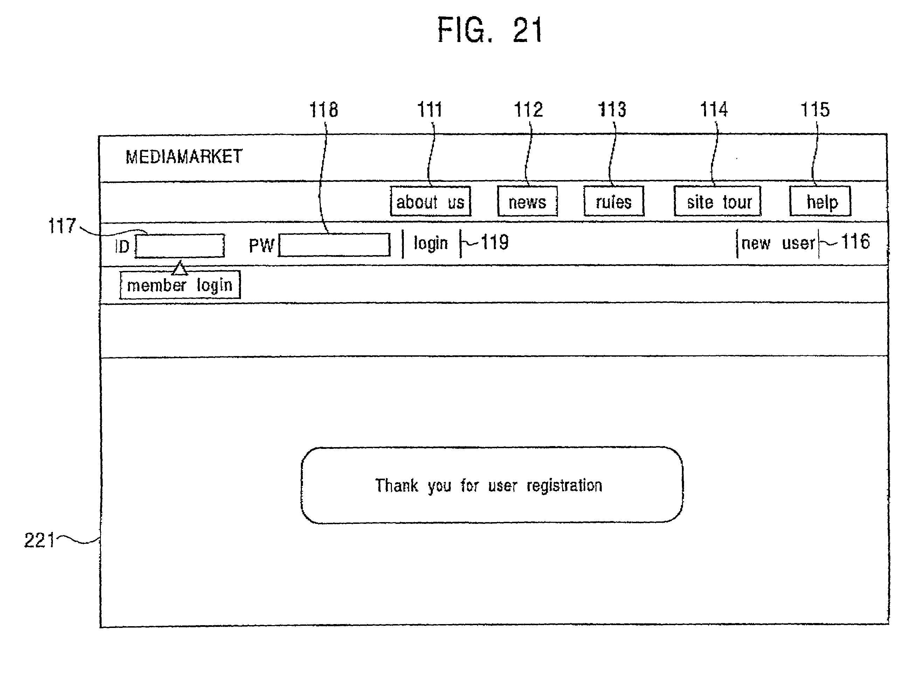

In step S43, the CPU 81 outputs the received data to the display unit 87, and the display unit 87 displays a registration completion confirmation screen 221, such as that shown in Fig. 21. On the registration completion confirmation screen 221, a message indicating the completion of the user registration (for example, "Thank you for user registration") is displayed.

Subsequently, in step S44, the web server 41 generates a control signal for registering the user information (member information) in the member database 63, and outputs it together with the user information to the member management server 43. The member management server 43 outputs the control signal and the user information to the database server 61 via the firewall 37. The database server 61 then outputs the member information to the member database 63 and registers it therein. The registration processing is thus completed.

The user information is registered while being related to the company information. That is, the users 13 are registered in relation to the companies to which the users 13 belong.

For checking whether the registered user 13 is an authenticated user, the content distribution intermediary system 11 may inquire the corresponding company administrator registered by the processing discussed with reference to Fig. 14 about the user information by e-mail. Then, only when it is confirmed by the administrator by, for example, e-mail that the registration of the inquired user 13 is allowed, the content distribution intermediary system 11 may permit the registration processing for the user 13.

By registering the company and the user 13 separately as discussed above, both the seller 1 and the buyer 2 can be registered in the same company. This also enables the sellers 1 within the same company as the administrator to refer to the same screens, and the buyer 2 within the same company as the administrator to refer to the same screens.

When the registered buyer 2 inputs the ID and the password in the text boxes 117 and 118, respectively, on the top page display screen 101, and clicks the login button 119, the web server 41 receives the information of the ID and the password via the network 12, and outputs it to the member management server 43. Then, the member management server 43 outputs the ID and the password to the database server 61. The database server 61 then searches the member database 63 for the corresponding company name, and also determines whether it is the seller 1 or the buyer 2 who has sent the data, and outputs a search result to the web server 41.

If the ID and the password are logged in from the buyer 2, the web server 41 outputs the data corresponding to the buyer's room, i.e., the top page of the buyer 2 of the corresponding company, to the personal computer 22 of the buyer 2 via the network 12. The CPU 81 of the personal computer 22 then outputs the received data to the display unit 87, and the display unit 87 displays a buyer's room 231 shown in Fig. 22.

In the buyer's room 231, in addition to the about-us button 111 through the new user button 116, a display area 241, a your-home button 242, a search button 243, a quotation list button 244, an order place button 245, a company profile update button 246, and an order list button 247 are provided.

In the display area 241, the ID and the company name of the logged-in buyer 2 are displayed. The your-home button 242 is used for jumping to the top page of the corresponding seller 1 or the buyer 2 (in this case, the buyer's room 231). The search button 243 is used for searching for the content.

The quotation list button 244 is used for displaying a list of the quotations from the seller 1. The order place button 245 is a button for ordering the content from the seller 1. The company profile update button 246 is a button for displaying an update screen (not shown) of the company information registered by the processing described with reference to Fig. 14. The order list button 247 is a button for displaying a list of the ordered content.

In the buyer's room 231, a logoff button 248 is also provided. When the buyer 2 clicks the logoff button 248, the display screen returns to the top page display screen 101 shown in Fig. 8.

In the buyer's room 231, the status indicating the content purchase-and-sale situation, including negotiations with the seller 1, which are discussed below, is displayed according to the content or the seller 1. This data is constantly updated.

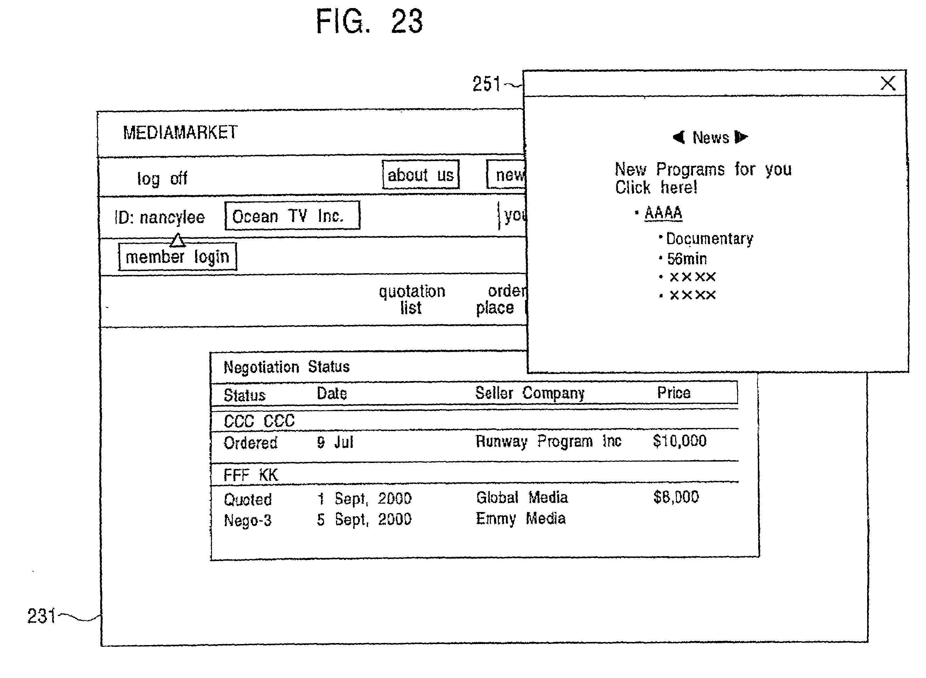

If there is any new information (for example, the introduction of the new content or a transfer request) to the corresponding company (buyer 2), the web server 41 outputs an HTML message together with the data corresponding to the buyer's room 231 to the personal computer 22 via the network 12. Thus, a display window 251 showing the message is displayed, as shown in Fig. 23, together with the buyer's room 231 on the display unit 87 of the personal computer 22.

When the registered seller 1 inputs the ID and the password in the text boxes 117 and 118, respectively, on the top page display screen 101, and clicks the login button 119, the web server 41 receives the information of the ID and the password via the network 12, and outputs it to the member management server 43. The member management server 43 outputs the received ID and password to the database server 61. The database server 61 then searches the member database 63 for the corresponding company name, and also determines whether it is the seller 1 or the buyer 2 who has sent the data, and outputs a search result to the web server 41. The web server 41 outputs the data corresponding to a seller's room shown in Fig. 24, i.e., the top page of the corresponding company (seller 1), to the personal computer 21 of the logged-in seller 1 via the network 12.

In the seller's room 261, in addition to the about-us button 111 through the new user button 116, the your-home button 242, the search button 243, and the logoff button 248, a display area 271, a new title apply button 272, a catalog list button 273, a quotation make list button 274, an order file open button 275, and a company profile update button 276 are provided.

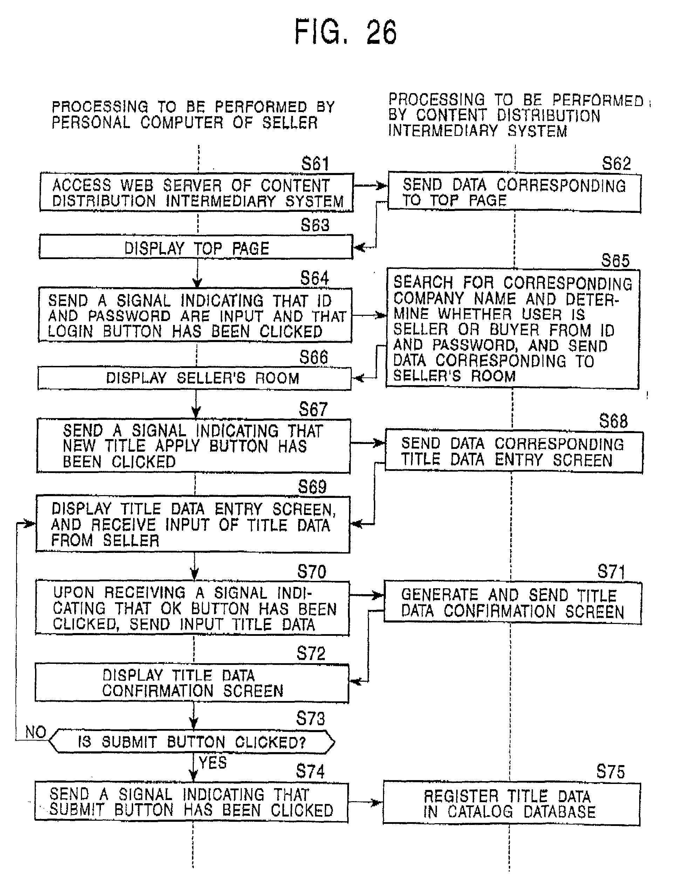

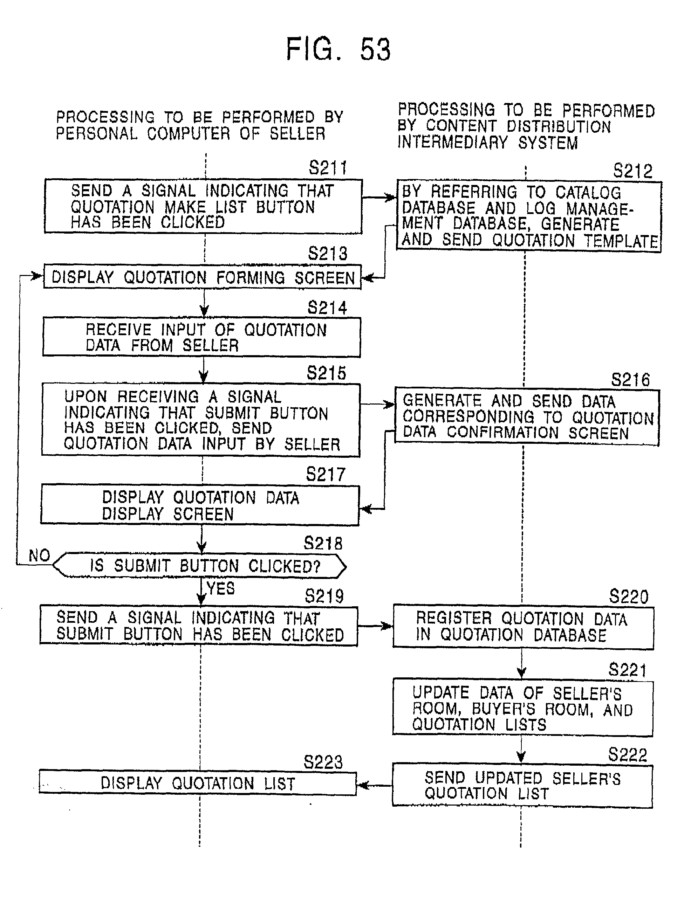

In the display area 271, the ID and the company name of the logged-in seller 1 are displayed. The new title apply button 272 is a button for performing content registration processing, which is discussed below with reference to Fig. 26, by the seller 1. The catalog list button 273 is a button for displaying a list (catalog) of the registered content. The quotation make list button 274 is a button for performing quotation forming processing, which is described with reference to Fig. 53, in response to a buyer's request. The order file open button 275 is a button for displaying a list of the ordered content. The company profile update button 276 is a button for displaying an update screen (not shown) of the company information registered by the processing discussed with reference to Fig. 14.

In the seller's room 261, the status indicating the sale-and-purchase situation of the content, including negotiations with the buyer 1, which are discussed below, is displayed according to the content or the buyer 2. This data is constantly updated.

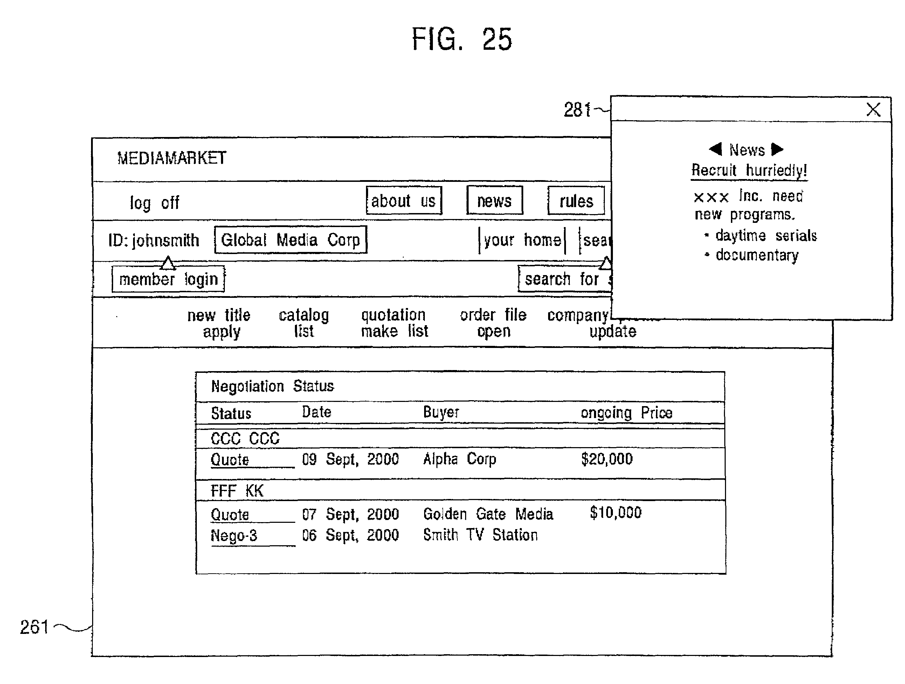

If there is new information (for example, information concerning the program content which is urgently needed by the buyer 2), the web server 41 outputs an HTML message together with the data corresponding to the seller's room 261 to the personal computer 21 via the network 12. Accordingly, a display window 281 is displayed, as shown in Fig. 25, together with the seller's room 261 on the display unit 87 of the personal computer 21.

A description is now given of registration processing for the new content to be performed by the seller 1 with reference to the flow chart of Fig. 26.

In step S61, the CPU 81 of the personal computer 21 of the seller 1 accesses the web server 41 of the content distribution intermediary system 11 via the internal bus 84, the input/output interface 85, the network interface 90, the network 12, and the firewall 31.

Then, in step S62, the web server 41 sends the data corresponding to the top page display screen 101 shown in Fig. 8 to the personal computer 21 of the seller 1 via the network 12.

In step S63, the CPU 81 outputs the received data to the display unit 87 via the internal bus 84 and the input/output interface 85. The display unit 87 displays the top page display screen 101 shown in Fig. 8.

In step S64, upon receiving a signal indicating that the ID and the password are input into the text boxes 117 and 118, respectively, and that the login button 119 has been clicked, the CPU 81 sends the ID and the password to the content distribution intermediary system 11 via the network.

Then, in step S65, the web server 41 outputs the received ID and password to the member management server 43. The member management server 43 generates a control signal for searching the member database 63 for the company name of the corresponding user and for determining whether the user is the seller 1 or the buyer 2 from the ID and the password, and outputs the control signal to the database server 61. The database server 61 then searches the member database 63 for the company name, and also determines whether the user is the seller 1 or the buyer 2. The database server 61 then outputs a search result to the web server 41. Based on the search result, the web server 41 sends the data corresponding to the seller's room 261 of the corresponding company to the personal computer 21 of the seller 1 via the network 12.

Subsequently, in step S66, the CPU 81 outputs the received data to the display unit 87. The display unit 87 displays the seller's room 261 of the corresponding company. In step S67, the CPU 81 sends a signal indicating that the new title apply button 272 has been clicked to the content distribution intermediary system 11 via the network 12.

In step S68, upon receiving the above-described signal, the web server 41 sends the data corresponding to a title data entry screen to the personal computer 21 via the network 12.

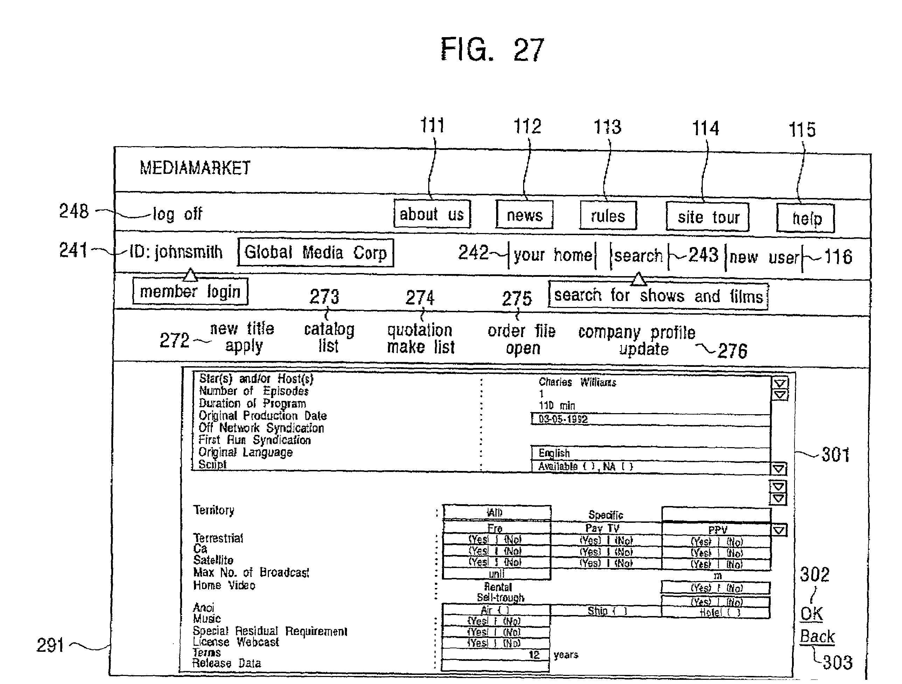

Then, in step S69, the CPU 81 outputs the received data to the display unit 87, and the display unit 87 displays a title data entry screen 291 shown in Fig. 27. That is, the CPU 81 temporarily stores the title data received from the seller 1 by using the input unit 86 in the RAM 83, and also displays the title data on the title data entry screen 291 of the display unit 87. On the title data entry screen 291, there is provided a title data input area 301 for inputting information concerning the content to be registered (for example, the territory in which the content can be broadcast, the type of broadcast means (terrestrial, cable, or satellite), whether the sale or rental of the content as home video is permitted). The above-described information may be selected by inputting yes or no. on the title data entry screen 291, there are also provided an OK button 302 for sending the input data to the content distribution intermediary system 11, and a back button 303 for returning to the previous display screen.

In step S70, the CPU 81 receives a signal indicating that the OK button 302 has been clicked, and sends the title data input in the title data input area 301 in step S69 to the content distribution intermediary system 11 via the network 12.

In step S71, upon receiving the title data input by the seller 1, the web server 41 generates the data corresponding to a title data confirmation screen based on the title data, and sends it to the personal computer 21 of the seller 1 via the network 12.

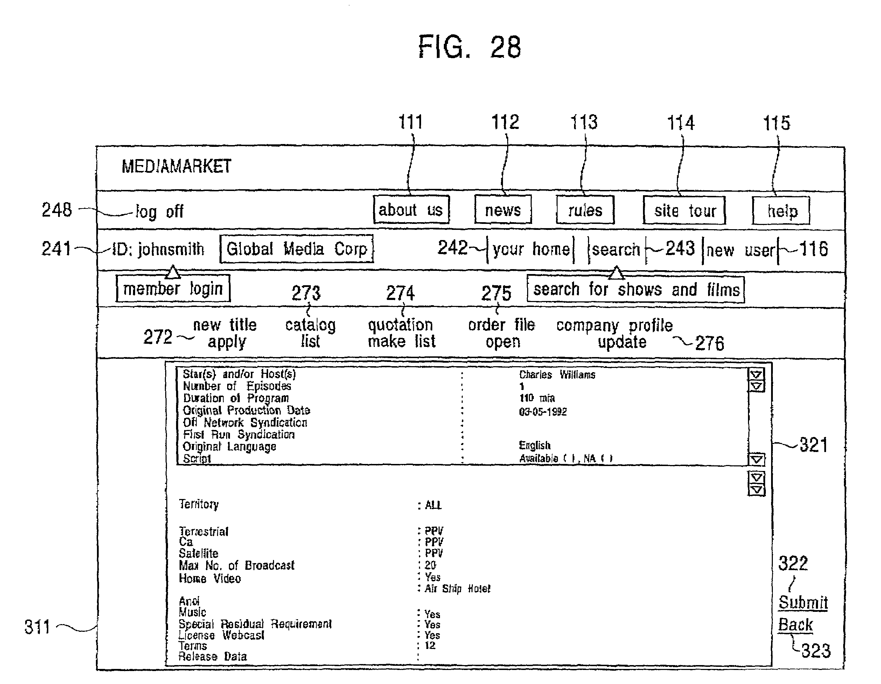

Then, in step S72, the CPU 81 outputs the received data to the display unit 87, and the display unit 87 displays a title data confirmation screen 311 shown in Fig. 28. On the title data confirmation screen 311, there are provided a title data display area 321 in which the title data input in the title data input area 301 on the title data entry screen 291 shown in Fig. 27 is displayed, a submit button 322 for registering the displayed title data after checking the title data confirmation screen 311, and a back button 323 for changing the content to be registered.

The CPU 81 then determines in step S73 whether the submit button 322 has been clicked. If it is found in step S73 that the submit button 322 has not been clicked, i.e., the back button 323 has been clicked, the process returns to step S69, and the processing in steps S69 through S73 is repeated.

If the result of step S73 is yes, the process proceeds to step S74 in which the CPU 81 sends a signal indicating that the submit button 322 has been clicked to the content distribution intermediary system 11 via the network 12.

In step S75, upon receiving the above-described signal, the web server 41 outputs the title data received in step S71 to the catalog management server 44. The catalog management server 44 then outputs the input title data to the database server 61 via the firewall 37, and the database server 61 registers it in the catalog database 64. The processing is then completed.

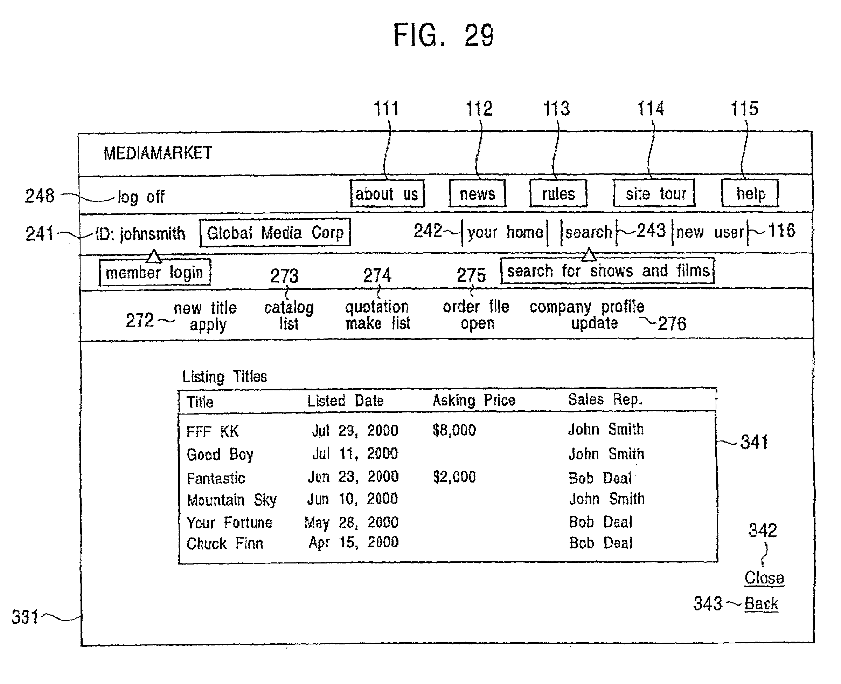

The title data registered in the catalog database 64 is added to a catalog list display screen 331 shown in Fig. 29, which is displayed by clicking the catalog list button 273 in the seller's room 261 shown in Fig. 24. On the catalog list display screen 331, a title list 341, a close button 342, and a back button 343 are provided. When the back button 343 is clicked, the display screen la returned to the previous web page. When the close button 342 is clicked, the display screen is changed to the seller's room 261 shown in Fig. 24 regardless of the previous display screen.

Additionally, video data or image data, which is part of the content or the introduction of the content, may also be registered in the content distribution intermediary system 11. In this case, the video data or the image data may be sent from the personal computer 21 of the seller 1 to the content distribution intermediary system 11 via the network 12. Alternatively, the video data or the image data may be recorded on a recording medium, such as on video tape, a compact disc (CD), or a digital versatile disk (DVD), and the recording medium may be sent to the content distribution intermediary system 11. A registration button for the video data or the image data may be provided on the title data entry screen 291.

If the video data or the image data is registered together with the content in the content distribution intermediary system 11, it is stored in the content database 68 by the content management server 48 such that it can be searched according to the content name. In registering the content, it is not essential that the video data or the image data be registered with the content. In the content database 68, therefore, the registered content does not always have the video data or the image data.

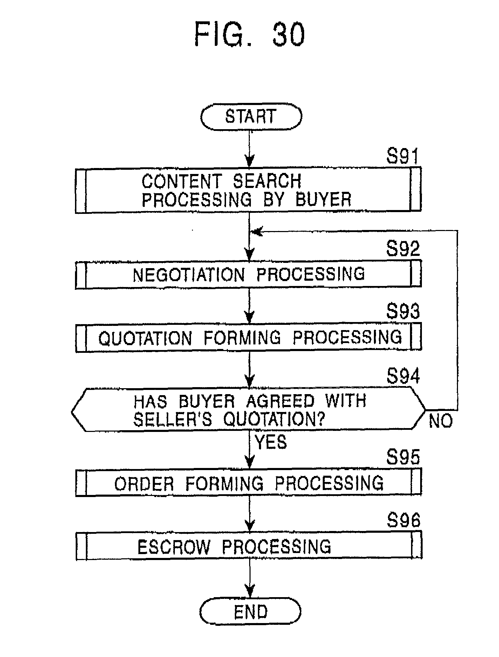

A description is given below, with reference to the flow chart of Fig. 30, of processing for concluding a purchase-and-sale contract concerning part of the broadcasting rights, the licensing rights, and the copyright of the content, or in some cases, all the rights concerning the content, between the seller 1 and the buyer 2.

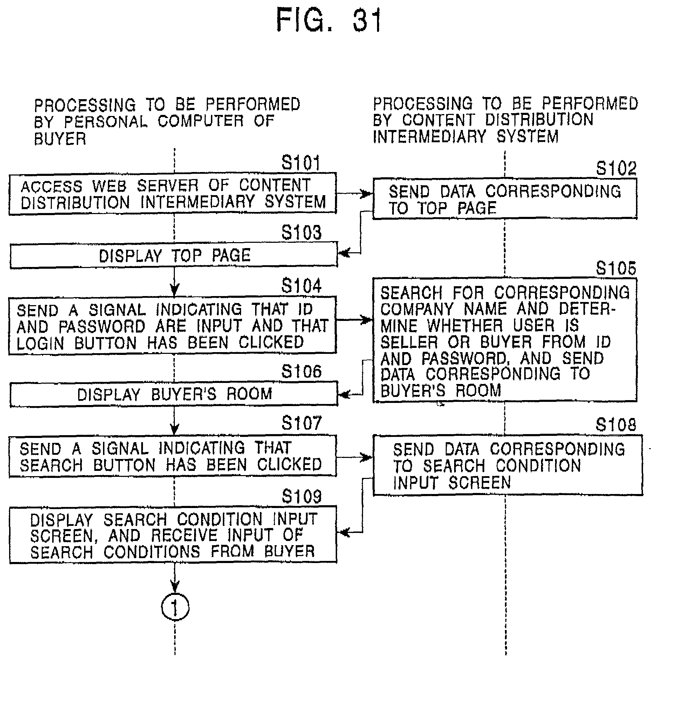

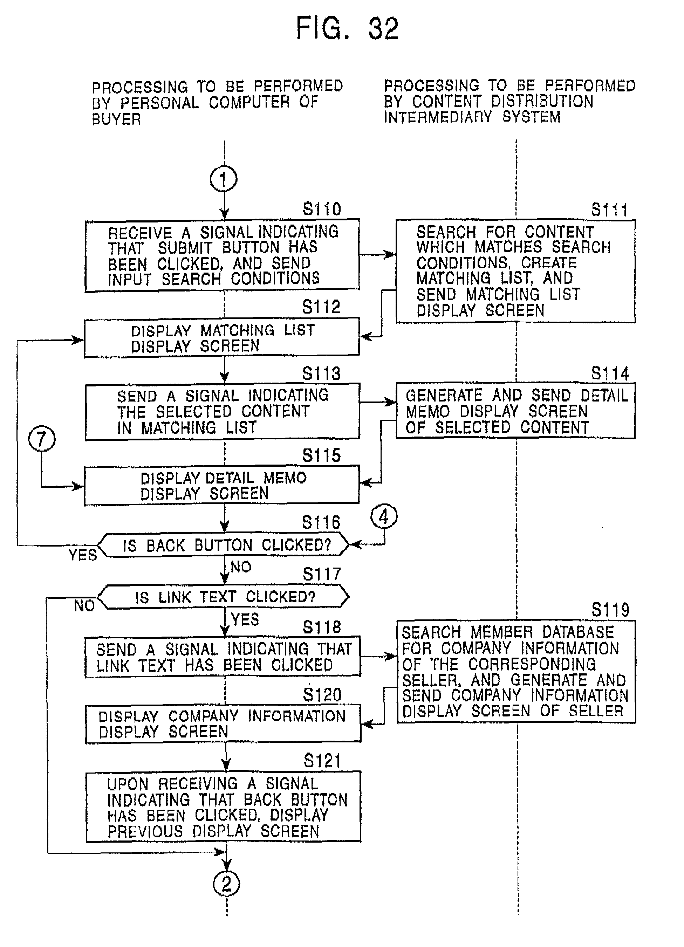

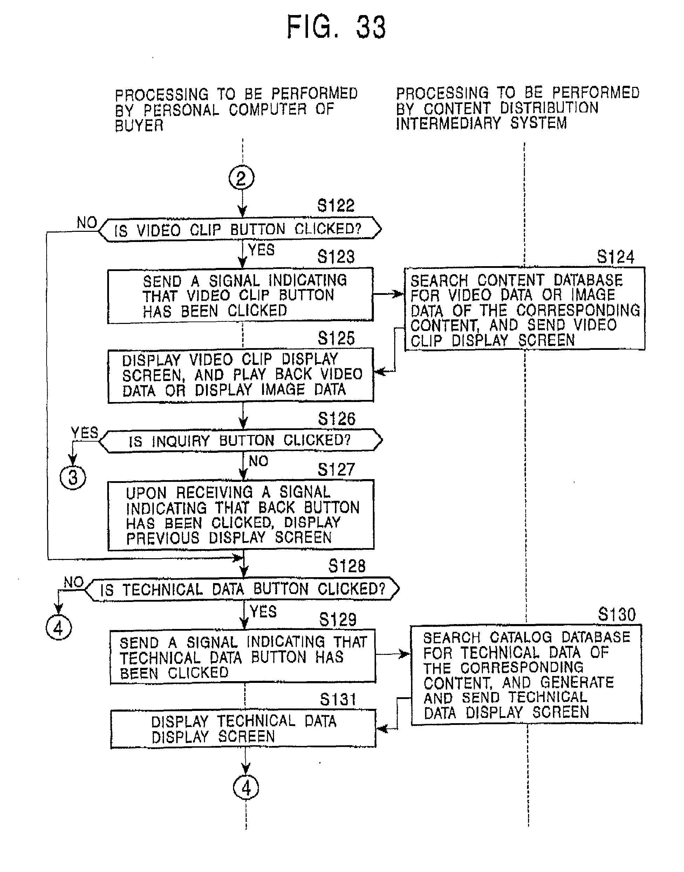

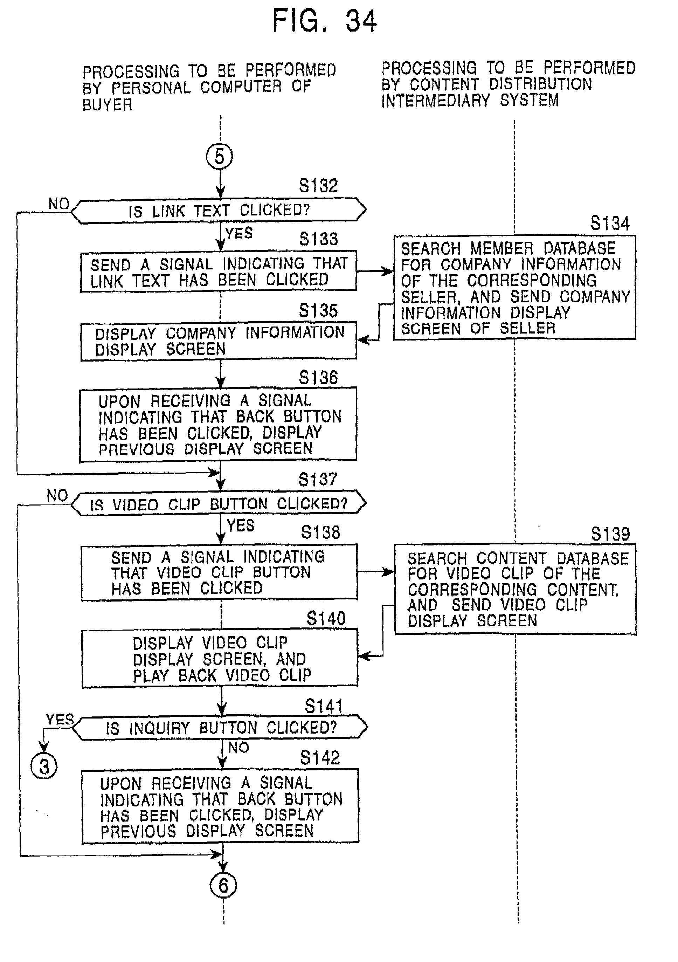

In step S91, content search processing, which is described in detail below with reference to Figs. 31 through 35, is performed by the buyer 2. The buyer 2 searches for desired content from the content registered in the catalog database 64 of the content distribution intermediary system 11 (the content registered by the seller 1 according to the processing described with reference to Fig. 26) by using the personal computer 22. The buyer 2 sends an inquiry about desired content to the seller 1.

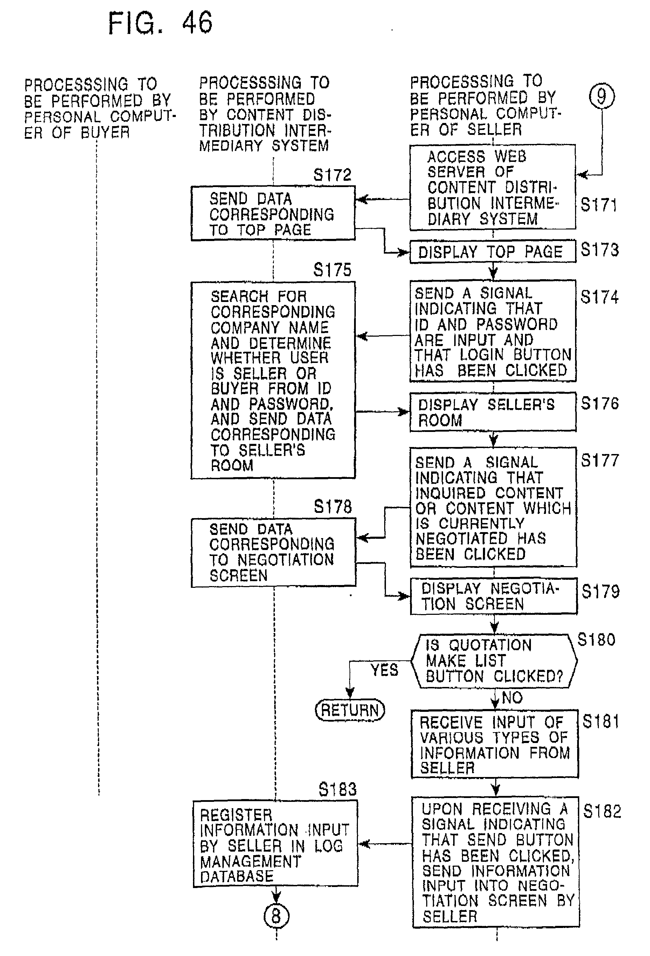

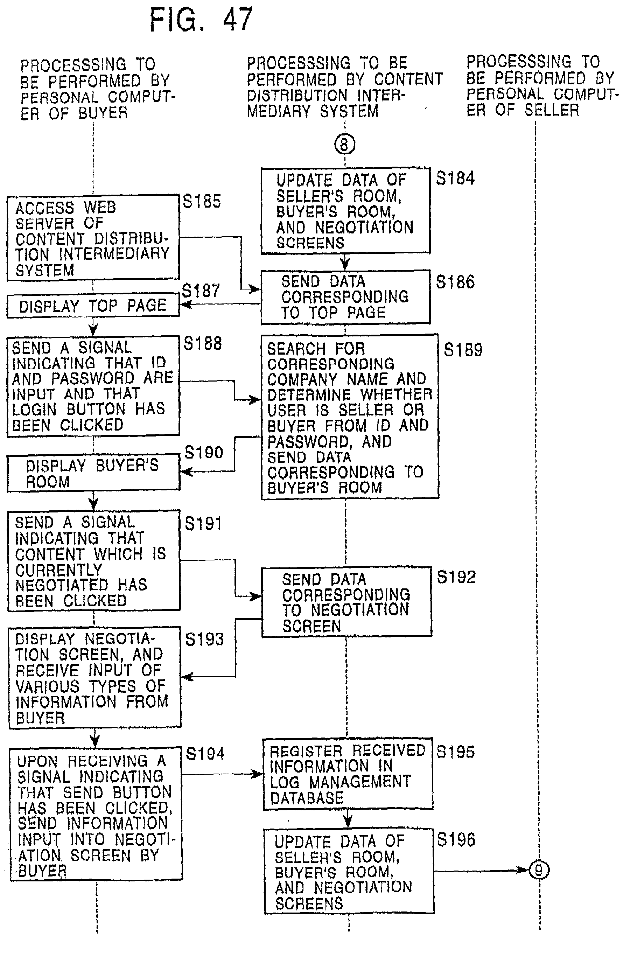

In step S92, negotiation processing, which is discussed in detail below with reference to Figs. 46 and 47, is executed. That is, by utilizing the services provided by the content distribution intermediary system 11, the seller 1 and the buyer 2 conduct negotiations for the content to conclude a purchase-and-sale contract.

In step S93, quotation processing, which is described in detail below with reference to Fig. 53, is executed. The seller 1 forms a quotation based on the result of negotiation processing in step S92 by utilizing the servioes provided by the content distribution intermediary system 11, and sends the quotation to the buyer 2.

The web server 41 then determines in step S94 whether the buyer 2 has agreed with the quotation sent from the seller 1 based on the signal input from the personal computer 22 of the buyer 2 via the network 12. If the outcome of step S94 is no, the process returns to step S92, and the processing in steps S92 through S94 is repeated.

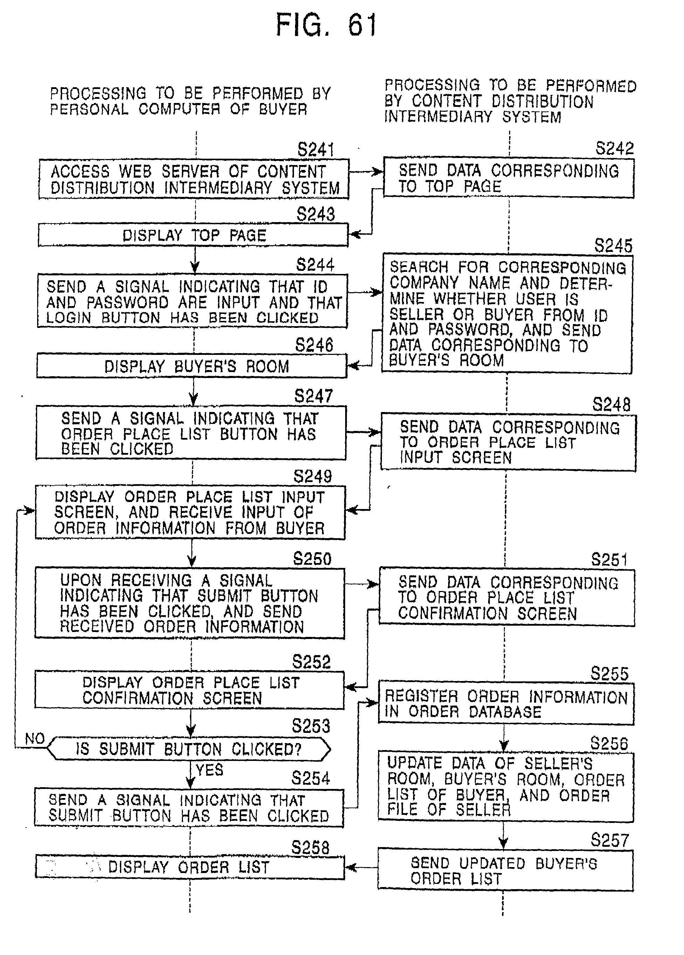

If it is found in step S94 that the buyer 2 has agreed with the quotation sent from the seller 1, the process proceeds to step S95 in which order formation processing, which is discussed in detail below with reference to Fig. 61, is executed. That is, the buyer 2 forms an order and sends it to the seller 1.

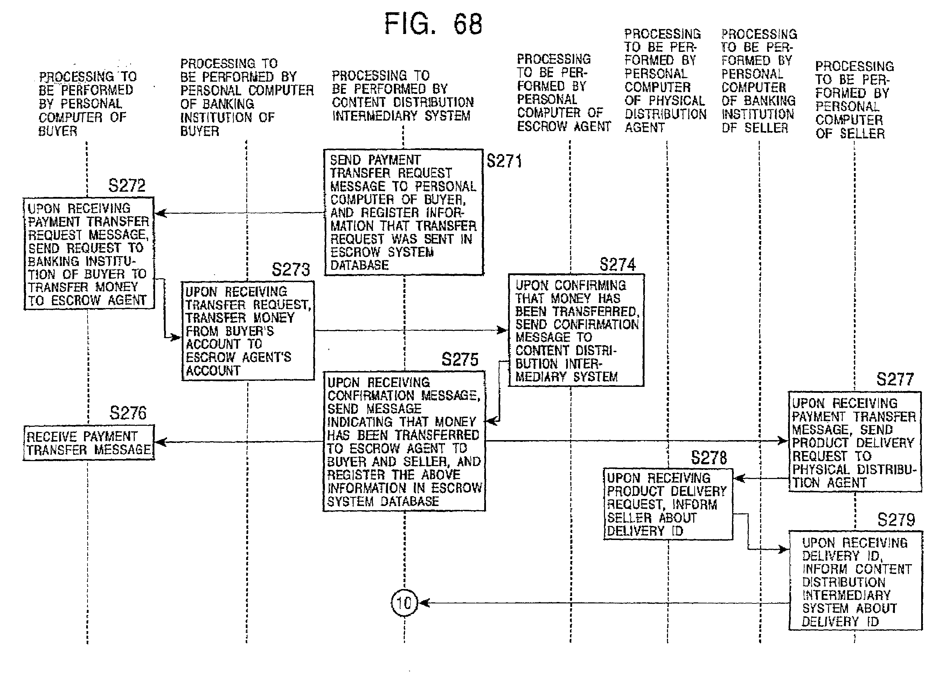

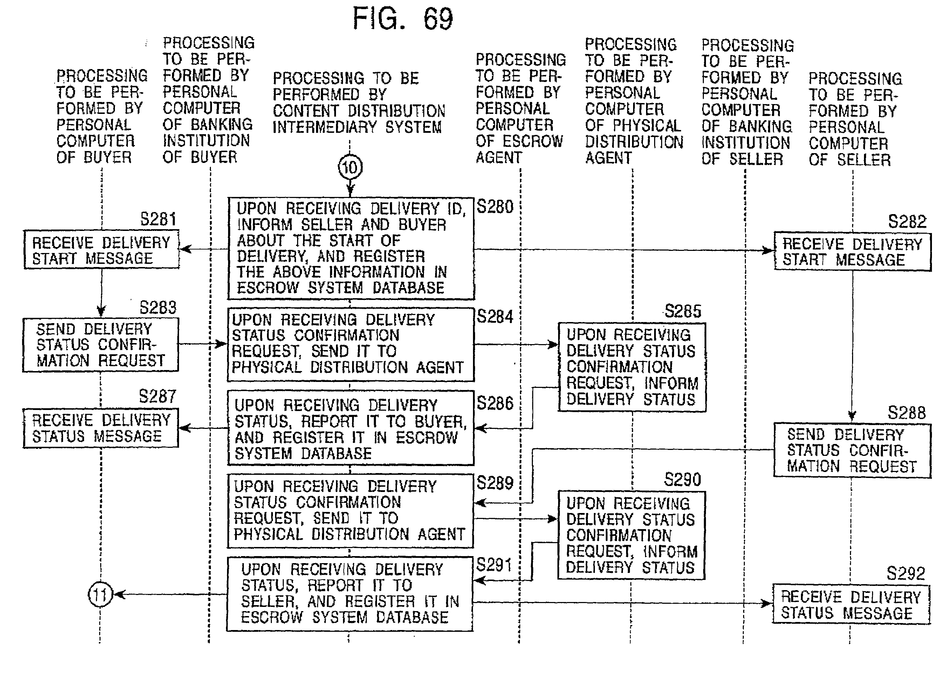

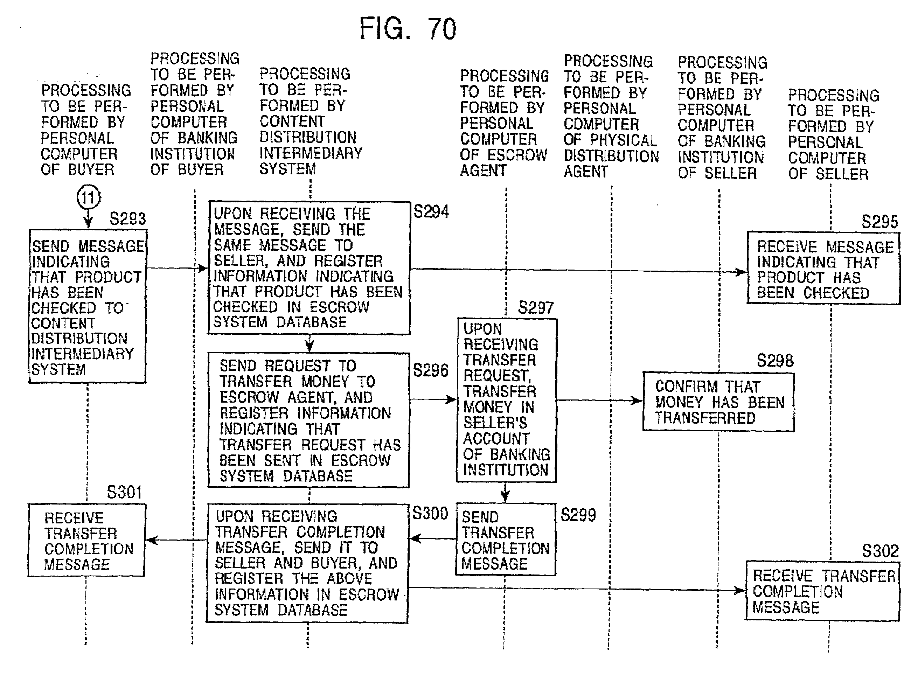

Then, in step S96, escrow processing, which is discussed in detail below with reference to Figs. 68 through 70, is executed. The seller 1 sends a recording medium on which the ordered content data is recorded to the buyer 2 via the physical distribution agent 14 associated with the content distribution intermediary system 11. After checking the content recorded on the recording medium, the buyer 2 may cancel the contract or pay for the content by using the escrow agent 15 associated with the content distribution intermediary system 11. The processing is then completed.

A description is now given, with reference to the flow chart of Figs. 31 through 35, of details of the content search processing executed by the buyer 2 in step S91 of Fig. 30.

In step S101, the CPU 81 of the personal computer 22 of the buyer 2 accesses the web server 41 of the content distribution intermediary system 11 via the internal bus 84, the input/output interface 85, the network interface 90, the network 12, and the firewall 31.

Then, in step S102. the web server 41 sends data corresponding to the top page display screen 101 shown in Fig. 8 to the personal computer 22 of the buyer 2 via the network 12.

In step S103, the CPU 81 of the personal computer 22 outputs the received data to the display unit 87 via the internal bus 84 and the input/output interface 85. The display unit 87 displays the top page display screen 101,

Then, in step S104, the CPU 81 sends a signal indicating that the ID and the password are input into the text boxes 117 and 118, respectively, and that the login button 119 has been clicked to the content distribution intermediary system 11 via the network 12. That is, the ID and the password of the buyer 2 are sent from the personal computer 22 to the content distribution intermediary system 11.

In step S105, the web server 41 outputs the received ID and password to the member management server 43. The member management server 43 then generates from the ID and the password a control signal for searching for the corresponding company name and for determining whether the user is the seller 1 or the buyer 2, and outputs the control signal to the database server 61. The database server 61 then searches for the company name and determines whether the user is the seller 1 or the buyer 2 from the member database 63, and outputs a search result to the web server 41. Based on the search result, the web server 41 sends the data corresponding to the buyer's room 231 of the corresponding company to the personal computer 22 of the buyer 2 via the network 12.

Subsequently, in step S106, the CPU 81 outputs the received data to the display unit 87, and the display unit 87 displays the buyer's room 231 of the corresponding company.

In step S107, the CPU 81 sends a signal indicating that the search button 243 has been clicked to the content distribution intermediary system 11 via the network 12.

Then, in step S108, upon receiving the above-described signal, the web server 41 sends data corresponding to a search condition input screen to the personal computer 22 via the network 12.

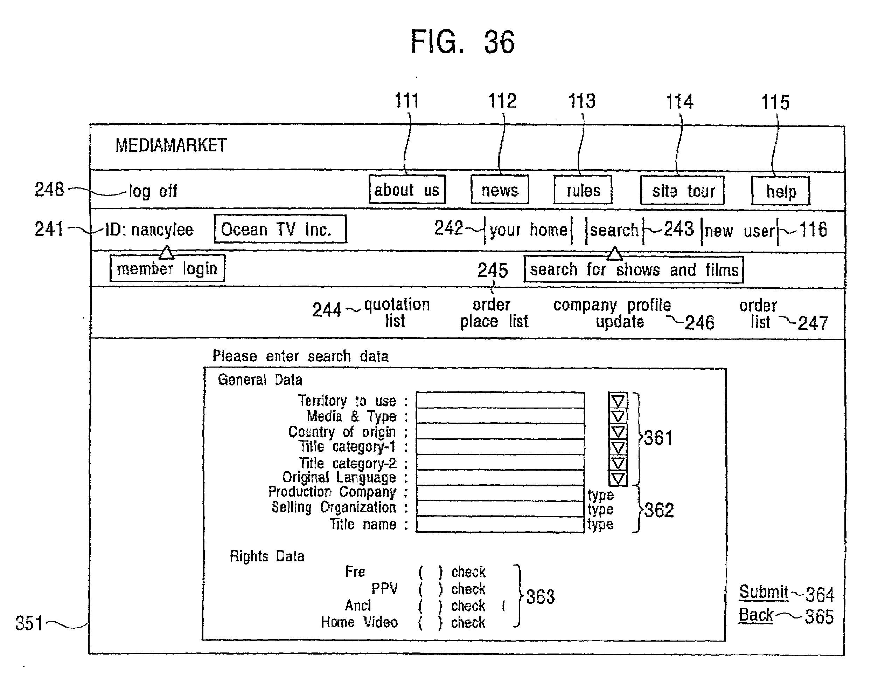

In step S109, the CPU 81 outputs the received data to the display unit 87, and the display unit 87 displays a search condition input screen 351 shown in Fig. 36, which enables the buyer 2 to input search conditions. On the search condition input screen 351, there are provided drop-down list boxes 361 for selecting the broadcast territory and the content category, text boxes 362 for inputting the company name which has created the content and the content title, check boxes 363 for inputting information concerning the rights, a submit button 364 for sending the input information to the content distribution intermediary system 11, and a back button 365 for returning to the previous display screen.

The buyer 2 is able to search the content by inputting the required data in the drop-down list boxes 361 through the check boxes 363, and by clicking the submit button 364.

In step S110, upon receiving a signal indicating that the submit button 364 has been clicked, the CPU 81 of the personal computer 22 sends the search conditions input in step S109 to the content distribution intermediary system 11 via the network 12.

Subsequently, in step S112, the web server 41 outputs the received search conditions to the catalog management server 44. The catalog management server 44 generates a control signal for searching the catalog database 64 for the data concerning the content which matches the input search conditions, and outputs the control signal to the database server 61. The database server 61 searches the catalog database 64 for the content which matches the search conditions, and outputs a search result to the web server 41. Based on the search result, the web server 41 creates a matching list, and sends data corresponding to a matching list display screen to the personal computer 22 via the network 12.

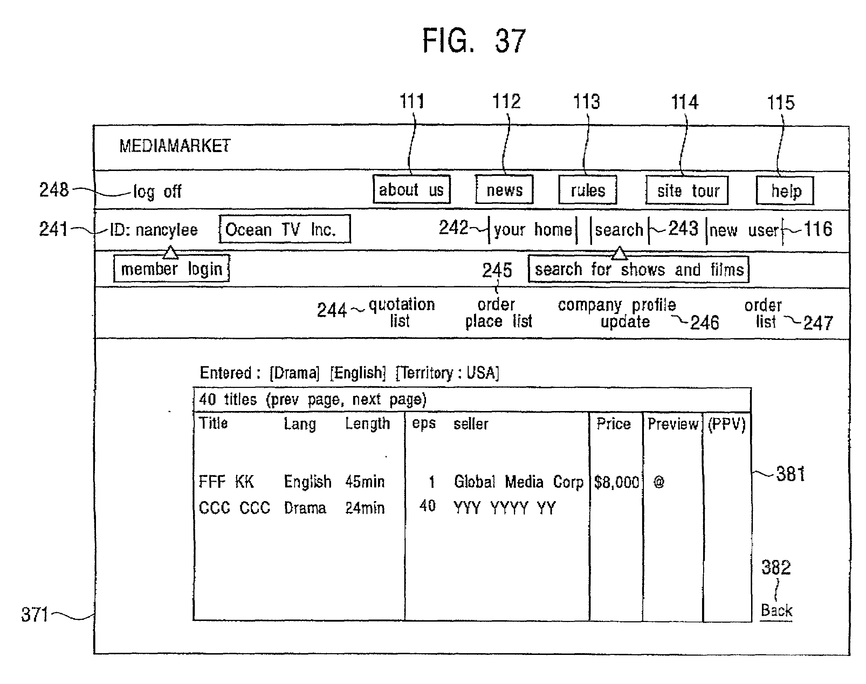

In step S112, the CPU 81 outputs the received data to the display unit 87, and the display unit 87 displays a matching list display screen 371 shown in Fig. 37. On the matching list display screen 371, there are provided a matching list 381 for displaying the content which matches the search conditions input by the buyer 2, and a back button 382 for returning to the previous display screen. The buyer 2 clicks the content name which he/she wishes to view more details among the content names displayed in the matching list 381. Then, a detail memo display screen 391 shown in Fig. 38 indicating the details of the corresponding content can be displayed.

In step S113, the CPU 81 of the personal computer 22 sends a signal indicating the selected content from the matching list 381 to the content distribution intermediary system 11 via the network 12.

Then, in step S114, the web server 41 receives the above-described signal, and outputs it to the catalog management server 44 and the content management server 48. The catalog management server 44 then generates a control signal for searching the catalog database 64 for the data of the corresponding content, and outputs it to the database server 61. The database server 61 searches the catalog database 64 for the data of the corresponding content, and outputs it to the web server 41.

Meanwhile, the content management server 48 generates a control signal for searching the content database 68 for the video data or the image data of the corresponding content, and outputs it to the database server 61. If the video data or the image data is found from the content database 68, the database server 61 outputs it to the web server 41.

In this case, the web server 41 generates data corresponding to the detail memo display screen of the selected content based on the content data and the video data or the image data, and sends the generated data to the personal computer 22 via the network 12.

In step S115, the CPU 81 of the personal computer 22 outputs the received data to the display unit 87, and the display unit 87 displays the detail memo display screen 391 shown in Fig. 38. On the detail memo display screen 391, there are provided a detail memo display area 401 for indicating the information concerning the corresponding content, a technical data button 402 for displaying technical data of the corresponding content, and a back button 403 for returning to the previous display screen.

If not only the information (text) of the corresponding content, but also the image data is registered in the content database 68, the image data is displayed in the image display area 412 of the detail memo display area 401. If the video data is also registered in the content database 68, a video clip button 413 for displaying a video clip is also indicated. By clicking a link text 411 indicating the company name of the seller 1 displayed in the detail memo display area 401, the company information of the seller 1 which sells the content can be displayed.

The CPU 81 then determines in step S116 whether the back button 403 has been clicked based on a signal input from the input unit 86. If the outcome of step S403 is yes, the process returns to step S112, and the processing in steps S112 through S116 is repeated.

If the result of step S116 is no, the process proceeds to step S117 in which the CPU 81 determines whether the link text 411 has been clicked. If the outcome of step S117 is no, the process proceeds to step S122.

If it is found in step S117 that the link text 411 has been clicked, the process proceeds to step S118 in which the CPU 81 sends a signal indicating that the link text 411 has been clicked to the content distribution intermediary system 11 via the network 12.

In step S119, upon receiving the above-described signal, the web server 41 outputs it to the member management server 43. The member management server 43 then generates a control signal for searching for data concerning the seller 1 designated by the link text 411, and outputs it to the database server 61. The database server 61 then searches the member database 63 for the company information of the corresponding seller 1, and outputs it to web server 41. Then, the web server 41 generates data corresponding to a company information display screen of the seller 1, and sends it to the personal computer 22 via the network 12.

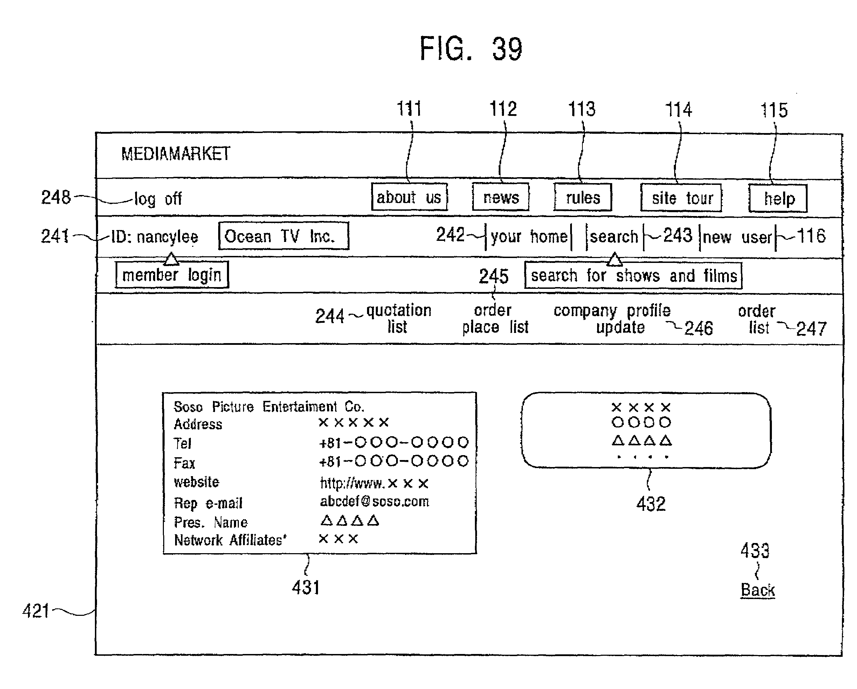

In step S120, the CPU 81 outputs the received data to the display unit 87, and the display unit 87 displays a company information display screen 421 shown in Fig. 39. On the company information display screen 421, there are provided a company information display area 431 for displaying the company information of the corresponding seller 1, a content title display area 432 for displaying a list of content names registered by the corresponding seller 1. and a back button 433 for returning to the previous display screen.

The content names displayed in the content title display area 432 may be linked to the detail memo display screen 391 indicating detailed data. Accordingly, by clicking a desired content title of the buyer 2, the detail memo display screen 391 corresponding to the selected content can be displayed.

In step S121, upon receiving a signal indicating that the back button 433 has been clicked, the CPU 81 displays the previous display screen (in this case, the detail memo display screen 391) on the display unit 87.

If it is found in step S117 that the link text 411 has not been clicked, or after step S121, the process proceeds to step S122. In step S122, the CPU 81 determines whether the video clip button 413 on the detail memo display screen 391 has been clicked based on the signal input from the input unit 86. If the outcome of step S122 is no, the process proceeds to step S128.

If it is found in step S122 that the video clip button 413 has been clicked, the process proceeds to step S123. In step S123, the CPU 81 sends a signal indicating that the video clip button 413 has been clicked to the content distribution intermediary system 11 via the network 12.

In step S123, upon receiving the above-mentioned signal, the web server 41 outputs it to the content management server 48. The content management server 48 generates a control signal for searching for the video data or the image data of the corresponding content, and outputs the control signal to the database server 61. The database server 61 then searches the content database 68 for the video data or the image data of the corresponding content, and outputs the data to the web server 41. The web server 41 then generates data corresponding to a video clip display screen, and sends it to the personal computer 22 via the network 12.

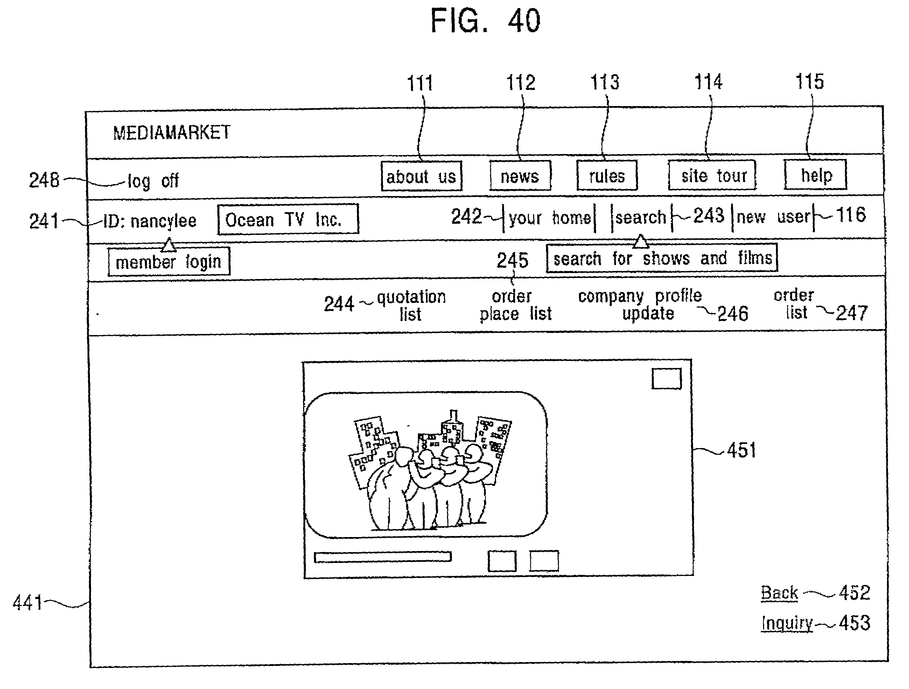

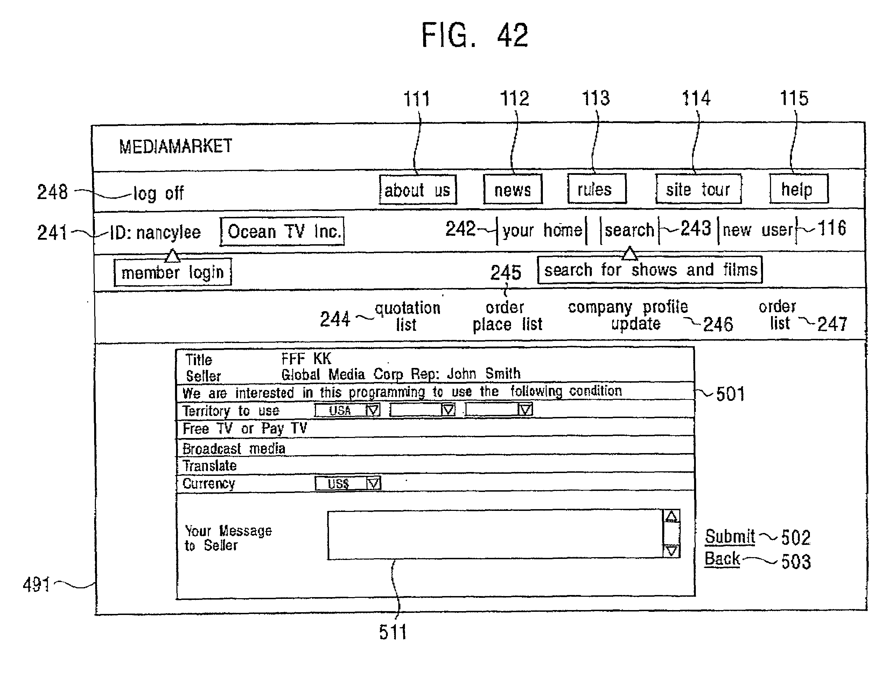

In step S125, the CPU 81 outputs the received data to the display unit 87. The display unit 87 displays a video clip display screen 441 shown in Fig. 40, and the video data is played back or the image data is displayed. On the video clip display screen 441, there are provided a display area 451 for playing back the video data or displaying the image data, a back button 452 for returning to the previous screen, and an inquiry button 453 for making an inquiry about this content. When the inquiry button 453 is pressed, the screen is changed to an inquiry input screen (Fig. 42).

The CPU 81 determines in step S126 whether the inquiry button 453 has been clicked based on the signal input from the input unit 86. If the result of step S126 is yes, the process proceeds to step S145.

If it is found in step S126 that the inquiry button 453 has not been clicked, it means that the back button 452 has been clicked. The process then proceeds to step S127. In step S127, upon receiving a signal indicating that the back button 452 has been clicked, the CPU 81 displays the previous display screen (in this case, the detail memo display screen 391) on the display unit 87.

The CPU 81 then determines in step S128 whether the technical data button 402 on the detail memo display screen 391 has been clicked based on the signal input from the input unit 86. If the outcome of step S128 is no, the process returns to step S116, and the processing in step S116 and the subsequent steps is repeated.

If it is found in step S128 that the technical data button 402 has been clicked, the process proceeds to step S129 in which the CPU 81 sends a signal indicating that the technical data button 402 has been clicked to the content distribution intermediary system 11 via the network 12.

In step S130, upon receiving the above-described signal, the web server 41 outputs it to the catalog management server 44, The catalog management server 44 then generates a control signal for searching for the technical data of the corresponding content, and outputs the control signal to the database server 61. The database server 61 searches the catalog database 64 for the technical data of the corresponding content, and outputs the found data to the web server 41. The web server 41 then generates data corresponding to a technical data display screen, and sends it to the personal computer 22 via the network 12.

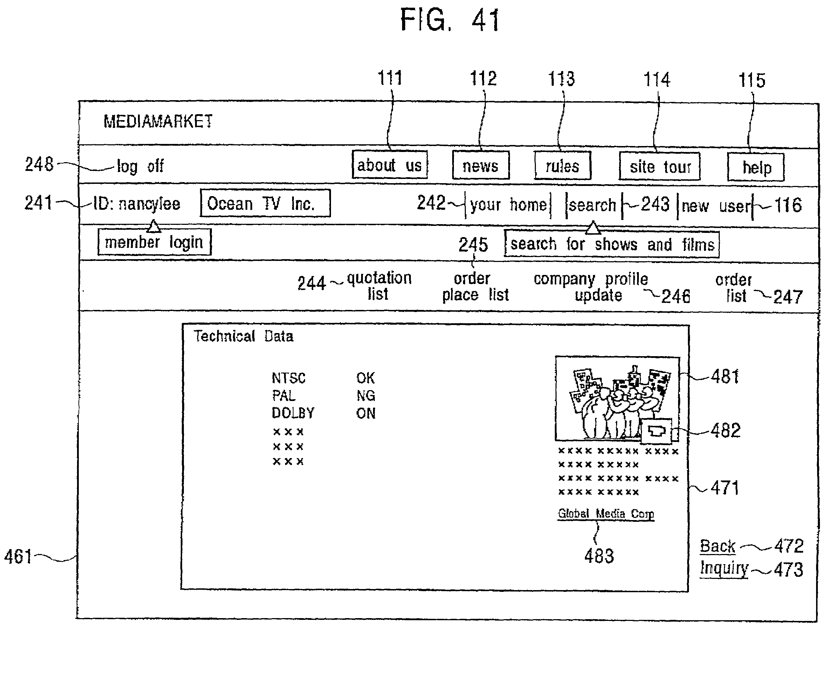

In step S131, the CPU 81 outputs the received data to the display unit 87, and the display unit 87 displays a technical data display screen 461 shown in Fig. 41. on the technical data display screen 461, there are provided a technical data display area 471 for displaying the technical data, a back button 472 for returning to the previous screen, and an inquiry button 473 for making an inquiry about this content. When the inquiry button 473 is pressed, the screen is changed to the inquiry input screen (Fig. 42). In the technical data display area 471, the technical information about the content data, such as whether the corresponding content is compatible with the National Television System Committee (NTSC) system or the Phase Alternating Line (PAL) system, is indicated.

On the technical data display screen 461, not only the information (text data) of the corresponding content, but also image data, if it is registered in the content database 68, is displayed on an image display area 481. If video data is registered in the content database 68, a video clip button 482 for displaying the video clip display screen 441 shown in Fig. 40 is also provided. When the buyer 2 clicks a link text 483 indicating the company name of the seller 1 displayed in the technical data display area 471, the company information display screen 421 shown in Fig. 39 can be displayed.

In step S132, the CPU 81 of the personal computer 22 determines whether the link text 483 has been clicked based on the signal input from the input unit 86. If the outcome of step S132 is no, the process proceeds to step S137.

If it is found in step S132 that the link text 483 has been clicked, processes similar to those in steps S118 through S121 are performed in steps S133 through S136, respectively.

If it is found in step S132 that the link text 483 has not been clicked, or after step S136, the process proceeds to step S137 in which the CPU 81 determines whether the video clip button 482 has been clicked. If the result of step S137 is no, the process proceeds to step S143.

If the outcome of step S137 is yes, processes similar to those in steps S123 through S127 are performed in steps S138 through S142, respectively.

If it is found in step S137 that the video clip button 482 has not been clicked, or after step S142, the process proceeds to step S143 in which the CPU 81 determines whether the inquiry button 473 has been clicked.

If it is found in step S143 that the inquiry button 473 has not been clicked, it means that the back button 472 has been clicked. Thus, in step S144, the CPU 81 receives a signal indicating that the back button 472 has been clicked. The process then returns to step S115, and the processing in step S115 and the subsequent steps is repeated.

If it is found in step S126, S141, or S143 that the inquiry button 453 or 473 has been clicked, the process proceeds to step S145. In step S145, the CPU 81 sends a signal indicating that the corresponding inquiry button has been clicked to the content distribution intermediary system 11 via the network 12.

Then, in step S146, upon receiving the above-described signal, the web server 41 searches the catalog database 64 for the information of the corresponding content, and generates data corresponding to the inquiry input screen containing the found information, and sends it to the personal computer 22 via the network 12.

In step S147, the CPU 81 outputs the received data to the display unit 87, and the display unit 87 displays an inquiry input screen 491 shown in Fig. 42. On the inquiry input screen 491, there are provided an inquiry display/input area 501, a submit button 502 for sending the data input in the inquiry display/input area 501 to the content distribution intermediary system 11, and a back button 503 for returning to the previous screen. A text box 511 for entering a message for the seller 1 is also provided in the inquiry display/input area 501,

In this case, in the inquiry display/input area 501, the data concerning the content to be negotiated is automatically shown. By referring to this data, the buyer 2 is able to easily make an inquiry to the seller 1.

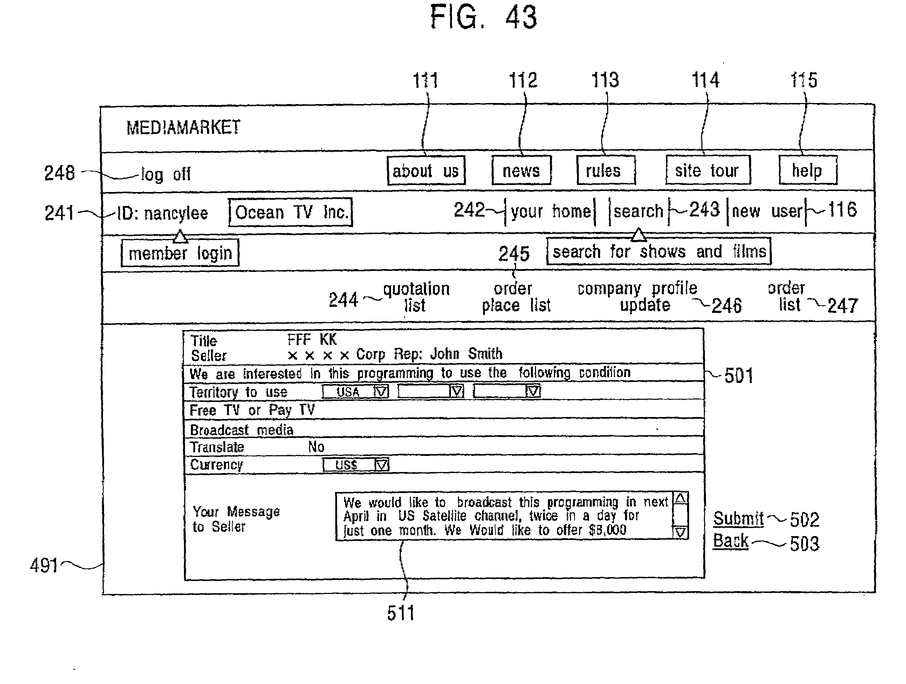

In step S148, the CPU 81 receives various types of information input by using the input unit 86, such as a message from the buyer 2 to the seller 1 input into the text box 511. An example of the inquiry input screen 491 with a message input into the text box 511 is shown in Fig. 43.

In step S149, upon receiving from the input unit 86 a signal indicating that the submit button 502 has been clicked, the CPU 81 sends the information input in the inquiry display/input area 501 to the content distribution intermediary system 11 via the network 12.

Then, in step S150, the web server 41 sends the received information to the negotiation system management server 45. Based on the input information, the negotiation system management server 45 generates a control signal for updating the status of the corresponding buyer 2 and the seller 1, who is the supplier of the selected content, registered in the log management database 65, and outputs the control signal to the database server 61 via the firewall 43. The database server 61 then updates the status of the buyer 2 and the seller 1 registered in the log management database 65. That is, a new inquiry about the content "FFF KK" is mirrored in the negotiation Information registered in the log management database 65.

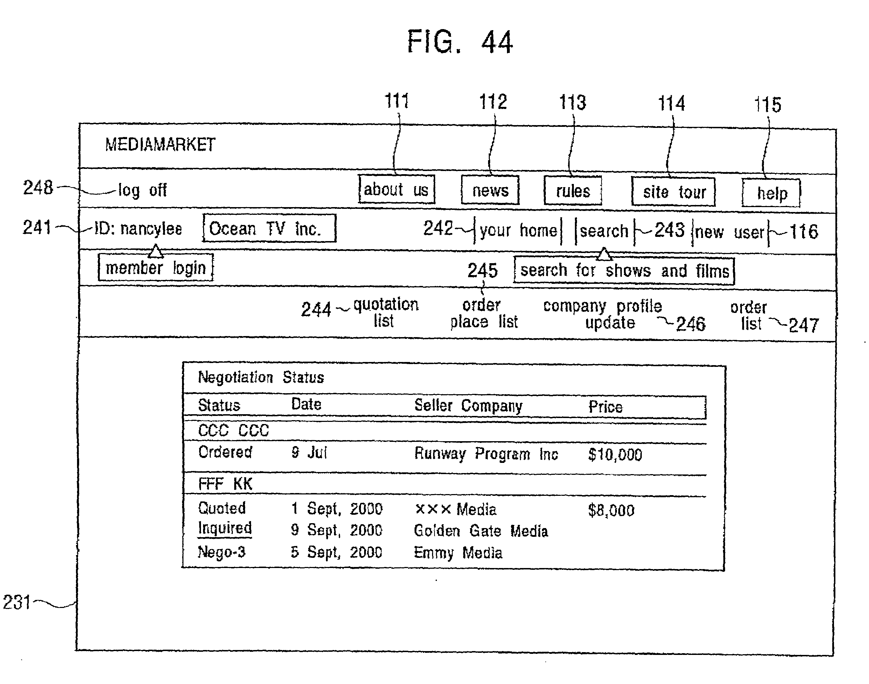

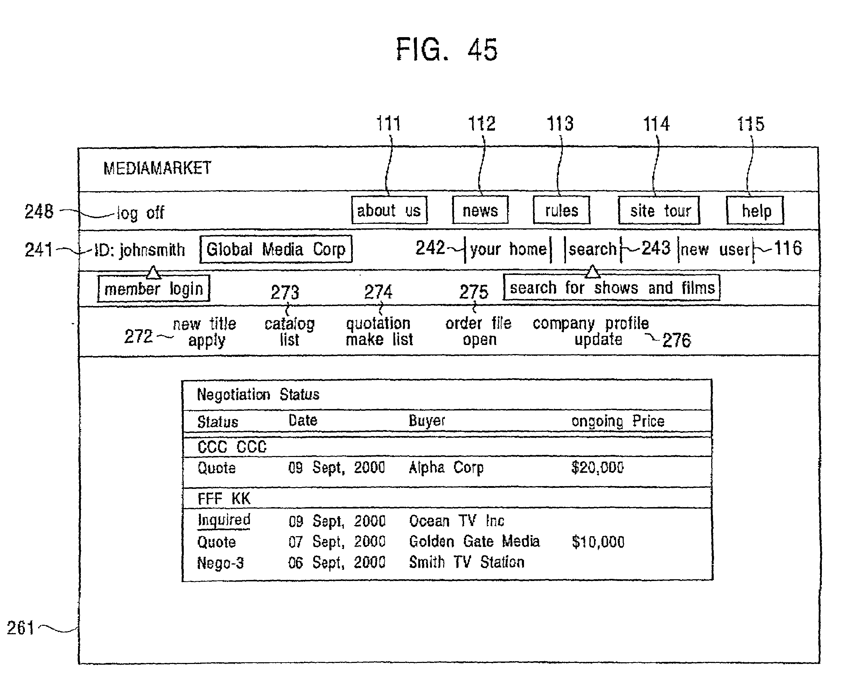

In step S151, the web server 41 updates the data of the buyer's room 231 and the data of the seller's room 261 so as to mirror the updating of the log management database 65. The updated buyer's room 231 and the updated seller's room 261 are shown in Figs. 44 and 45, respectively.

In the updated buyer's room 231, a new inquiry about the content "FFF KK" is mirrored. In the updated seller's room 261, the new inquiry about the content "FFF KK" from the buyer 2 is mirrored. By clicking the corresponding status, the seller 1 or the buyer 2 is able to proceed to negotiation processing, which is discussed below.

In step S152, the web server 41 sends the updated data of the buyer's room 231 to the personal computer 22 via the network 12.

In step S153, the CPU 81 outputs the received data to the display unit 87, and the display unit 87 displays the updated buyer's room 231. Then, the process proceeds to step S92 shown in Fig. 30. The buyer 2 is able to confirm that the new inquiry about the content "FFF KK" has been registered by referring to the buyer's room 231 shown in Fig. 44.

Negotiation processing executed in step S92 of Fig. 30 is discussed below with reference to the flow chart of Figs. 46 and 47.

In steps S171 through S176, processes similar to those in steps S61 through S66, respectively, of Fig. 26 are performed.

In step S177, the CPU 81 of the personal computer 21 or the seller 1 receives, from the input unit 86 via the input/output interface 85 and the internal bus 84, a signal indicating that the link text of the inquired content or the content which is currently negotiated in the negotiation status of the seller's room 261 shown in Fig. 45 has been clicked. Then, the CPU 81 sends the above-mentioned signal to the content distribution intermediary system 11 via the internal bus 84, the input/output interface 85, network interface 90, the network 12, and the firewall 31.

In step S178, the web server 41 of the content distribution intermediary system 11 sends data corresponding to a negotiation screen of the selected content to the personal computer 21 via the network 12.

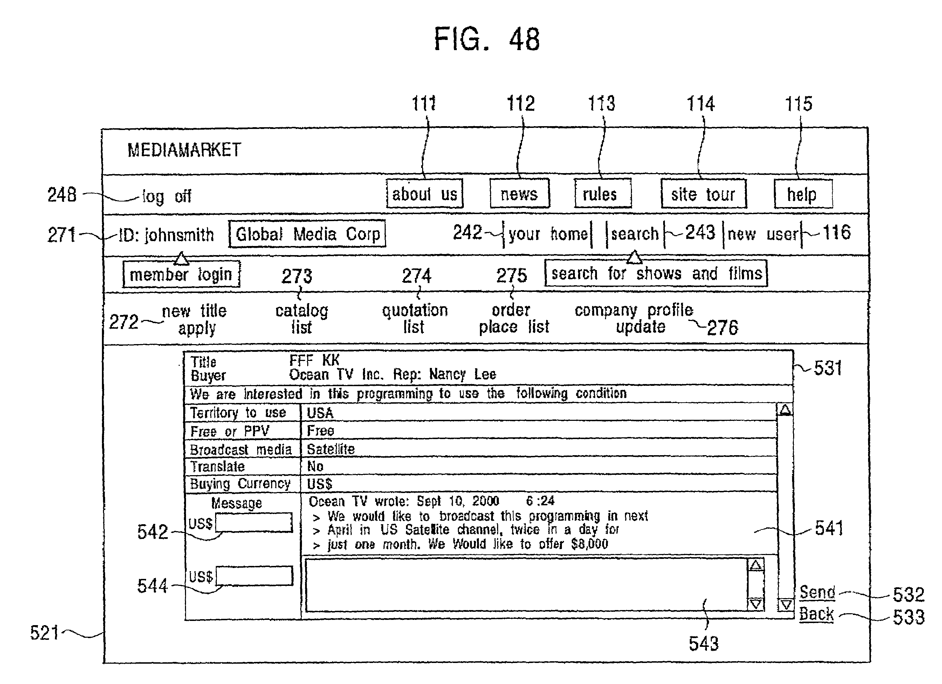

Then, in step S179, the CPU 81 of the personal computer 21 outputs the received data to the display unit 87, and the display unit 87 displays a negotiation screen 521 shown in Fig. 48. On the negotiation screen 521, there are provided a negotiation information/input area 531, a send button 532 for registering a message and price information input into the negotiation information display/input area 531 in the content distribution intermediary system 11 (i.e., the send button 532 being for sending the information to the corresponding buyer 2), and a back button 533 for returning to the previous screen.

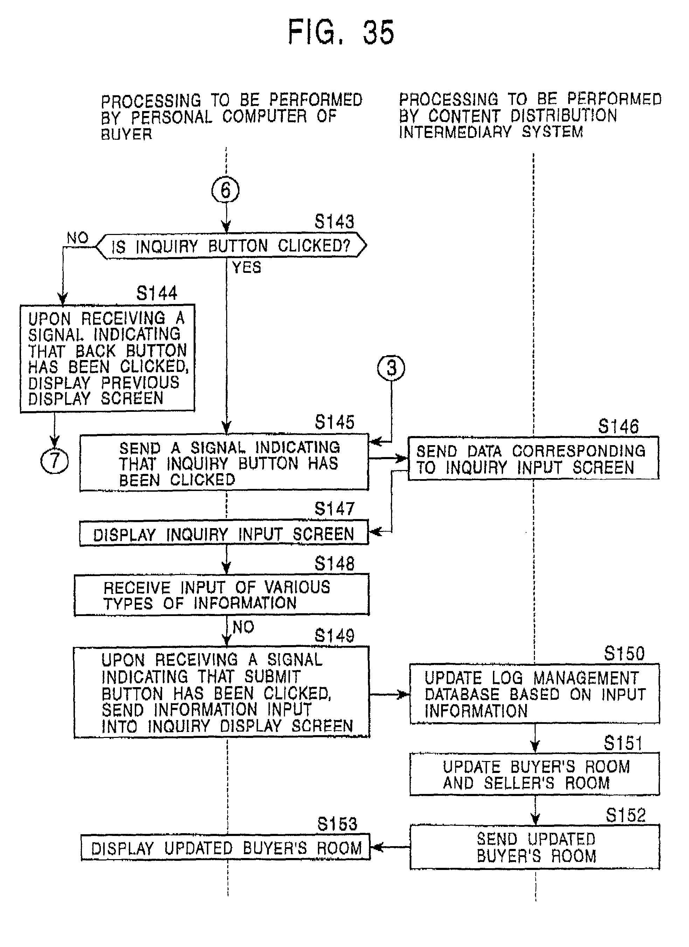

In a message display portion 541 and a price display portion 542 of the negotiation information display/input area 531, the inquiry input by the buyer 2 in step S148 of Fig. 35 or negotiation information input by the buyer 2 or the seller 1 according to processing, which is discussed below, is displayed. There are also provided a text box 543 for inputting a response to the inquiry from the buyer 2, and a text box 544 for inputting a desired price.

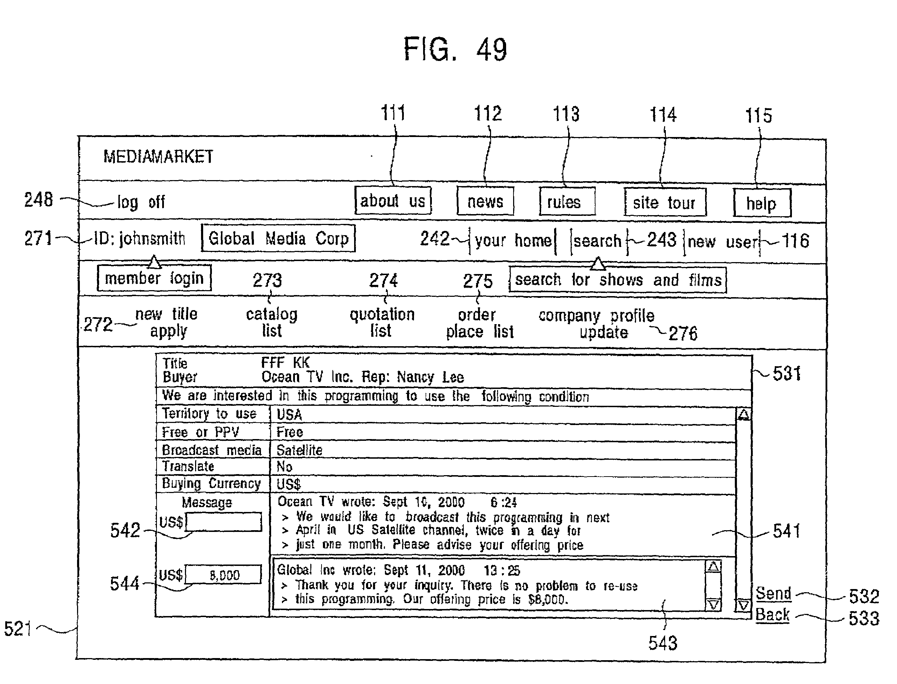

If a quotation request from the buyer 2 is displayed in the message display portion 541 on the negotiation screen 521, the seller 1 clicks the quotation make list button 274 to perform quotation forming processing, which is described below. If there is no quotation request in the message display portion 541, i.e., if the buyer 2 has decided to continue negotiations concerning the rights of the content, as shown in Fig. 49, the seller 1 inputs a response to the inquiry from the buyer 2 in the text box 543, and also inputs a desired price in the text box 544 as required. Then, the seller 1 clicks the send button 532.

In step S180, the CPU 81 of the personal computer 21 determines based on the signal input from the input unit 86 whether the quotation make list button 274 has been clicked. If the outcome of step S180 is yes, the process proceeds to step S93 of Fig. 30.

If the result of step S180 is no, the process proceeds to step S181. In step S181, upon receiving the information input by the seller 1, the CPU 81 of the personal computer 21 displays it in the text boxes 543 and 544 of the negotiation screen 521 based on the signal input from the input unit 86.

Then, in step S182, upon receiving a signal indicating that the send button 532 has been clicked from the input unit 86, the CPU 81 of the personal computer 21 sends the information input into the negotiation screen 521 by the seller 1 in step S181 to the content distribution intermediary system 11 via the network 12.

In step S183, the web server 41 receives the information input by the seller 1, and outputs it to the negotiation system management server 45. The negotiation system management server 45 then generates a control signal for registering the information input by the seller 1 in the log management database 65, and outputs the control signal to the database server 61. The database server 61 then registers the input information in the log management database 65 via the firewall 37.

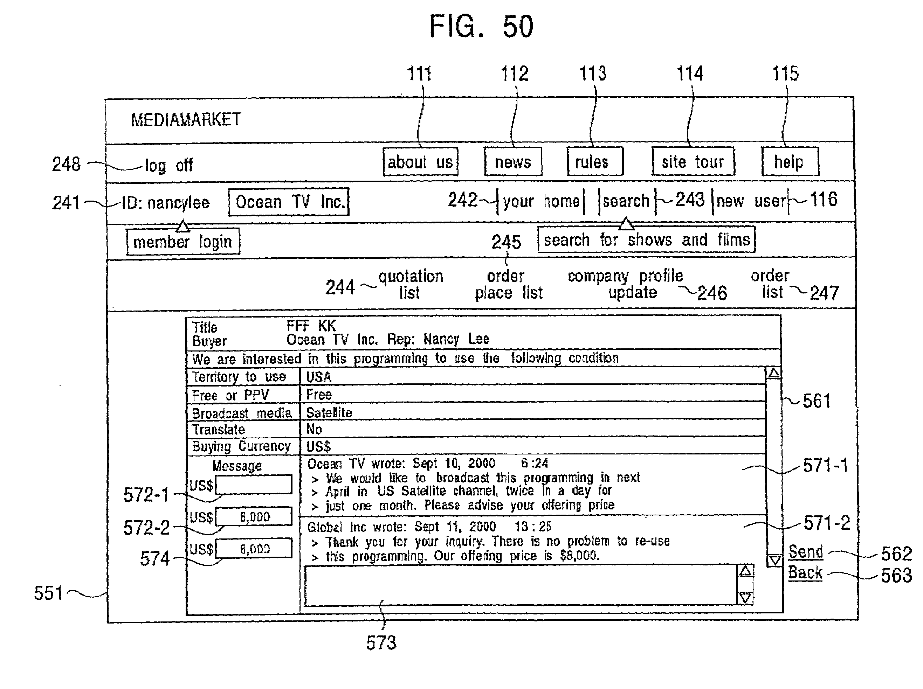

Subsequently, in step S184, by referring to the new negotiation information registered in the log management database 65, the web server 41 updates the data of the seller's room 261, the buyer's room 231, the individual negotiation screens (i.e., negotiation screen 521, and negotiation screen 551 to be checked by the buyer 2, which is discussed below with reference to Fig. 50). That is, the number of negotiations displayed as the status of the content corresponding to the seller's room 261 or the buyer's room 231 stored in the web server 41 is incremented by one, and the information input by the seller 1 is mirrored in the negotiation screens 521 and 551.

In steps S185 through S190, processes similar to those in steps S101 through S106 of Fig. 31 are performed.

In step S191, the CPU 81 of the personal computer 22 of the buyer 2 receives, from the input unit 86 via the input/output interface 85 and the internal bus 84, a signal indicating that the link text corresponding to the status of the content which is currently negotiated in the buyer's room 231 shown in Fig. 44 has been clicked. The CPU 81 then sends the above-mentioned signal to the content distribution intermediary system 11 via the internal bus 84, the input/output interface 85, the network interface 90, the network 12, and the firewall 31.

In step S192, upon receiving the signal indicating the status of the content, the web server 41 sends data corresponding to the negotiation screen of the corresponding content to the personal computer 22 of the buyer 2 via the network 12.

In step S193, the CPU 81 of the personal computer 22 outputs the received data to the display unit 87. The display unit 87 displays the negotiation screen 551 shown in Fig. 50, and the buyer 2 is able to input various types of information. On the negotiation screen 551, there are provided a negotiation information display/input area 561, a send button 562 for registering a message and price information input in the negotiation information display/input area 561 in the content distribution intermediary system 11 (i.e., the send button 562 being for sending the information to the corresponding seller 1), and a back button 563 for returning to the previous screen.

The negotiation information display/input area 561 also includes message display portions 571-1 and 571-2 and price display portions 572-1 and 572-2 in which all the messages and desired prices input by the seller 1 and the buyer 2 in the past negotiations are displayed. A text box 573 for inputting a new message by the buyer 2 and a text box 574 for inputting a desired price by the buyer 2 are also displayed.

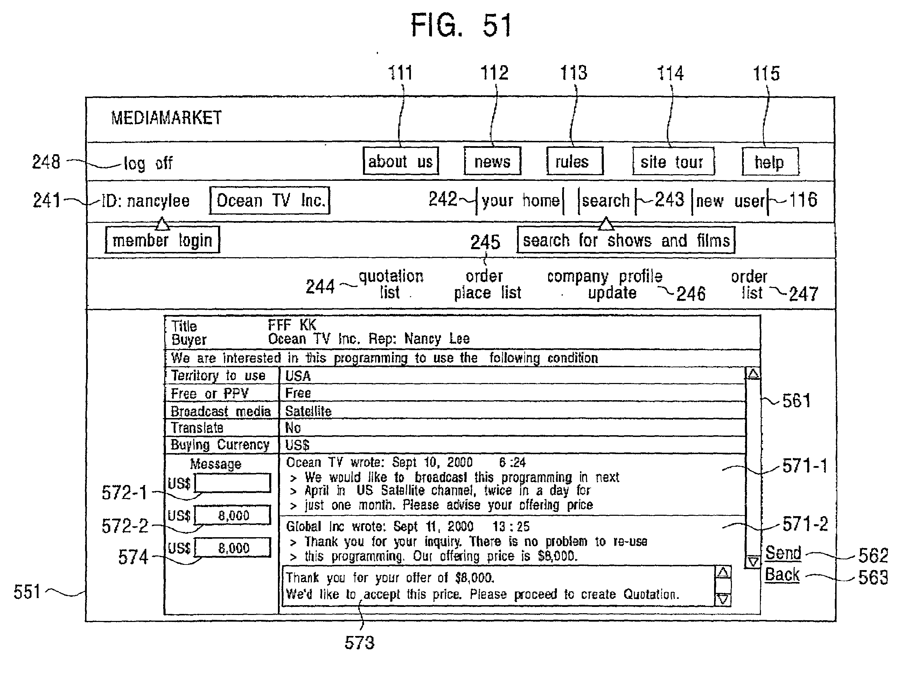

The buyer 2 inputs, as shown in Fig. 51, a new message (in this case, a quotation request message to the seller 1) and a desired price in the text boxes 573 and 574, respectively, of the negotiation screen 551.

In step S194, upon receiving a signal indicating that the send button 562 has been clicked, the CPU 81 of the personal computer 22 sends the information input into the text boxes 573 and 574 by the buyer 2 to the content distribution intermediary system 11 via the network 12.

Then, in step S195, upon receiving the information input by the buyer 2, the web server 41 outputs the information to the negotiation system management server 45. The negotiation system management server 45 then generates a control signal for registering the information input by the buyer 2 in the log management database 65, and outputs the control signal to the database server 61. The database server 61 then registers the input information in the log management database 65.

In step S196, by referring to the new information registered in the log management database 65, the web server 41 updates the data of the seller's room 261, the buyer's room 231, and the negotiation screens 521 and 551. The process then returns to step S171, and the processing in steps S171 and the subsequent steps is repeated (i.e., subsequent negotiation processing is executed). That is, the number of negotiations displayed as the status of the corresponding content stored in the web server 41 is incremented by one, and the information input by the buyer 2 is added to the negotiation screens 521 and 551.

By updating the number of negotiations as discussed above, the seller 1 and the buyer 2 are able to check the number of negotiations without the need to open a subsequent page.

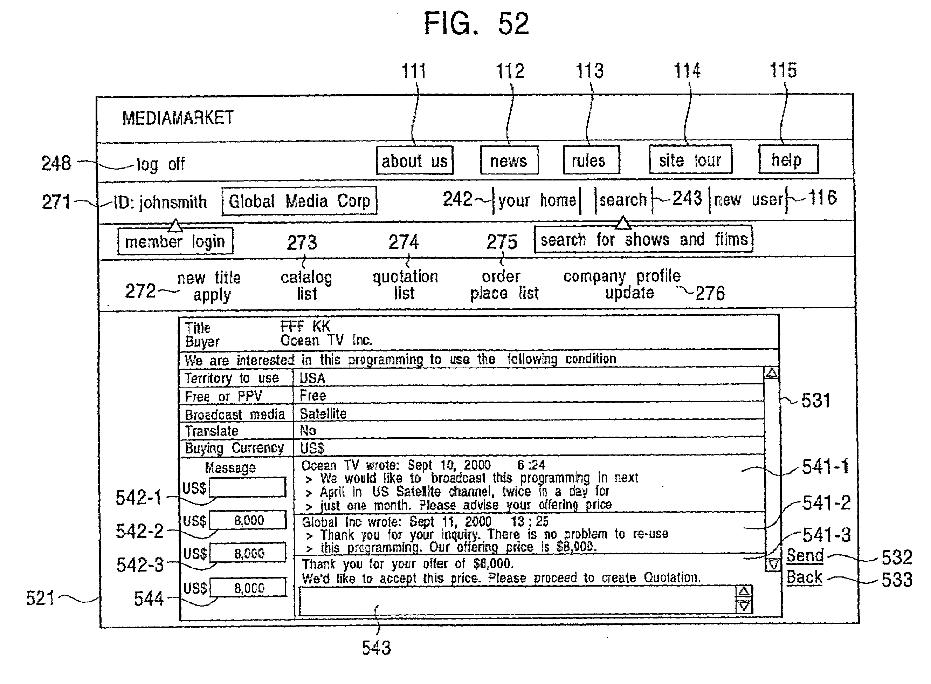

If, in step S193, a quotation request message is input into the text box 573 of the negotiation screen 551 from the buyer 2 to the seller 1, as discussed with reference to Fig. 51, the negotiation screen 521 shown in Fig. 52 is displayed in step S179. That is, by checking the negotiation screen 521 shown in Fig. 52, the seller 1 clicks the quotation make list button 274 in step S180. Thus, the process proceeds to step S93 of Fig. 30.

If, in step S193, a question or a demand is input in the text box 573 of the negotiation screen 551 rather than a quotation request message, it is accordingly displayed on the negotiation screen 521 in step S179. That is, rather than clicking the quotation make list button 274 in step S180 by checking the negotiation screen 521 shown in Fig. 52, the seller 1 inputs a response to the question or the demand from the buyer 1 in the text box 543 in step S181. That is, negotiation processing continues.

According to the processing described with reference to Figs. 46 and 47, the seller 1 and the buyer 2 are able to conduct negotiations for a purchase-and-sale contract concerning, for example, the broadcasting rights of the content. During the negotiations, the data concerning the content to be negotiated is automatically displayed on the negotiation screens 521 and 551. By referring to this data, the seller 1 and the buyer 2 are able to create messages required for negotiations while avoiding lengthy explanations. Additionally, since the history of negotiations is displayed on the negotiation screens 521 and 551, the progress of negotiations can be checked without the need to perform complicated operations, such as displaying the past e-mail or referring to the past messages by changing the display screen.

Quotation forming processing executed in step S93 of Fig. 30 is described below with reference to the flow chart of Fig. 53.

In step S211, upon receiving from the input unit 86 a signal indicating that the quotation make list button 274 has been clicked, the CPU 81 of the personal computer 21 of the seller 1 sends the signal to the content distribution intermediary system 11 via the network 12.

Then, in step S212, by referring to the catalog database 64 and the log management database 65, the web server 41 generates a quotation template indicating information required for forming a quotation, such as the information concerning the corresponding content, the time and the date at which the content was created, the company names of the seller 1 and the buyer 2, the content title, and if required, the price lastly input in the negotiation. The web server 41 then sends the quotation template to the personal computer 21 of the seller 1 via the network 12.

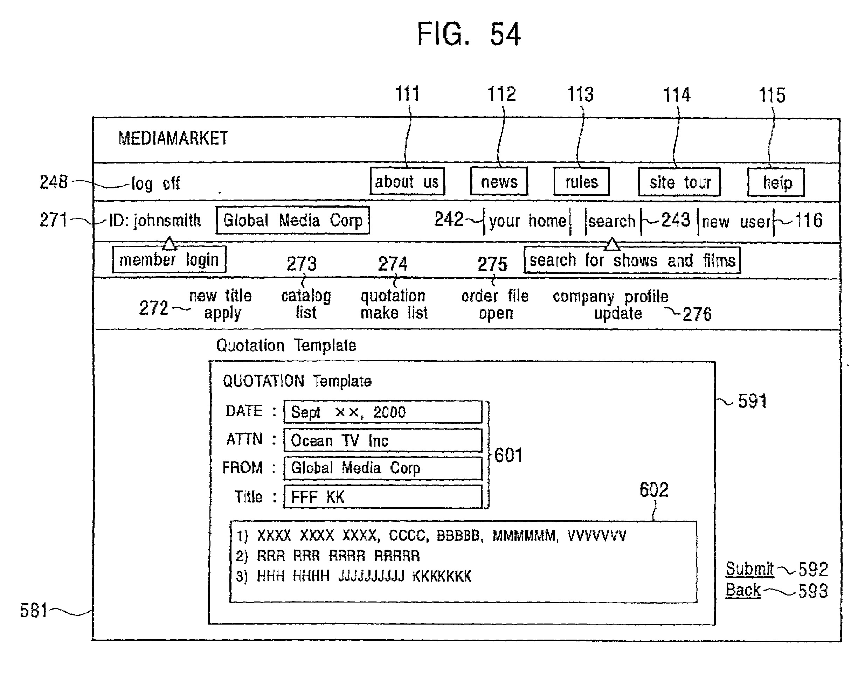

In step S213, the CPU 81 of the personal computer 21 outputs the received data to the display unit 87, and the display unit 87 displays a quotation forming screen 581 shown in Fig. 54. On the quotation forming screen 581, there are provided a quotation template 591 for forming a quotation, a submit button 592 for sending the information input into the quotation template 591 to the content distribution intermediary system 11, and a back button 593 for returning to the previous screen.

In the quotation template 591, the information required for forming a quotation, such as the information concerning the content, the time and the date at which the content was created, the company names of the seller 1 and the buyer 2, the content title, and the price lastly input in the negotiation, is indicated. The quotation template 591 also includes a quotation data display portion 601 which can be updated as required, and a text box 602 for inputting detailed information, such as details of a contract.

In step S214, upon receiving the quotation data input by the seller 1 by using the input unit 86, the CPU 81 of the personal computer 21 displays it in the quotation data display portion 601 and the text box 602. Then, in step S215, upon receiving a signal indicating that the submit button 592 has been clicked, the CPU 81 sends the quotation data input in step S124 to the content distribution intermediary system 11 via the network 12.

In step S216, based on the input quotation data, the web server 41 generates data corresponding to a quotation data confirmation screen, and sends it to the personal computer 21 via the network 12.

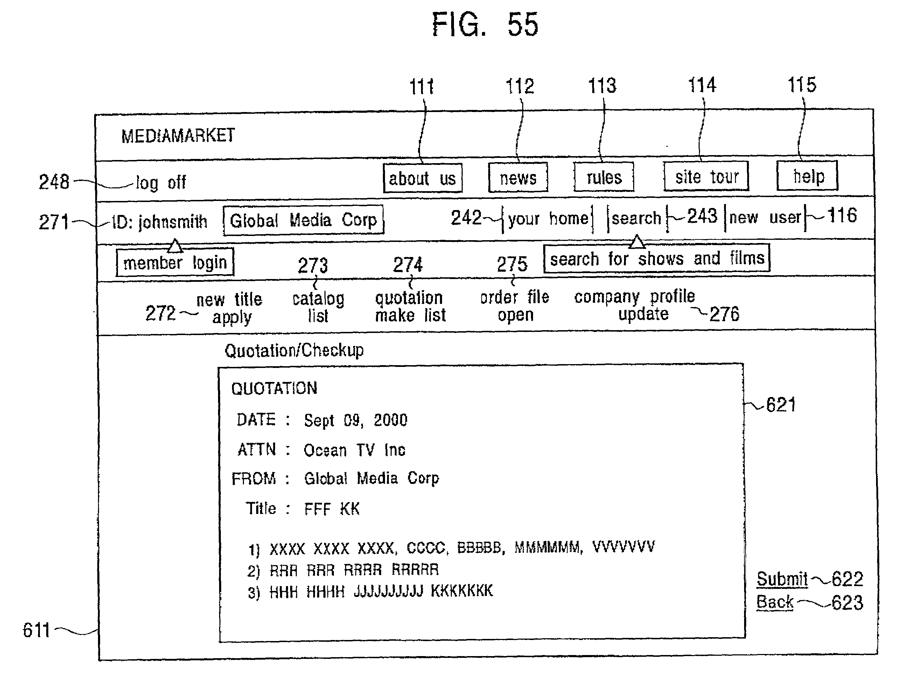

In step S217, the CPU 81 outputs the received data to the display unit 87, and the display unit 87 displays a quotation data confirmation screen 611 shown in Fig. 55, On the quotation data confirmation screen 611, there are provided a quotation display portion 621 for displaying the quotation data input by the seller 1 in step S214, a submit button 622 to be clicked upon confirming the information displayed in the quotation display portion 621, and a back button 623 for returning to the previous screen for correcting the information displayed in the quotation display portion 621.

In step S218, the CPU 81 determines whether the submit button 622 has been clicked. If the outcome of step S218 is no, i.e., if the back button 623 has been clicked, the process returns to step S213, and the processing in step S213 and the subsequent steps is repeated.

If it is found in stop S218 that the submit button 622 has been clicked, tne process proceeds to step S219. In step S219, the CPU 81 sends a signal indicating that the submit button 622 has been clicked to the content distribution intermediary system 11 via the network 12.

Then, in step S220, the web server 41 outputs the received quotation data to the quotation management server 46. The quotation management server 46 then generates a control signal for registering the quotation data in the quotation database 66, and outputs the control signal to the database server 61. The database server 61 then registers the input quotation data in the quotation database 66.

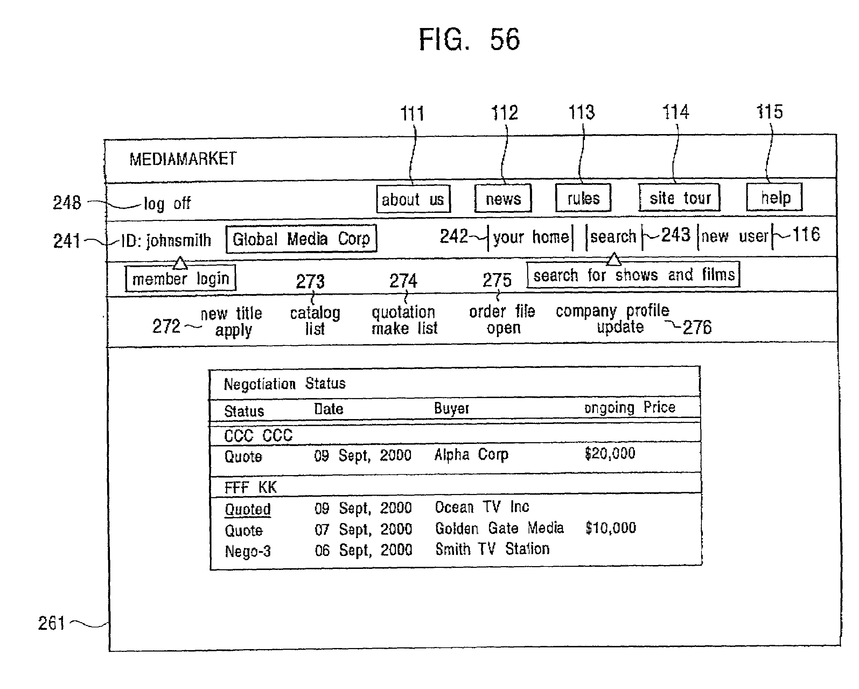

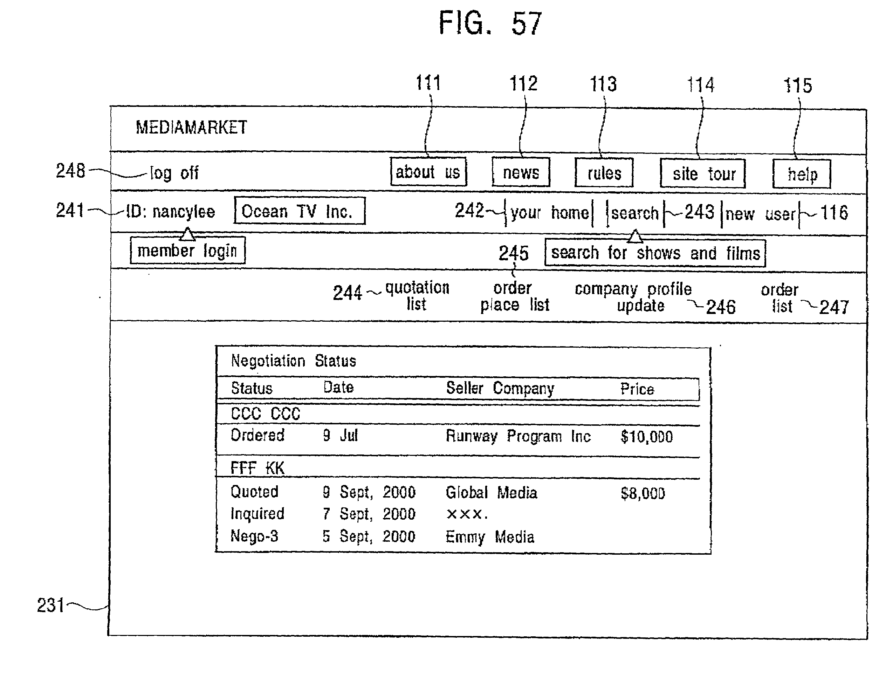

In step S221, the web server 41 refers to the new data registered in the quotation database 66, and updates the data of the seller's room 261, the buyer's room 231, and the corresponding quotation lists. Moxe specifically, as shown in Fig. 56, the corresponding status of the seller's room 261 is changed from "Nego-N (N indicates the number of negotiations)" to "Quoted", and as shown in Fig. 57, the corresponding status of the buyer's room 231 is changed from "Nego-N" to "Quoted".

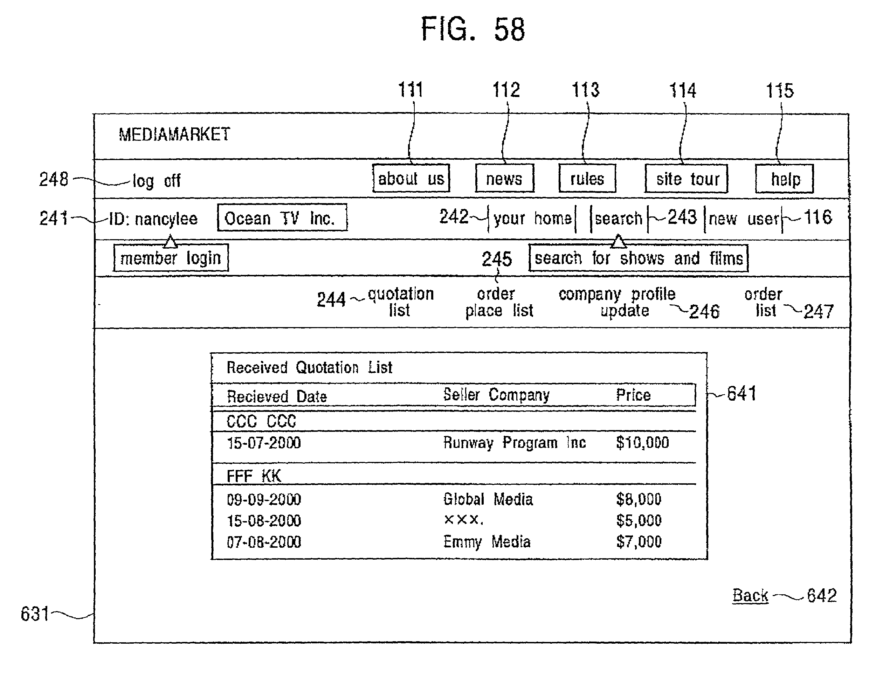

By clicking the quotation list button 244 in the buyer's room 231 shown in Fig. 57, a quotation list display screen 631 shown in Fig. 58 can be displayed. On the quotation list display screen 631, there are provided a quotation list 641 indicating a list of current quotations (content name, company name, and quoted price), and a back button 642 for returning to the previous screen.

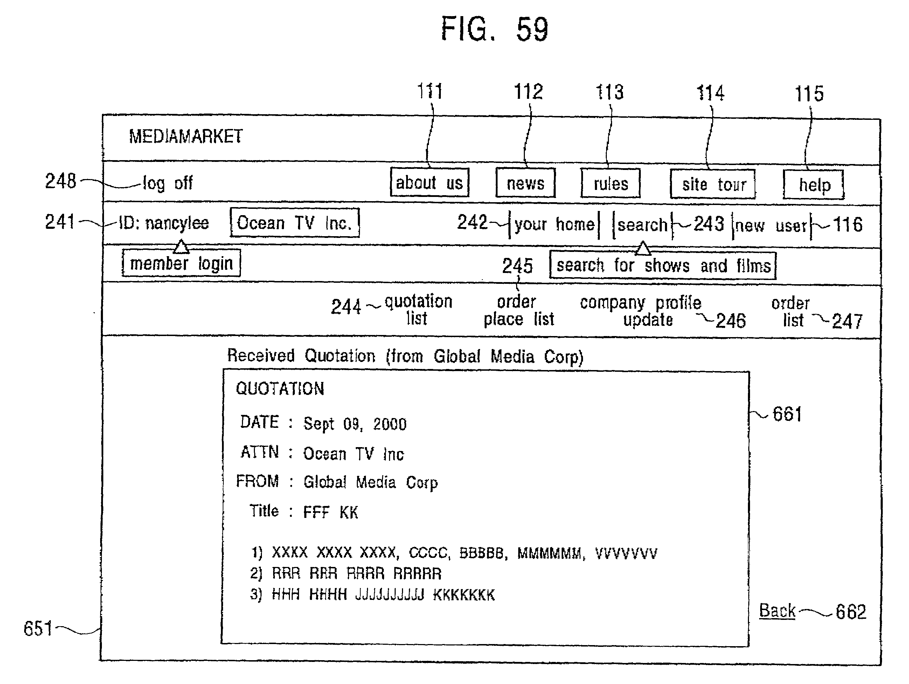

The buyer 2 may click the status "Quoted" of the corresponding content in the buyer's room 231 shown in Fig. 57, or text including the desired company name (for example, the text of "09-09-2000 Global Media $8,000") on the quotation list display screen 631 shown in Fig. 58. Then, a quotation individual-information display screen 651, which indicates details of the quotation of the corresponding content can be displayed as shown in Fig. 59. On the quotation individual-information display screen 651, an individual-information display area 661 indicating quotation individual information, and a back button 662 for returning to the previous screen are provided.

In step S222, the web server 41 sends the updated quotation list of the seller 1 to the personal computer 21 of the seller 1 via the network 12.

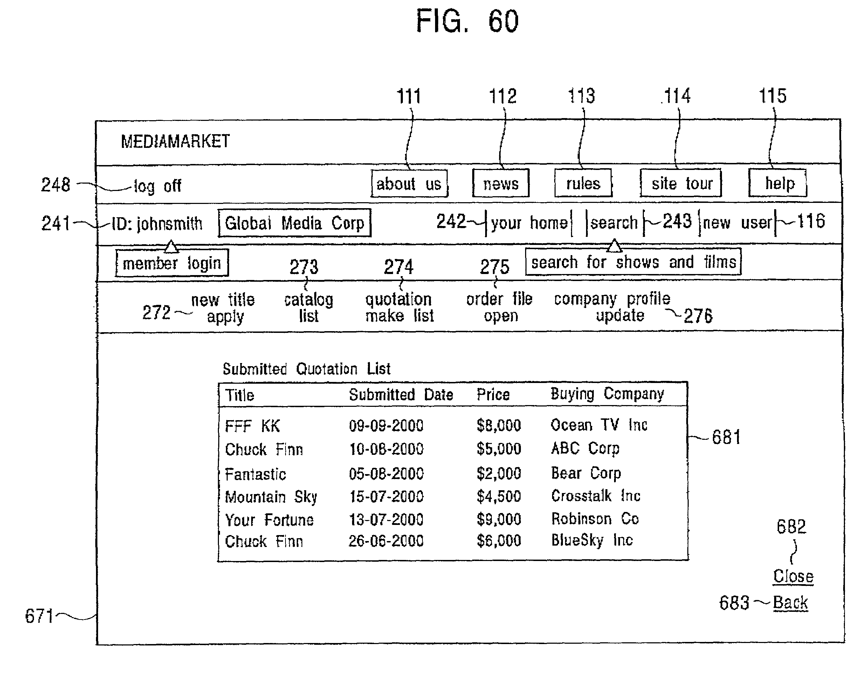

In step S223, the CPU 81 of the personal computer 21 outputs the input data to the display unit 87, and the display unit 87 displays a quotation list display screen 671 shown in Fig. 60. The process then proceeds to step S94 of Fig. 30. On the quotation list display screen 671, there is provided a submitted quotation list 681 indicating the content titles currently submitted by the seller 1, the date at which the quotation was submitted, the quoted prices, and the company names of the buyers 2. A close button 682 and a back button 683 are also provided. When the back button 683 is clicked, the display screen returns to the previous web page. When the close button 682 is clicked, the display screen is changed to the seller's room 261 regardless of the previous display screen.

In the submitted quotation list 681 shown in Fig. 60, if text of a desired content name is clicked by the seller 1, a quotation detail display screen (not shown) indicating details of the registered quotation content is displayed, and the seller 1 is able to check the registered quotation content.

As described above, it is determined in step S94 of Fig. 30 whether the buyer 2 has agreed with the quotation provided by the seller 1, If the outcome of step S94 is no, the process returns to the negotiation processing in step S92, and the corresponding processing is repeated. If it is found in step S94 that the buyer 2 has agreed with the quotation provided by the seller 1, order forming processing is executed in step S95.

A description is now given of the order forming processing performed in step S95 of Fig. 30 with reference to the flow chart of Fig. 61.

In steps S241 through S246, processes similar to those in steps S101 through S106 of Fig. 31 are performed.

In step S247, the CPU 81 of the personal computer 22 of the buyer 2 receives a signal indicating that the order place list button 245 in the buyer's room 231 shown in Fig. 57 has been clicked, and sends the signal to the content distribution intermediary system 11 via the network 12.

In step S248, the web server 41 searches the quotation database 66 for the corresponding quotation information, and generates data corresponding to an order place list input screen, which indicates data required for forming an order, such as information concerning the corresponding content, the time and the date at which the content was created, the company names of the seller 1 and the buyer 2, the content title, and the priced indicated in the quotation. The web server 41 then sends the generated data to the personal computer 22 of the buyer 2 via the network 12.

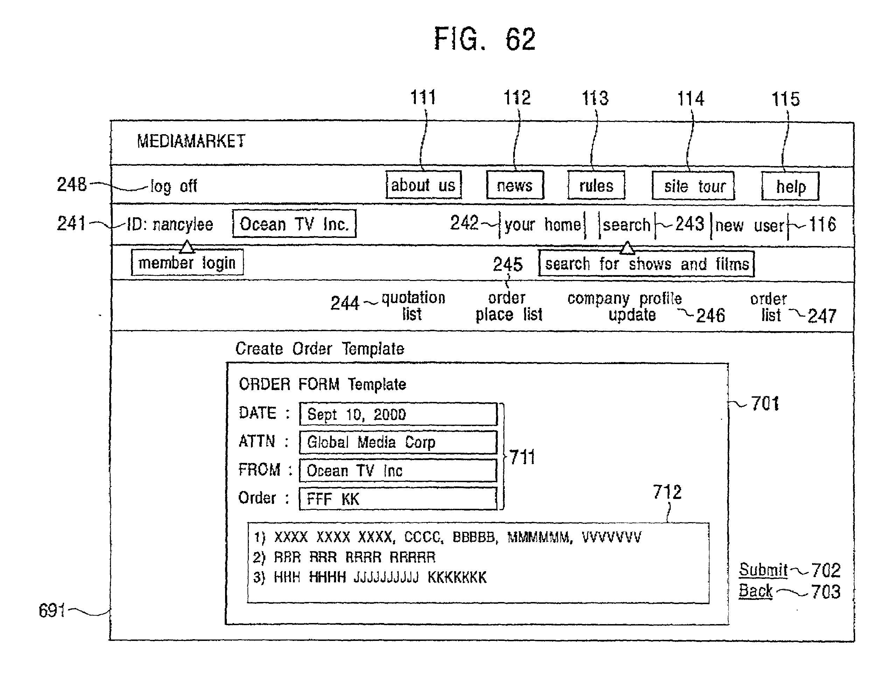

In step S249, the CPU 81 of the personal computer 22 outputs the received data to the display unit 87, and the display unit 87 displays an order place list input screen 691 indicating the above-described data required for forming an order, such as that shown in Fig. 62. The buyer 2 is then able to input order information. On the order place list input screen 691, there is provided an order information input portion 701 in which data required for forming an order has been indicated and can be changed as required. A submit button 702 for sending the information input into the order information input portion 701 to the content distribution intermediary system 11, and a back button 703 for returning to the previous screen are also provided. The buyer 2 inputs order information in text boxes 711 and 712 or changes the given information, and then clicks the submit button 702.

In step S250, upon receiving a signal indicating that the submit button 702 has been clicked, the CPU 81 of the personal computer 22 sends the order information input in step S249 to the content distribution intermediary system 11 via the network 12.

Then, in step S251, based on the received order information, the web server 41 generates data corresponding to an order place list confirmation screen, and sends it to the personal computer 22 of the buyer 2 via the network 12.

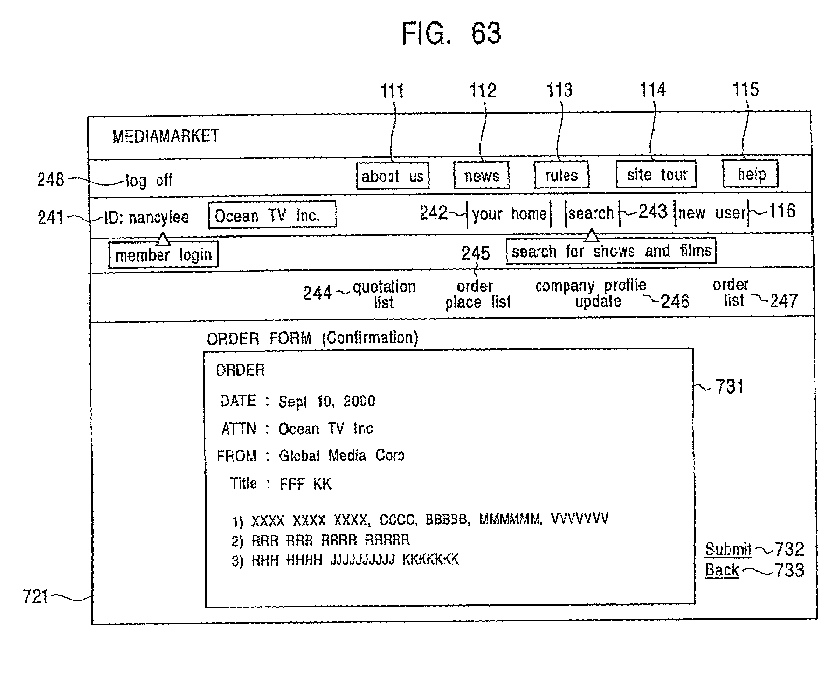

In step S252. the CPU 81 of the personal computer 22 outputs the received data to the display unit 87, and the display unit 87 displays an order place list confirmation screen 721 shown in Fig. 63. On the order place list confirmation screen 721, there are provided an order information display portion 731 indicating the order information input from the buyer 2 in step S249, a submit button 732 to be clicked upon confirming the information indicated in the order information display portion 731, and a baok button 733 to be clicked for correcting the information indicated in the order information display portion 731.

In step S253, the CPU 81 of the personal computer 22 determines based on the signal input from the input unit 86 whether the submit button 732 has been clicked on the order place confirmation screen 721 shown in Fig. 63. If the outcome of step S253 is no, i.e., if it is found that the back button 733 has been clicked, the process returns to step S249, and the processing in steps S249 through S253 is repeated.

If it is found in step S253 that the submit button 253 has been clicked, the process proceeds to step S254. In step S254, the CPU 81 sends a signal indicating that the submit button 732 has been clicked to the content distribution intermediary system 11 via the network 12.

In step S255, the web server 41 outputs the received order information to the order management server 47. The order management server 47 then generates a control signal for registering the order information in the order database 67, and outputs it to the database server 61. The database server 61 then registers the order information in the order database 67.

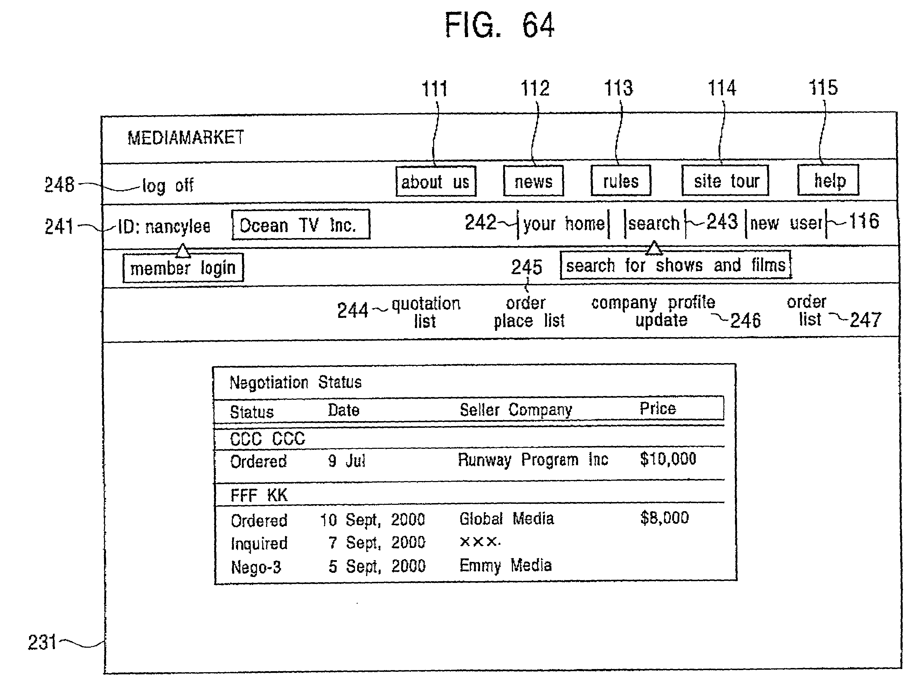

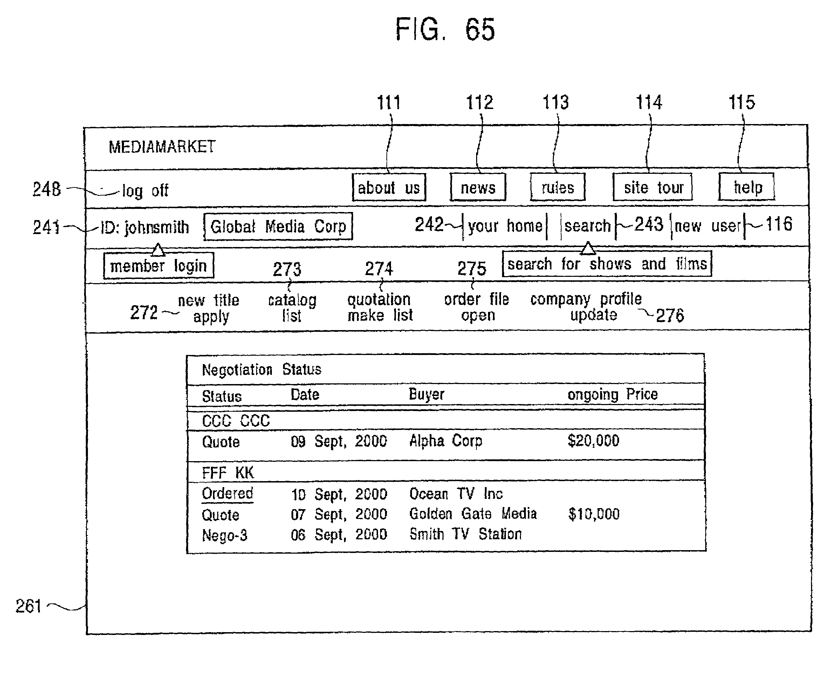

Then, in step S256, based on the order information registered in the order database 67 in step S255, the web server 41 updates the data of the seller's room 261, the buyer's room 231, the order list of the buyer 2, and the order file of the seller 1. That is, the web server 41 changes, as shown in Fig. 64, the status of the corresponding content of the buyer's room 231 to "ordered", and changes, as shown in Fig. 65, the status of the corresponding content of the seller's room 261 to "ordered".

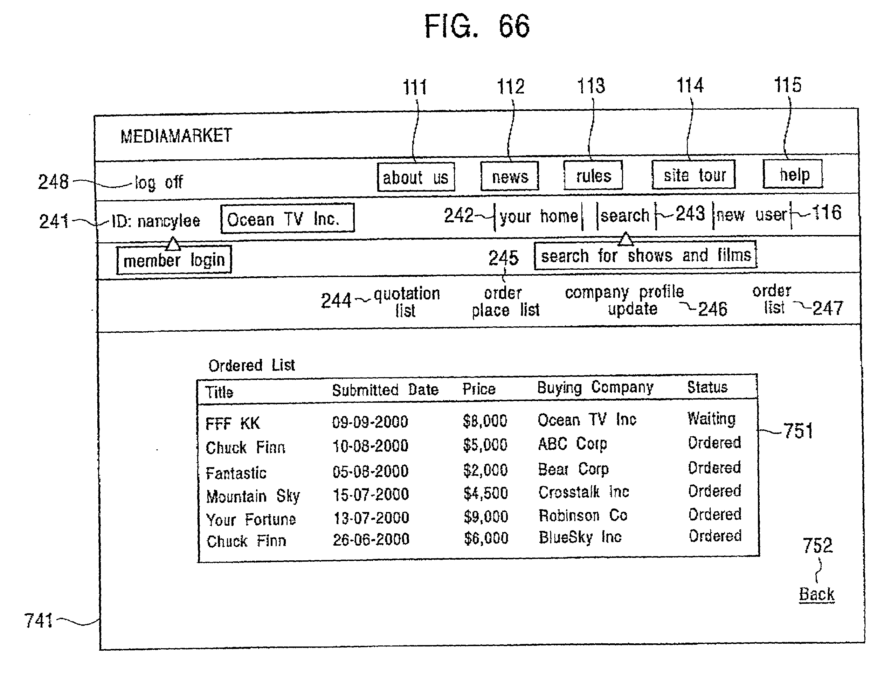

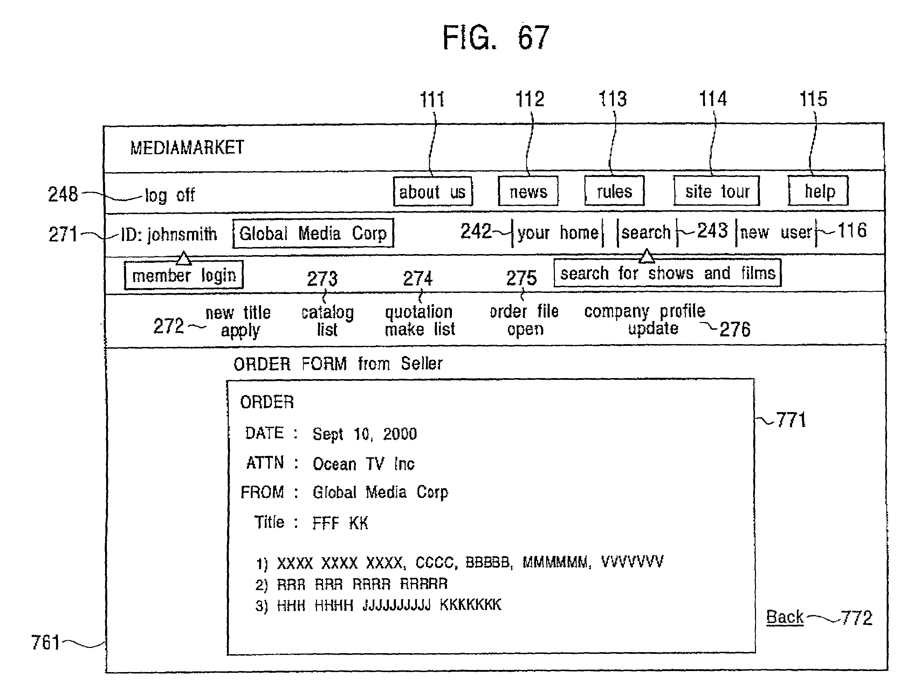

Based on the order information registered in the order database 67, the web server 41 adds the data of the corresponding content to an order list 751 of an order list display screen 741 of the buyer 2, as shown in Fig. 66, and also adds data of the corresponding content to an order file 771 of an order file display screen 761 of the seller 1, as shown in Fig. 67. The order file display screen 761 is displayed when clicking the order file open button 275 provided for each screen for the seller 1.

By clicking a back button 752 of the order list display screen 741, the buyer 2 is able to return to the previous display screen. By clicking a back button 772 of the order file display screen 761, the seller 1 is able to return to the previous screen.

In step S257, the web server 41 sends the order list display screen 741 with the order list 751 updated in step S256 to the personal computer 22 of the buyer 2 via the network 12.

In step S258, the CPU 81 outputs the received data to the display unit 87, and the display unit 87 displays the order list display screen 741 shown in Fig. 66. The process then proceeds to step S96 of Fig. 30.

According to the processing discussed with reference to Fig. 61, the buyer 2 is able to order the content to the seller 1 with a simple operation. Additionally, information concerning the order is registered in the order database 67 of the content distribution intermediary system 11. Thus, the order information can also be used for escrow processing of the subsequent step.

Escrow processing executed in step S96 of Fig. 30 is described below with reference to the flow chart of Figs. 68 through 70.

In step S271, the escrow system management server 49 generates a control signal for indicating a message which requests the payment transfer for the ordered content in the display window 251 shown in Fig. 23, and outputs the control signal to the web server 41. Accordingly, the above-described message is displayed on the personal computer 22. Alternatively, the escrow system management server 49 generates a control signal for sending the above-described message as e-mail, and outputs it to the controller 35. The controller 35 then sends the e-mail message to the personal computer 22 of the buyer 2 via the mail server 34.

The escrow system management server 49 also generates a control signal for registering information that a transfer request was sent in the escrow system database 69, and outputs it to the database server 61 via the firewall 37. The database server 61 then registers the above-mentioned information in the escrow system database 69 together with the time and the date.

In the following escrow processing, the exchange of messages between the content distribution intermediary system 11 and the personal computers 21, 22, and 24 through 27 is performed, for example, via e-mail or using the display window 251 shown in Fig. 23 or the display window 281 shown in Fig. 25. The exchange of messages between the personal computers, 21, 22, and 24 through 27 is performed. for example, via e-mail.

In step S272, the CPU 81 of the personal computer 22 of the buyer 2 receives the message requesting a payment transfer from the content distribution intermediary system 11, and sends via the network 12 a request to the personal computer 26 of the banking institution 16 associated with the buyer 2 to transfer money to the escrow agent 15. Alternatively, instead of directly sending the transfer request from the persona computer 22 to the personal computer 26, the operator may confirm the transfer request message received by the personal computer 22, and request the banking institution 16 offline.

In step S273, the CPU 81 of the personal computer 26 receives the transfer request from the personal computer 22 via the network 12, and transfers money from the account of the buyer 2 to the account of the escrow agent 15.

Then, in step S274, the CPU 81 of the personal computer 25 of the escrow agent 15 confirms that money has been transferred from the banking institution 16. and sends a confirmation message to the content distribution intermediary system 11 via the network 12.

In step S275, upon receiving the message indicating that money has been transferred to the escrow agent 15, the escrow system management server 49 sends the above-described message to the personal computer 22 of the buyer 2 and the personal computer 21 of the seller 1 via the network 12. The escrow system management server 49 also generates a control signal for registering the information that money has been transferred to the escrow agent 15 in the escrow system database 69, and sends it to the database server 61 via the firewall 37. The database server 61 then registers the above-described information in the escrow system database 69 together with the time and date.

In step S276, the CPU 81 of the personal computer 22 of the buyer 2 receives a payment transfer message from the content distribution intermediary system 11 via the network 12.

In step S277, the CPU 81 of the personal computer 21 of the seller 1 also receives a payment transfer message from the content distribution intermediary system 11 via the network 12, and sends a request to deliver the product (i.e., a recording medium, such as tape or a disk, on which the content is recorded) to the personal computer 24 of the physical distribution agent 14 via the network 12.

In step S278, upon receiving the delivery request from the personal computer 21 of the seller 1, the CPU 81 of the personal computer 24 of the physical distribution agent 14 informs the personal computer 21 about a delivery ID, which is the unique number for each delivery, via the network 12.

In step S279, the CPU 81 of the personal computer 21 of the seller 1 receives the delivery ID from the physical distribution agent 14, and delivers it to the content distribution intermediary system 11 via the network 12.

Then, in step S280, the escrow system management server 49 of the content distribution intermediary system 11 receives the delivery ID from the personal computer 21 of the seller 1, and informs the personal computers 21 and 22 about the start of the delivery of the recording medium via the network 12. The escrow system management server 49 also generates a control signal for registering the information indicating the start of the delivery in the escrow system database 69, and sends it to the database server 61 via the firewall 37. The database server 61 then registers the above-described information and the delivery ID together with the time and date.

In step S281, the CPU 81 of the personal computer 22 of the buyer 2 receives a delivery start message from the content distribution intermediary system 11 via the network 12.

In step S282, the CPU 81 of the personal computer 21 of the seller 1 receives a delivery start message from the content distribution intermediary system 11 via the network 12.

Then, in step S283, the CPU 81 of the personal computer 22 of the buyer 2 sends a delivery status confirmation request to the content distribution intermediary system 11 via the network 12.

In step S284, upon receiving the delivery status confirmation request, the escrow system management server 49 sends it to the personal computer 24 of the physical distribution agent 14 via the network 12.

In step S285, the CPU 81 of the personal computer 24 receives the delivery status confirmation request from the content distribution intermediary system 11 via the network 12, and displays it on the display unit 87. The CPU 81 of the personal computer 24 informs the content distribution intermediary system 11 about the delivery status via the network 12 according to, for example, the delivery status information input by the operator of the physical distribution agent 14 by using the input unit 86.

In step S286, upon receiving the delivery status message, the escrow system management server 49 reports it to the personal computer 22 of the buyer 2, and also generates a control signal for registering the delivery status in the escrow system database 69 together with the time and date, and sends it to the database server 61 via the firewall 37. The database server 61 then registers the delivery status in the escrow database 69 together with the time and date.

In step S287, the CPU 81 of the personal computer 22 of the buyer 2 receives the delivery status message from the content distribution intermediary system 11 via the network 12.

Then, in step S288, the CPU 81 of the personal computer 21 of the seller 1 sends a delivery status confirmation request to the content distribution intermediary system 11 via the network 12.

In step S289, the escrow system management server 49 of the content distribution intermediary system 11 receives the delivery status confirmation request, and transfers it to the personal computer 24 of the physical distribution agent 14 via the network 12.

In step S290, the CPU 81 of the personal computer 24 receives the delivery status confirmation request, and displays it on the display unit 87, Then, the CPU 81 of the personal computer 24 reports the delivery status to the content distribution intermediary system 11 via the network according to the information of the delivery status input by the operator of the physical distribution agent 14 by using the input unit 86.

In step S291, upon receiving the delivery status message, the escrow system management server 49 of the content distribution intermediary system 11 reports it to the personal computer 21 of the seller 1. The escrow system management server 49 also generates a control signal for registering the delivery status in the escrow system database 69 together with the time and date, and outputs it to the database server 61 via the firewall 37. The database server 61 then registers the delivery status in the escrow system database 69 together with the time and date.

In step S292, the CPU 81 of the personal computer 21 of the seller 1 receives the delivery status message from the content distribution intermediary system 11 via the network 12.

The operator of the buyer 2 checks the product (i.e., the recording medium on which the corresponding content is recorded) delivered from the physical distribution agent 14, and then inputs the information indicating that the product has been checked into the personal computer 22 by using the input unit 86. Then, in step S293, the CPU 81 of the personal computer 22 of the buyer 2 sends a message indicating that the product has been checked to the content distribution intermediary system 11 via the network 12.

In step S294, upon receiving the above-described message, the escrow system management server 294 sends the same message to the personal computer 21 of the seller 1 via the network 12. The escrow system management server 294 also generates a control signal for registering the information that the product has been checked in the escrow system database 69, and outputs it to the database server 61 via the firewall 37. The database server 61 then registers the above-described information in the escrow system database 69 together with the time and date.

In step S295, the CPU 81 of the personal computer 21 of the seller 1 receives a report indicating that the product has been checked from the content distribution intermediary system 11 via the network 12.

Subsequently, in step S296, the escrow system management server 49 of the content distribution intermediary system 11 sends a request for transferring money for the content to the personal computer 25 of the escrow agent 15. The escrow system management server 49 also generates a control signal for registering the information that the transfer request has been sent in the escrow system database 69, and outputs it to the database server 61 via the firewall 37. The database server 61 then registers the above-described information in the escrow system database 69 together with the time and date.

In step S297, the CPU 81 of the personal computer 25 of the escrow agent 15 receives the transfer request from the content distribution intermediary system 11 via the network 12, and transfers the money to the account of the seller 1 of the banking institution 17 associated with the seller 1.

In step S298, the CPU 81 of the personal computer 27 of the banking institution 17 confirms that the money has been transferred from the escrow agent 15. The CPU 81 of the personal computer 27 may also send a transfer completion message to the content distribution intermediary system 11 via the network 12.

In step S299, the CPU 81 of the personal computer 25 of the escrow agent 15 informs the content distribution intermediary system 11 about the completion of the money transfer via the network 12.

In step S300, upon receiving the transfer completion message from the personal computer 25 of the escrow agent 15 via the network 12, the escrow system management server 49 sends the transfer completion message to the personal computer 21 of the seller 1 and the personal computer 22 of the buyer 2. The escrow system management server 49 also generates a control signal for registering the information indicating that the money has been transferred in the escrow system database 69, and outputs it to the database server 61 via the firewall 37. The database server 61 then registers the above-mentioned information together with the time and date.

In step S301, the CPU 81 of the personal computer 22 of the buyer 2 receives the transfer completion message from the content distribution intermediary system 11 via the network 12.

In step S302, the CPU 81 of the personal computer 21 of the seller 1 receives the transfer completion message from the content distribution intermediary system 11 via the network 12. The processing is then completed.

According to the processing described with reference to Figs. 68 through 70, the content distribution intermediary system 11 manages the escrow processing performed between the seller 1 and the buyer 2. It is thus possible to prevent accidents, for example, the buyer 2 fails to receive the product even if he/she has paid for it, or the seller 1 fails to receive money even if he/she has sent the product. Additionally, the history of the escrow processing is registered in the escrow system database 69. Thus. any accident occurring while the product is being delivered or the payment is being made can appropriately be handled by referring to the history.

In the foregoing embodiment, the company which manages the content distribution intermediary system 11 is different from the escrow agent 15 or the physical distribution agent 14. However, part of or the whole functions of one of or both the escrow agent 15 and the physical distribution agent 14 may be managed by the company which manages the content distribution intermediary system 11.

In this case, the controller 35 of the content distribution intermediary system 11 shown in Fig. 3 may take charge of part of the processing performed by the personal computer 24 of the physical distribution agent 14 or the personal computer 25 of the escrow agent 15. For example, the controller 35 may perform the processing for temporarily storing the money transferred from the banking institution 16, which is originally performed by the personal computer 25. Alternatively, the controller 35 may perform the whole processing executed by the personal computers 24 and 25. Alternatively, an extra personal computer may be provided for the content distribution intermediary system 11 to perform part of or the whole processing executed by the personal computers 24 and 25.

According to the foregoing embodiment, there is provided a system for offering intermediary services for purchase-and-sale contracts between the seller 1 and the buyer 2 concerning at least part of the broadcasting rights, the licensing rights, or the copyright of the content, or all the rights concerning the contents including the content data. However, the present invention may be applicable to the following systems. That is, the present invention may be used in a system which takes charge of the sales of at least part of the broadcasting rights, the licensing rights, and the copyright of the content, or all the rights concerning the content including the content data, and which sells the content to the buyer 2. The present invention may also be used in a system which buys at least part of the broadcasting rights, the licensing rights, and the copyright of the content, or all the rights concerning the content including the content data from the seller 1, and which sells the content to the buyer 2.

A series of the above-described processing may be executed by software. In this case, the software program may be integrated into special hardware of a computer. Alternatively, the software may be installed from a recording medium into a general-purpose computer, which executes various functions by installing various programs.

Such a recording medium may be formed of a package medium, as shown in Fig. 3, such as the magnetic disk 71 (including a floppy disk), the optical disc 72 (including a CD-ROM or a DVD), the magneto-optical disk 73 (including a Mini-Disk (MD)), or the semiconductor memory 74, which is distributed to the user separately from the computer.

It is not essential that the steps forming the program recorded on a recording medium be executed chronologically according to the order discussed in this specification. Alternatively, they may be executed concurrently or individually.

The term, "system", used in this specification represents the overall apparatus formed of a plurality of devices.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing system comprising:
first input means for receiving via a network first information concerning program content from a first information processing apparatus possessed by a seller of the program content;
first recording means for recording the first information received by said first input means;
output means for outputting via said network the first information recorded by said first recording means to a second information processing apparatus possessed by a buyer of the program content;
second input means for receiving via said network second information concerning the purchase of rights of predetermined program content from said second information processing apparatus; and
assisting means for assisting the seller and the buyer of the program content to settle a purchase-and-sale contract concerning the rights of the predetermined program content based on the second information received by said second input means.

2. An information processing system according to claim 1, wherein said assisting means assists the formation of data corresponding to a document concerning the purchase-and-sale contract for the rights of the predetermined program content between the seller and the buyer of the program content, and stores said data.

3. An information processing system according to claim 1, further comprising:
third input means for receiving via said network third information concerning a condition of the program content desired by the buyer from said second information processing apparatus; and
search means for searching for the first information recorded by said first recording means which matches the third information,
wherein said output means outputs the first information searched by said search means to said second information processing apparatus.

4. An information processing system according to claim 1, further comprising:
third input means for receiving via said network third information concerning the seller of the program content from said first information processing apparatus;
fourth input means for receiving via said network fourth information concerning the buyer of the program content from said second information processing apparatus; and
second recording means for recording the third information received by said third input means and the fourth information received by said fourth input means.

5. An information processing system according to claim 1, wherein the rights of the program content to be sold and purchased between the seller and the buyer of the program content comprise at least part of broadcasting rights, licensing rights, and copyright, or all the rights concerning the program content.

6. An information processing method comprising:
a first input step of receiving via a network first information concerning program content from a first information processing apparatus possessed by a seller of the program content;
a recording step of recording the first information received in said first input step;
an output step of outputting via said network the first information recorded in said recording step to a second information processing apparatus possessed by a buyer of the program content;
a second input step of receiving via said network second information concerning the purchase of rights of predetermined program content from said second information processing apparatus; and
an assisting step of assisting the seller and the buyer of the program content to settle a purchase-and-sale contract concerning the rights of the predetermined program content based on the second information received in said second input step.

7. A transaction assisting method for assisting a transaction of content, comprising:
a receiving step of receiving content information concerning the content to be sold by a seller, and right information concerning rights of the content; and
an assisting step of assisting the transaction of the content generated between the seller and the buyer by attaching the right indicated by the right information to the content indicated by the content information so as to sell the content and the right to the seller.

8. A transaction assisting method according to claim 7, wherein the right information concerning the right of the content comprises any one of broadcasting rights, licensing rights, and copyright of the content.

9. An information processing method for use in an information processing system which is connected to via a network at least one first information processing apparatus possessed by a seller of program content and to at least one second information processing apparatus possessed by a buyer of the program content, said information processing method comprising:
an input step of receiving first information concerning the program content from said first information processing apparatus;
a registration step of registering the first information received by said first input step;
a second input step of receiving second information which specifies predetermined program content selected from the program content registered in said registration step and specifies the seller of the program content from said second information processing apparatus;
a first generation step of generating a first web page which is viewable by said second information processing apparatus outputting the second information, and which displays a message input from said first information processing apparatus of the seller designated by the second information, and which receives a message to be sent to the seller;
a second generation step of generating a second web page which is viewable by said first information processing apparatus of the seller designated by the second information, and which displays a message input from said second information processing apparatus outputting the second information, and which receives a message to be sent to the buyer;
a control step of controlling the posting of the first web page generated in said first generation step and the second web page generated in said second generation step on said network; and
an acquiring step of acquiring the messages input into the first web page or the second web page.

10. A transaction assisting method for assisting a transaction of content, comprising:
a first acquiring step of acquiring a request from a seller's site concerning the content possessed by a seller;
a second acquiring step of acquiring a request from a buyer's site concerning the content to be purchased by a buyer;
a transaction generation step of matching the request from the buyer acquired in said second acquiring step with the request from the seller acquired in said first acquiring step, and of generating the transaction of the matched content; and
a provision step of providing the seller and the buyer with a web site used for negotiating about a transaction condition of the matched content.

11. A transaction assisting method for assisting a transaction of content, comprising:
a registration step of registering the content possessed by a seller in a server;
a selection step of selecting the content to be purchased by a buyer from the content registered in said server in said registration step; and
a provision step of providing the seller and the buyer with a web site used for negotiating about a transaction condition of the content selected in said selection step.

12. A service providing method for providing services concerning a transaction of content, comprising:
a registration step of registering the content to be sold by a seller in a server in response to a request from a seller's site;
a selection step of selecting the content to be purchased by a buyer from the content registered in said server in response to a request from a buyer's site; and
a provision step of providing the seller and the buyer with a web site used for negotiating about a transaction condition of the content selected in said selection step.

13. An information processing method for use in an information processing system which is connected to via a network at least one first information processing apparatus possessed by a seller of program content and to at least one second information processing apparatus possessed by a buyer of the program content, said information processing method comprising:
a first generation step of generating a plurality of first web pages which are viewable by said second information processing apparatus, and which displays information concerning purchase and sale of the program content, and which receives first information to be sent to a predetermined seller;
a second generation step of generating a plurality of second web pages which are viewable by said first information processing apparatus, and which displays information concerning the purchase and sale of the program content, and which receives second information to be sent to a predetermined buyer;
a control step of controlling the posting of the plurality of first web pages generated in said first generation step and the plurality of second web pages generated in said second generation step on said network;
a first acquiring step of acquiring the first information input into the plurality of first web pages;
a second acquiring step of acquiring the second information input into the plurality of second web pages;
a third generation step of generating, based on the first information acquired in said first acquiring step. a third web page which is viewable by said first information processing apparatus of the predetermined seller, and which displays the buyer who has input the first information and a list of names of the program content corresponding to the first information; and
a fourth generation step of generating, based on the second information acquired in said second acquiring step, a fourth web page which is viewable by said second information processing apparatus of the predetermined buyer, and which displays the seller who has input the second information and a list of names of the program content corresponding to the second information.

14. An information processing method for use in an information processing system which is connected to via a network at least one first information processing apparatus possessed by a seller of program content and to at least one second information processing apparatus possessed by a buyer of the program content, said information processing method comprising:
an input/output control step of controlling an input and an output of information from and to said first information processing apparatus and said second information processing apparatus via said network;
a registration step of registering first information concerning the program content to be sold by the seller based on the information obtained by controlling the input from said first information processing apparatus in said input/output control step;
an inquiry provision step of providing an inquiry about the program content obtained by controlling the input from said second information processing apparatus in said input/output control step to said first information processing apparatus of the corresponding seller;
a negotiation assisting step of assisting negotiations for a purchase-and-sale contract of the program content based on the information obtained by controlling the input from said first information processing apparatus and said second information processing apparatus in said input/output controls step, and based on the first information registered in said registration step;
a quotation formation assisting step of assisting the formation of a quotation of the program content based on the information obtained by controlling the input from said first information processing apparatus in said input/output control step, and based on the first information registered in said registration step; and
a purchase-order formation assisting step of assisting the formation of a purchase order of the program content based on the information obtained by controlling the input from said second information processing apparatus in said input/output control step, and based on the quotation formed by the assistance in said quotation formation assisting step.

15. An information processing method according to claim 14, further comprising:
a first recording control step of controlling the recording of the inquiry about the program content provided in said inquiry provision step;
a second recording control step of controlling the recording of information about the negotiations for the purchase-and-sale contract conducted by the assistance in said negotiation assisting step;
a third recording control step of controlling the recording of the quotation formed by the assistance in said quotation formation assisting step; and
a fourth recording control step of controlling the recording of the purchase order formed by the assistance in said purchase-order formation assisting step.
